Europäisches Patentamt

European Patent Office

Office européen des brevets

(19)

(11) **EP 1 560 282 A1**

(12) **EUROPEAN PATENT APPLICATION**
published in accordance with Art. 158(3) EPC

(43) Date of publication:
**03.08.2005 Bulletin 2005/31**

(21) Application number: **03809856.2**

(22) Date of filing: **27.10.2003**

(51) Int Cl.[7]: **H01M 4/62**, H01M 4/02

(86) International application number:
**PCT/JP2003/013722**

(87) International publication number:
**WO 2004/040678 (13.05.2004 Gazette 2004/20)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **31.10.2002 JP 2002317855**
**08.05.2003 JP 2003130405**

(71) Applicant: **Mitsubishi Chemical Corporation Tokyo 108-0014 (JP)**

(72) Inventor: **SOGA, Iwao,**
**c/o Mitsubishi Chemical Group Inc.**
**Yokohama-shi, Kanagawa 227-0033 (JP)**

(74) Representative: **VOSSIUS & PARTNER**
**Siebertstrasse 4**
**81675 München (DE)**

(54) **ADDITIVE TO POSITIVE ELECTRODE MATERIAL FOR LITHIUM SECONDARY BATTERY, POSITIVE ELECTRODE MATERIAL FOR LITHIUM SECONDARY BATTERY AND, PREPARED FROM THE POSITIVE ELECTRODE MATERIAL, POSITIVE ELECTRODE AND LITHIUM SECONDARY BATTERY**

(57) An object of the invention is to obtain such a lithium secondary battery that has high safety and is small in increase of the resistance in a full charged state.

Means for solution of the invention relates to a positive electrode material for a lithium secondary battery containing a positive electrode active substance and a fullerene compound, **characterized in that** the fullerene compound is present on a surface of the positive electrode active substance; improvement of a lithium secondary battery in safety by making a fullerene compound present on a surface of a positive electrode active substance to suppress electrolysis of an electrolyte solution on a surface of a positive electrode particularly upon float charging; and suppression of increase of the resistance upon storing in a full charged state by making a fullerene compound present on a surface of a positive electrode active substance.

Fig. 1

Protective circuit or control circuit

Electric power source

Backup electric power source (Lithium secondary battery)

Electric equipment main body (Personal computer main body)

EP 1 560 282 A1

**Description**

FIELD OF THE INVENTION

The present invention relates to an additive for a prescribed positive electrode material for a lithium secondary battery.

The invention relates to a positive electrode material for a lithium secondary battery containing a positive electrode active substance having on a surface thereof a fullerene compound present, a positive electrode material for a lithium secondary battery containing a positive electrode active substance having a fullerene compound with spherical shell structures thereof crosslinked with each other through at least one atom, and a positive electrode material for a lithium secondary battery containing a positive electrode active substance having present on a surface thereof a fullerene compound with a spherical shell structure thereof chemically bonded to the positive electrode active substance through at least one atom. The present invention also relates to a positive electrode material for a lithium secondary battery containing a positive electrode active substance having present on a surface thereof a fullerene compound with an elution amount of the fullerene compound determined by a prescribed test method being within a prescribed amount.

The present invention further relates to a positive electrode and a lithium secondary battery using the positive electrode material for a lithium secondary battery.

The invention still further relates to a process for producing the positive electrode material for a lithium secondary battery.

BACKGROUND ART

After establishing the mass production process of $C_{60}$ in 1990, studies on fullerene have been extensively made, and various kinds of derivatives of fullerene have been synthesized and studied for possibilities of practical applicability thereof.

One of the fields among the practical applications of fullerene is a battery. Examples of the battery include a lithium secondary battery (hereinafter, the lithium secondary battery is sometimes referred to as a battery or a secondary battery).

As a literature disclosing the use of fullerene in a lithium secondary battery, a lithium secondary battery is constituted by a $Li^+$ intercalation positive electrode, a negative electrode formed from metallic lithium or an alloy thereof, and an electrolyte, and fullerene is mixed in the $Li^+$ injection material for the positive electrode (JP-A-5-275083). This literature noted that the Li+ injection material is imparted with electroconductivity, and fullerene capable of being injected with Li+ is mixed, whereby a lithium secondary battery having a high electromotive force and a high energy density.

There is such a literature that discloses the use of fullerene powder as an electroconductive agent for a positive electrode and/or a negative electrode (JP-A-5-325974). This literature noted that the IR drop of the battery could be reduced owing to the high electroconductivity of fullerene.

It is found according to investigation made by the inventors on these literature that the volume resistance of fullerene is considerably high as compared to acetylene black, which is generally used as an electroconductive agent in a lithium secondary battery, and the use of fullerene as an electroconductive agent for electrode is not effective. That is, the electroresistivity of C60 is from $10^8$ to $10^{14}$ $\Omega\cdot$cm (examples of literatures disclosing the electroresistivity of $C_{60}$ include H. Shinohara and Y. Saito, "Chemistry and Physics of Fullerene", published by The University of Nagoya Press on January 15, 1997, first impression of first edition, pp. 122), whereas with respect to the electroresistivity of acetylene black, the electroresistivity of acetylene black produced by Denki Kagaku Kogyo K.K. (trade name: Denka Black), for example, is about from 0.14 to 0.25 $\Omega\cdot$cm (examples of literatures disclosing the electroresistivity of Denka Black include the homepage of Denki Kagaku Kogyo K.K. searched on October 17, 2002, URL: http://www.denka.co.jp/product/main/yuki/black/3.htm ). It is understood from these values of electroresistivity that fullerene is far higher in electroresistivity than acetylene black, which is generally used as an electroconductive agent of electrodes.

The fact that fullerene does not effectively function as an electroconductive agent of a positive electrode and a negative electrode of a lithium secondary battery can be confirmed from the battery of Comparative Example 2 of the aforementioned Patent Document 1 (3 mg of $C_{60}$ is added), which fails to attain conduction.

DISCLOSURE OF THE INVENTION

A lithium secondary battery is being widely used in small size electric equipments and portable electric equipments owing to the high energy density thereof, but it has such a problem that safety and stability in the charged state are difficult to be ensured. The problems in safety specifically include the following three points.

The first point is that in the case where a lithium secondary battery is allowed to stand in a nearly full charged state, the positive electrode active substance in an oxidized state becomes instable. As a result, the electrolyte solution is liable to be decomposed in the case where the full charged state is continuously maintained. As the case where the full charged state is continuously maintained, such a case is considered that a lithium secondary battery used as a backup power source of an electric equipment is subjected to float charging.

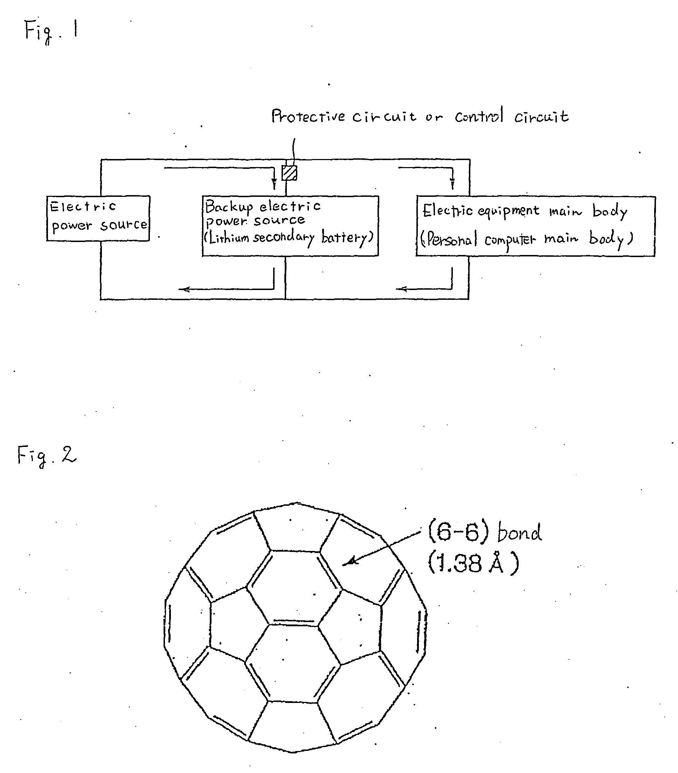

A backup electric power source functions as an alternative electric power source in the case where an electric power source fails to feed electric power to an electric equipment, and therefore, it is connected to the electric equipment in parallel to the power source, as shown in Fig. 1. The lithium secondary battery is charged simultaneously with feeding electric power to the electric equipment main body from the electric power source, and in the case where the electric power source is shut down, the battery is discharged to feed electric power to the electric equipment.

In the case where electric power is fed from the electric power source, since it is designed in such a manner that the battery voltage is equivalent to the load voltage of the electric equipment, the electric current flowing in the battery is ideally stopped to complete charging. In a practical case, however, the voltage of the battery is gradually lowered due to self-discharge occurring inside the battery, and charging with a minute electric current is continued to compensate the self-discharge, whereby the battery is continuously or intermittently charged to maintain the battery in the full charged state (the charging system is referred to as float charging).

In the ordinary charging system, a lithium secondary battery is charged with a constant current value (constant current charging), and after reaching aprescribedvoltage, the battery is continuously charged with the voltage maintained and an electric current gradually decreased (constant voltage charging). In the stage where the current value is lowered to a prescribed value, the charging is completed. In the case where a lithium secondary battery is used as a backup electric power source, however, the lithium secondary battery is constantly subjected to the float charging, and thus, the constant voltage charging is maintained even when the current value is lowered to the prescribed value. In this state, no change occurs in the system of the lithium secondary battery having a rocking chair type structure, because lithium ions, which should migrate from a positive electrode to a negative electrode at a prescribed voltage (the set voltage for constant voltage charging), have completely migrated to make the current value be zero. In a practical case, however, the lithium secondary battery is in a considerably instable state, and gas is generated by deterioration of the surface of the active substance due to electrolysis of impurities in the battery, decomposition of the active substance on the surfaces of the positive electrode and the negative electrode, and electrolysis of the electrolyte. The generation of gas increases the internal pressure of the lithium secondary battery.

A lithium secondary battery has such a structure that battery elements including a positive electrode, a negative electrode and an electrolyte solution are housed in a housing material, such as a metallic can and a laminated film. In a lithium secondary battery using a metallic can, the increase in internal pressure of the battery operates a safety valve to cause not only contamination of the electric equipment due to an organic gas discharged inside the electric equipment, but also harmful influences on human bodies due to the organic gas discharged outside the electric equipment. Furthermore, there are cases where the battery fails to function as an electric power source due to consumption of the electrolyte solution by discharging the organic gas. In a lithium secondary battery using a housing material, such as a laminated film, the increase in internal pressure of the lithium secondary battery balloons and deforms the housing material to cause leakage, and there are cases where the electrolyte solution inside is leaked. The leakage of the electrolyte solution not only contaminates the electric equipment, but also exerts harmful influences on human bodies upon leaking the electrolyte solution outside the electric equipment.

Therefore, unless such a special protective circuit (control circuit) is provided that detaches the battery from the electric power source upon reaching the full charged state and connects the battery to the electric power source only in the case of emergency and the case where the voltage drop reduction is increased by self-discharge, the lithium secondary battery is continuously subj ected to float charging for a long period of time to attain the prescribed charging voltage as long as electric power is fed to the electric equipment from the electric power source, and thus the lithium secondary battery is continuously in the instable state.

As having been described, there are cases in a lithium secondary battery subjected to float charging that the safety of the lithium secondary battery cannot be ensured due to the float charging continuously carried out for a long period of time. Therefore, it is the actual state in an electric equipment using a lithium secondary battery as a backup electric power source that a control circuit or a protective circuit is provided to terminate charging upon full charging of the lithium secondary battery, and to connect the battery to the electric equipment only in the case where the self-discharging proceeds or the electric power source is failed (see Fig. 1).

However, the control circuit and the protective circuit bring about not only increase in cost, but also necessity of provision of the installation space for the circuit in the electric equipment. Therefore, in the case where the safety of the lithium secondary battery itself can be improved to remove the control circuit and the protective circuit, the cost can be reduced, and the size of the electric equipment can be decreased.

The second point is considered in the case where a lithium secondary battery in a full charged state is stored for a long period of time. For example, it is commonly practiced that plural lithium secondary batteries are carried upon picturing with a video camera for a long period. In the case where a battery installed in the video camera is fully discharged to terminate picturing, the battery is replaced with another lithium secondary battery in a full charged state carried in advance, to continue picturing. It is considered that a battery is frequently maintained in a highly charged state because it is convenient when a battery is maintained in a highly charged state. In the highly charged state, the electrolyte solution is liable to be decomposed due to the reactivity of the positive electrode active substance in an oxidized state to cause deterioration of the battery. Specifically, in the case where the voltage is lowered as a result of decomposition of the electrolyte solution (proceeding of self-discharge), the reactivity of the positive electrode active substance is lowered, but the reaction between the positive electrode active substance and the electrolyte solution causes deterioration of the positive electrode active substance, decrease of the amount of the electrolyte solution, generation of a minute amount of gas, and increase in resistance due to a film derived from the decomposition products, whereby the battery characteristics are lowered.

Therefore, it is demanded that the deterioration in battery characteristics due to self-discharge in a full charged state.

The third point is that in the case where a lithium secondary battery is used in an electric vehicle using a large battery capacity. According to the increased battery capacity, there are cases where the safety of the lithium secondary battery upon charging is difficult to be ensured.

It is a general procedure in a lithium secondary battery that an active substance in a charged state is thermally instable. Therefore, in the case where the battery capacity is increased, the amount of the active substance that is thermally instable is increased, whereby the lithium secondary battery is liable to fall in a danger condition.

Particularly, in the case where a lithium-transition metal complex oxide is used as a positive electrode active substance, the positive electrode active substance in a charged is in a state with a high oxidation number by with drawing lithium (a state with a strong oxidation power), and therefore, there are cases where an electrolyte solution in contact therewith is decomposed through oxidation. The reaction further proceeds upon increasing the temperature, and there is a possibility of thermal runaway, in which the temperature of the lithium secondary battery is further increased by occurring the oxidation reaction since the oxidation reaction is an exothermal reaction, so as to cause further progress of the oxidation reaction. In the case where the size of the battery is small, the oxidation reaction can be suppressed due to large heat dissipation from the surface of the battery, but in the case where a battery having a large amount of the active substance to attain a large capacity is used, for example, in an electric vehicle, the heat is liable to be accumulated in the battery due to less heat liberation than heat generation by the oxidation reaction. In the case where the positive electrode active substance becomes instable due to any factor, thermal runaway is liable to occur, and the envisioned damage becomes large due to the large capacity thereof. In the case where the battery is excessively charged beyond the fully charged state to fall in an excessively charged state, the instability of the positive electrode active substance is considerably increased to facilitate the decomposition of the positive electrode active substance itself and the reaction of the electrolyte solution, whereby the runaway reaction is liable to occur. In the excessive charging, the charging proceeds beyond the prescribed voltage (the set voltage in constant voltage charging), as being different from the float charging, and thus, lithium ions migrate from the positive electrode to the negative electrode in such an amount that exceeds the amount of lithium ion that should migrate in the normal design. As a result, the positive electrode active substance in such a state that lithium ions are withdrawn therefrom in an unnecessarily large amount, and the battery is liable to fall in a significantly instable state.

It is the current situation that a lithium secondary battery is not practiced as an electric power source of an electric vehicle due to the aforementioned safety problems, and improvement in safety of a lithium secondary battery itself in a charged state is demanded.

The inventors have made earnest investigations for solving the problems, such as instabilization of a lithium secondary battery and deterioration in battery characteristics of a lithium secondary battery in a charged state. It has been found that the peculiar molecular structure and the nature as a radical scavenger of fullerene is utilized in order to solve the problems, whereby the problem in safety of a lithium secondary battery used as a backup electric power source upon subjecting float charging, the problem of deterioration in battery characteristics due to self-discharge upon maintaining in a full charged state for a long period of time, and a problem of thermal runaway due to an oxidation reaction in a lithium secondary battery with a large capacity are solved to complete the invention.

Accordingly, a first substance of the invention resides in an additive used in a positive electrode material for a lithium secondary battery having a positive electrode active substance, characterized in that the additive is a fullerene compound.

A second substance of the invention resides in a positive electrode material for a lithium secondary battery, the positive electrode material containing a positive electrode active substance and a fullerene compound, characterized in that the fullerene compound is present on a surface of the positive electrode active substance.

A third substance of the invention resides in a positive electrode active substance for a lithium secondary battery, the positive electrode material containing a positive electrode material and a fullerene compound, characterized in that the fullerene compound is present on a surface of the positive electrode active substance, and spherical shell structures of the fullerene compound are crosslinked through at least one atom.

A fourth substance of the invention resides in a positive electrode material for a lithium secondary battery, the positive electrode material containing a positive electrode material and a fullerene compound, characterized in that the fullerene compound is present on a surface of the positive electrode active substance, and spherical shell structure of the fullerene compound is chemically bonded to the positive electrode active substance through at least one atom.

A fifth substance of the invention resides in a positive electrode material for a lithium secondary battery, the positive electrode material containing a positive electrode material and a fullerene compound, characterized in that the fullerene compound is present on a surface of the positive electrode active substance, and an elution amount of the fullerene compound per unit weight of the positive electrode material for a lithium secondary battery determined by the following test method is 2 mg/g or less:

[test method]

(1) 0.1 g of the positive electrode material for a lithium secondary battery is dissolved in a trimethylbenzene solvent or an N-methylpyrrolidone solvent to prepare a sample fluid;
(2) the sample fluid is allowed to stand at an ordinary temperature ($25 \pm 5°C$) and an ordinary humidity ($50 \pm 15\%RH$) for 24 hours;
(3) a supernatant fluid of the sample fluid thus allowed to stand is recovered, and a content of the fullerene compound contained in the supernatant fluid is measured; and
(4) the measured value is converted to a total elution amount of the sample fluid, and the converted value is divided by 0.1 g.

A sixth substance of the invention resides in a positive electrode for a lithium secondary battery, characterized by using the aforementioned positive electrode material for a lithium secondary battery.

A seventh substance of the invention resides in a lithium secondary battery, characterized by using the aforementioned positive electrode.

An eighth substance of the invention resides in a process for producing a positive electrode material for a lithium secondary battery having a fullerene compound present on a surface of a positive electrode active substance, characterized in that the process contains: a fullerene compound supporting step of making a fullerene compound present on a surface of a positive electrode substance; and at least one of a crosslinking step of crosslinking spherical shell structures of the fullerene compound through at least one atom, and a chemically bonding step of chemically bonding a spherical shell structure of the fullerene compound to the surface of the positive electrode active substance through at least one atom.

The "fullerene compound" referred in the invention means a substance having a spherical shell structure formed of carbon in the molecule thereof. The "fullerene compound" comprehensively includes, for example, fullerene as a carbon molecule in a spherical shell form, a fullerene derivative having an organic group or a group of an inorganic element bonded to carbon constituting fullerene, such a state that spherical shell structures constituting fullerene or a fullerene derivative are bonded directly or through at least one atom, and such a state that a spherical shell structure constituting fullerene or a fullerene derivative is chemically bonded to a surface of a carbonaceous substance.

The state where "a fullerene compound is present on a surface of a carbonaceous substance" referred in the invention means that a fullerene compound is present on a surface of a carbonaceous substance with maintaining the spherical shell structure. The state where "a fullerene compound is present on a surface of a carbonaceous substance", for example, includes such a case that a molecule of fullerene or a fullerene derivative is adsorbed on a surface of a carbonaceous substance in a single molecular state or an aggregated form, such a case that fullerene or fullerene derivatives are bonded to each other directly or indirectly through a prescribed group and are adsorbed on a surface of a carbonaceous substance, and such a case that fullerene or a fullerene derivative is chemically bonded to a surface of a carbonaceous substance directly or indirectly through a prescribed group.

According to the invention, on a surface of a positive electrode active substance of a lithium secondary battery, a fullerene compound is present in at least one state of (a) a state of fullerene and/or a fullerene derivative, (b) such a state that spherical shell structures of fullerene are crosslinked through at least one atom, and (c) such a state that a spherical shell structure of fullerene is chemically bonded to the positive electrode active substance through at least one atom, whereby such a stable lithium secondary battery can be obtained that is excellent in safety and is low in resistance increasing rate in a fully charged state. In particular, safety on float charging can be effectively ensured. Furthermore, stability of a lithium secondary battery in a full charged state can be ensured.

In the case where the spherical shell structures of the fullerene compound are crosslinked through at least one atom on the surface of the positive electrode active substance, and/or the spherical shell structure of fullerene and the surface of the positive electrode active substance are chemically bonded to each other through at least one atom, the bond strength of the fullerene compound on the surface of the positive electrode active substance can be increased. Accordingly, handling upon production is facilitated, and the resistance increasing rate upon storing under a full charged state for a long period of time can be suppressed.

BRIEF DESCRIPTION OF THE DRAWINGS

Fig. 1 is a schematic diagram showing relationship of a backup electric power source, a load and an electric power source;
Fig. 2 is a diagram showing a (6-6) bond of C60;
Fig. 3 is a graph showing a time dependency of an elution amount of a fullerene compound in an example of the invention;
Fig. 4 is a graph showing a time dependency of an elution amount of a fullerene compound in another example of the invention; and
Fig. 5 is a graph showing a masschromatogram of a component having a mass number of 44 in an example of the invention.

BEST MODE FOR CARRYING OUT THE INVENTION

[1] Lithium secondary battery

In the invention, a fullerene compound is present on a surface of a positive electrode active substance, whereby safety of a lithium secondary battery is improved, and a resistance can be suppressed from being increased in a full charged state.

While still not clear, it is considered that the reason why deterioration of the battery and generation of gas upon float charging is suppressed, and the stability upon charging is improved in the invention owing to the presence of the fullerene compound on the surface of the positive electrode active substance is as follows, as estimated from the aforementioned deterioration mechanisms and the characteristic natures of fullerene.

The deterioration due to resistance increase and the decomposition reaction of the electrolyte solution on the positive electrode occur on the surface of the positive electrode active substance in contact with the electrolyte solution, and it is expected that since the surface of the positive electrode active substance has high activity in a full charged state, electrolysis of the electrolyte solution, which directly brings about gas generation, is accelerated by a catalytic function. Therefore, it is considered that in the case where the surface of the positive electrode active substance is treated with fullerene, the surface of the positive electrode active substance is coated with fullerene as a carbonaceous substance to prevent the electrolyte solution from being in contact with the surface of the positive electrode active substance, and thereby the decomposition rate is suppressed. The formation of a coating film on the surface of the positive electrode active substance generally brings about increase in resistance, and it is a disadvantageous factor in view of the battery characteristics. However, fullerene is a spherical molecule and can be formed into an ultra-thin film on the molecular level, and lithium ions can pass through spaces in the crystalline structure formed of the spherical molecules. Accordingly, it is considered that increase in resistance is suppressed in comparison to treatments with other substances. And fullerene has a function of trapping radicals, and thus it is considered that radicals generated on the surface of the active substance and the solvent molecules of the electrolyte solution upon the decomposition process of the electrolyte solution are trapped, so as to provide such an effect that the gas generation and the decomposition reaction are terminated or delayed.

Furthermore, it is considered that the suppression of decomposition of the electrolyte solution suppresses resistance increase due to reduction in amount of the electrolyte solution. The decomposition of the electrolyte solution often forms insoluble matters along with the components eliminated as gas, and it is expected that the insoluble matters forms a coating on the positive electrode active substance to increase the resistance. In the invention, therefore, the electrolyte solution is suppressed from being decomposed, and thus the resistance is suppressed from being increased to prevent deterioration of the battery characteristics.

The additive for a positive electrode material for a lithium secondary battery, the positive electrode material for a lithium secondary battery, the positive electrode using the positive electrode material for a lithium secondary battery, the lithium secondary battery using the positive electrode, and the process for producing the positive electrode material for a lithium secondary battery of the invention will be described below.

For convenience of explanation, the positive electrode material for a lithium secondary battery and the process for producing the positive electrode material for a lithium secondary battery are described, and then the positive electrode using the positive electrode material for a lithium secondary battery and the lithium secondary battery are described.

The explanation of the "positive electrode material for a lithium secondary battery" will be made with reference to a case where a fullerene compound is present in a monomolecular form or as an aggregated body of plural molecules on the surface of the positive electrode active substance, as "Embodiment 1".

Subsequently, a case where spherical shell structures of a fullerene compound are crosslinked through at least one atom on the surface of the positive electrode active substance (Embodiment 2), a case where a spherical shell structure of a fullerene compound is chemically bonded to the positive electrode active substance through at least one atom on the surface of the positive electrode active substance (Embodiment 3), and an embodiment using the Embodiment 2 and the Embodiment 3 in combination (Embodiment 4) are described.

Thereafter, an embodiment using the Embodiment 1, the Embodiment 2 and the Embodiment 3 in combination (Embodiment 5) is described.

A. Positive Electrode Material for Lithium secondary battery

A-1. Embodiment 1

The positive electrode material for a lithium secondary battery in this embodiment is a positive electrode material for a lithium secondary battery containing a positive electrode active substance and a fullerene compound, and is characterized in that the fullerene compound is present on the surface of the positive electrode active substance.

The embodiment will be described in more detail below.

In the Embodiment 1, since the fullerene compound is present in a monomolecular form or an aggregated form of plural molecules on the surface of the positive electrode active substance, the fullerene compound in the Embodiment 1 designates fullerene and/or a fullerene derivative.

(1) Additive

In this embodiment, a fullerene compound is used as an additive for a positive electrode material for a lithium secondary battery containing a positive electrode active substance. In particular, it is preferred that the additive is present on the surface of the positive electrode active substance. Examples of the fullerene compound herein include fullerene, a fullerene derivative and a mixture of fullerene and a fullerene derivative.

(Fullerene and Fullerene Derivative)

The term fullerene designates a carbon molecule in a spherical shell form. The fullerene used herein is not limited as far as the object of the invention is satisfied, and examples thereof include $C_{60}$, $C_{70}$, $C_{76}$, $C_{78}$, $C_{82}$, $C_{84}$, $C_{90}$, $C_{96}$, $C_{100}$, and a dimer and a trimer of these compounds.

Among these compounds, $C_{60}$, $C_{70}$ and a dimer and a trimer of these compounds are preferred. $C_{60}$ and $C_{70}$ have high solubility in a solvent and have such an advantage that they can be easily added to a lithium secondarybattery. $C_{60}$ and $C_{70}$ also have such an advantage that they are conveniently obtained industrially. The fullerene may be used in combination of plural kinds thereof, and in the case where they are used in combination, both $C_{60}$ and $C_{70}$ are used in combination. The use of the combination improves uniform dispersibility on the surface of the substrate.

In the case where $C_{60}$ and $C_{70}$ are used in combination, the lower limit of the amount of $C_{70}$ per 100 parts by weight of $C_{60}$ is generally 5 parts by weight or more, preferably 7 parts by weight or more, and particularly preferably 10 parts by weight or more. In the case where $C_{60}$ and $C_{70}$ are used in the aforementioned ratio, the mutual interaction thereof is favorably attained to improve the dispersion stability.

The upper limit of the amount of $C_{70}$ per 100 parts by weight of $C_{60}$ is generally 90 parts by weight or less, preferably 80 parts by weight or less, and particularly preferably 70 parts by weight or less. In the case where the content of $C_{70}$ is in the aforementioned ratio, such a problem can be avoided that the effect of the combination use of $C_{60}$ and $C_{70}$ is reduced due to insufficient mutual interaction therebetween.

On the other hand, the lower limit of the amount of $C_{60}$ per 100 parts by weight of $C_{70}$ is generally 5 parts by weight or more, preferably 7 parts by weight or more, and particularly preferably 10 parts by weight or more. In the case where $C_{60}$ and $C_{70}$ are used in the aforementioned ratio, the mutual interaction thereof is favorably attained to improve the dispersion stability.

Similarly, the upper limit of the amount of $C_{60}$ per 100 parts by weight of $C_{70}$ is generally 90 parts by weight or less, preferably 80 parts by weight or less, and particularly preferably 70 parts by weight or less. In the case where the content of $C_{60}$ is in the aforementioned ratio, such a problem can be avoided that the effect of the combination use of $C_{60}$ and $C_{70}$ is reduced due to insufficient mutual interaction therebetween.

Fullerene is generally obtained by extraction and separation from a fullerene-containing soot obtained, for example, by the resistance heating method, a laser heating method, an arc discharge method and a combustion method. In this case, it is not necessary that fullerene is completely separated from the soot, and the content of fullerene in the soot can be adjusted in a range that does not impair the performance.

Fullerene is generally in a powder form at an ordinary temperature (25°C) and an ordinary humidity (50%RH), and the secondary particle diameter thereof is generally 10 nm or more, preferably 15 nm or more, more preferably 20 nm or more, and particularly preferably 50 nm or more, and is generally 1 mm or less, preferably 500 µm or less, and more preferably 100 µm or less.

The fullerene derivative means such a compound that an atomic group forming a part of an organic compound or an atomic group of inorganic elements is bonded to at least one carbon atoms constituting the fullerene. Examples of the fullerene derivative that can be used include fullerene hydride, fullerene oxide, fullerene hydroxide and fullerene halogenide (such as F, Cl, Br and I). Fullerene for obtaining the fullerene derivative is not limited as far as the object of the invention is satisfied, and any of the aforementioned kinds of fullerene can be used.

The fullerene derivative used in the invention has a prescribed group bonded to one or more of carbons constituting the fullerene. Preferred examples of the carbon, to which the prescribed group is bonded, among the carbons constituting the fullerene, for example a $C_{60}$ molecule, include two carbon atoms constituting the (6-6) bond in a $C_{60}$ molecule (see Fig. 2). This is because the two carbon atoms forming the (6-6) bond have high electron withdrawing property. There are cases where the group to be bonded is bonded to one of the carbons of the (6-6) bond or to both thereof, and in the case where the group is bonded to both the carbons, there are cases where the same groups are bonded to the carbons, different groups are bonded to the carbons, and a group is bonded thereto to form a ring containing the carbons, i.e., cyclization addition.

In the case of the cyclization addition, there are various reactions of forming a three-membered ring, a four-membered ring, a five-membered ring and a six-membered ring, and various kinds of fullerene derivatives can be obtained by using a ring of which the constitutional molecule further has a substituent.

As exemplifying a $C_{60}$ molecule, examples of the addition reaction for forming a three-membered ring include a (6-5) ring opening fulleroid and a (6-6) ring closing metanofullerene. The carbon atom added to fulleroid and metanofullerene is a methylene group, and a higher order derivative can be obtained by substituting the two hydrogen atoms of the methylene group by prescribed substituents. An azafulleroid is obtained in the case where a three-membered ring is formed with a nitrogen atom, and various kinds of derivatives are obtained by substituting the group connected to the bond among the three bond having the nitrogen group other than two bonds connected to the fullerene part.

Examples of the addition reaction for forming a five-membered ring with a $C_{60}$ molecule include those forming a pyrazoline condensate, an oxazolidine condensate, a dihydrofuran condensate and a pyrrolidine condensate. Examples of the addition reaction for forming a six-membered ring with a $C_{60}$ molecule include a reaction adding a diene compound. A higher order derivative is obtained by substituting a group connected to an atom forming the five- or six-membered ring. Since a large number of atoms are contained in the five- or six-membered ring, it has plural sites, to which substituents can be introduced, whereby various derivatives can be formed.

Examples of the method for synthesizing a fullerene derivative also include the following method.

For example, in the nucleophilic addition reaction, an alkyl group or a phenyl group can be introduced to fullerene through reaction with an organic lithium reagent or a Grignard reagent. Furthermore, a cyano group can be introduced to fullerene through reaction with sodium cyanide as a carbon nucleophilic reagent. Accordingly, the group to be introduced can be changed depending on the reagent used. The fullerene derivative synthesized through the aforementioned nucleophilic addition reaction or the reaction with sodium cyanide sometimes forms a salt as an anion, but often forms a 1,2-dihydrofullerene derivative by scavenging the anion with an electrophilic reagent. A mono-substituted compound of the 1,2-dihydrofullerene derivative can be obtained by scavenging with a proton, and a di-substituted compound of the 1,2-dihydrofullerene having a methyl group or a cyano group as the second substituent can be obtained depending on the species of the electrophilic reagent. Another fullerene derivative can be synthesized by the nucleophilic addition reaction through reaction with silyllithium or an amine.

A fullerene hydride, a fullerene oxide and a fullerene hydroxide can be obtained through an oxidation reaction and a reduction reaction. A halogen atom, such as fluorine, can also be introduced through radical reaction.

The group to be directly bonded to fullerene and the group formed with the elements constituting the ring formed upon exerting the cyclization addition reaction with fullerene, which are used for forming a fullerene derivative, are not particularly limited, and at least one selected from the group consisting of a hydrogen atom, an alkali metal atom, a chalcogen atom, a halogen atom, an aliphatic hydrocarbon group, an aromatic hydrocarbon group, a heterocyclic group, a characteristic group containing oxygen, a characteristic group containing sulfur and a characteristic group containing nitrogen, since they are conveniently obtained industrially.

Examples of the alkali metal atom include lithium, sodium, potassium and rubidium, and lithium, sodium and potassium are preferred from the standpoint of easiness in industrial synthesis.

Examples of the chalcogen atom include oxygen, sulfur, selenium and tellurium, and oxygen and sulfur are preferred from the standpoint of easiness in industrial synthesis.

Examples of the halogen atom include fluorine, chlorine, bromine and iodine, and fluorine, chlorine, bromine and iodine are preferred from the standpoint of easiness in industrial synthesis. A group containing a halogen atom, such as an iodosyl group, may be used.

Examples of an aliphatic linear hydrocarbon group out of the aliphatic hydrocarbon group include a methyl group, an ethyl group, a propyl group, an isopropyl group, a butyl group, an isobutyl group, a sec-butyl group, a tert-butyl group, a pentyl group, an isopentyl group, a neopentyl group, a hexyl group, a heptyl group, an octyl group, a nonyl group, a decyl group, an undecyl group, a dodecyl group, a vinyl group, a 1-propenyl group, an allyl group, an isopropenyl group, a 1-butenyl group, a 2-butenyl group, a 2-pentenyl group and an ethynyl group.

A methyl group, an ethyl group and a propyl group are preferred from the standpoint of easiness in industrial synthesis.

Examples of an alicyclic hydrocarbon group out of the aliphatic hydrocarbon group include a cyclopropyl group, a cyclopentyl group, a cyclohexyl group and 1-cyclohexenyl group. A cyclohexyl group is preferred from the standpoint of easiness in industrial synthesis.

Examples of the aromatic hydrocarbon group include a phenyl group, a tolyl group, a xylyl group, a mesityl group, a cumenyl group, a benzyl group, a diphenylmethyl group, a triphenylmethyl group, a stylyl group, a biphenylyl group and naphthyl group. A phenyl group, a benzyl group and a biphenylyl group are preferred from the standpoint of easiness in industrial synthesis.

Examples of the heterocyclic group include a furyl group, a furfuryl group, a thienyl group, a pyrrolyl group, a pyridyl group, a pyperidino group, a pyperidyl group and a quinolyl group, and a furyl group and a pyridyl group are preferred from the standpoint of easiness in industrial synthesis.

The characteristic group containing oxygen is not particularly limited as far as it contains oxygen, and examples thereof include a hydroxyl group, a hydrogen peroxide group, an oxygen atom (an epoxy group) and a carboxyl group, and a hydroxyl group and an oxygen are preferred from the standpoint of easiness in industrial synthesis.

The following groups are also exemplified as the characteristic group containing oxygen.

Examples of an alkoxy group include a methoxy group, an ethoxy group, a propoxy group, an isopropoxy group, a butoxy group and a phenoxy group, and a methoxy group and an ethoxy group are preferred from the standpoint of easiness in industrial synthesis.

Examples of a carboxylic acid group and an ester group include a carboxyl group, a methoxycarbonyl group, an ethoxycarbonyl group and an acetoxy group, and a carboxyl group and an acetoxy group are preferred from the standpoint of easiness in industrial synthesis.

Examples of an acyl group include a formyl group, an acetyl group, a propionyl group, a butylyl group, an isobutylyl group, a valeryl group, an isovaleryl group, a pivaloyl group, a hexanoyl group, an octanoyl group, a lauroyl group, a parmitoyl group, a stearoyl group, an oleoyl group, an acryloyl group, a methacryloyl group, a chloroformyl group, an oxal group, a cyclohexanecarbonyl group, a benzoyl group, a toluoyl group and a naphthoyl group, and a formyl group and an acetyl group are preferred from the standpoint of easiness in industrial synthesis.

Further examples include an acetonyl group, a phenacyl group, a salicyl group, a salicyloyl group, an anisyl group and an anisoyl group. An acetonyl group and a salicyl group are preferred from the standpoint of easiness in industrial synthesis.

The characteristic group containing sulfur is not particularly limited as far as it contains sulfur, and examples thereof include a mercapto group, a thio group (-S-), a methylthio group, an ethylthio group, a phenylthio group, a thioformyl group, a thioacetyl group, a thiocarboxyl group, a dithiocarboxyl group, a thiocarbamoyl group, a sulfonic acid group, a mesyl group, a benzenesulfonyl group, a toluenesulfonyl group, a tosyl group and a sulfoamino group. A mercapto group and a sulfonic acid group are preferred from the standpoint of easiness in industrial synthesis.

The characteristic group containing nitrogen is not particularly limited as far as it contains nitrogen, and examples thereof include an amino group, a methylamino group, a dimethylamino group, an anilino group, a toluidino group, a xylydino group, a cyano group, an isocyano group, a cyanate group, an isocyanate group, a thiocyanate group, an isothiocyanate group, a hydroxyamino group, an acetylamino group, a benzamide group, a succinimide group, a carbamoyl group, a nitroso group, a nitro group, a hydrazino group, a phenylazo group, a naphthylazo group, an ureido group, an ureylene group, an amidino group and a guanidino group, and an amino group, a cyano group and a cyanate group are preferred from the standpoint of easiness in industrial synthesis.

The aforementioned prescribed groups may further be substituted by another group.

Among the aforementioned prescribed groups, particularly preferred examples thereof include a hydrogen atom, sodium, potassium, oxygen, a hydroxyl group, an amino group, a sulfonic acid group, a methyl group, an ethyl group, a propyl group, a phenyl group, a biphenylyl group, an ethoxy group, fluorine, chlorine, bromine and iodine. Among the groups, oxygen has two bonds, and the two bonds are bonded to carbon atoms constituting fullerene, respectively, to form an epoxy group.

Particularly preferred examples of the fullerene derivative include at least one selected from the group consisting of fullerene hydride, fullerene oxide, fullerene hydroxide, fullerene halide (such as F, Cl, Br and I), sulfonated fullerene, biphenylfullerene (a fullerene derivative having a single biphenyl group or plural biphenyl groups are bonded to the spherical shell structure of fullerene), and fullerene oxide and fullerene hydroxide are most preferred from the standpoint of improvement of the battery characteristics.

The aforementioned prescribed groups may be bonded to at least one of the carbon atoms constituting fullerene. The number of the groups bonded to fullerene is generally 36 or less, preferably 10 or less, and more preferably 4 or less.

The fullerene derivative is generally in a powder form at an ordinary temperature and an ordinary humidity (25°C, 50% RH), and the secondary particle diameter thereof is generally 10 nm or more, preferably 50 nm or more, and more preferably 100 nm or more, and is generally 1 mm or less, preferably 500 μm or less, and more preferably 100 μm or less. The diameter in the aforementioned range ensures the safety on float charging.

Examples of the fullerene compound that is preferred for exerting the effect of the invention include at least one selected from the group consisting of $C_{60}$, $C_{70}$, fullerene hydride, fullerene oxide, fullerene hydroxide, fullerene halide, sulfonated fullerene and biphenylfullerene.

(2) Positive Electrode Active Substance

The positive electrode material for a lithium secondary battery of the invention contains, in addition to the fullerene compound, such a positive electrode active substance that is capable of occluding and releasing lithium.

Examples of the positive electrode active substance include various inorganic compounds, such as a transition metal oxide, a lithium-transition metal complex oxide and a transition metal sulfide. Examples of the transition metal herein include Fe, Co., Ni and Mn. Specific examples thereof include powder of a transition metal oxide, such as MnO, $V_2O_5$, $V_6O_{13}$ and $TiO_2$, a lithium-transition metal complex oxide, such as a lithium-nickel complex oxide, a lithium-cobalt complex oxide and a lithium-manganese complex oxide, and a transition metal sulfide, such as $TiS_2$, FeS and $MoS_2$. The elements of these compounds may be partially substituted for improving the characteristics. An organic compound, such as polyaniline, polypyrrole, polyacene, a disulfide compound, a polysulfide compound and an N-fluoropyridinium salt, may be used by mixing.

Among the aforementioned positive electrode active substances, a lithium-transition metal complex oxide, such as a lithium-cobalt complex oxide, a lithium-nickel complex oxide and a lithium-manganese complex oxide, is preferred as the positive electrode active substance, and more preferably a lithium-cobalt complex oxide and a lithium-nickel complex oxide are used. A lithium-cobalt complex oxide and lithium-nickel complex oxide are liable to be instable upon float charging and are liable to cause oxidation reaction in a charged state, and therefore, the effect of treatment on the surface thereof with the fullerene compound is significantly exerted. A lithium-cobalt complex oxide is a useful positive electrode active substance excellent in rate characteristics owing to the flat discharge curve, and a lithium-nickel complex oxide has such an advantage that it can increase the battery capacity owing to the large current capacity per unit weight.

Plural kinds of the lithium-transition metal complex oxides may be used as the positive electrode active substance.

The transition metal site of the lithium-transition metal complex oxide may be partially substituted by another element. By substituting a part of the transition metal site by another element, the lithium secondary battery can be improved in stability. The lithium-transition metal complex oxide can be improved in stability of the crystalline structure by substituting a part of the transition metal by another element. Examples of the element substituting a part of the transition metal site (hereinafter, referred to as a substituting element) include Al, Ti, V, Cr, Mn, Fe, Co, Li, Ni, Cu, Zn, Mg, Ga and Zr, and preferably Al, Cr, Fe, Co, Li, Ni, Mg and Ga, and further preferably Co and Al. The transition metal site may be substituted by two or more kinds of elements.

The substitution degree by the substituting element is generally 2.5% by mole or more based on the transition metal as the base, and more preferably 5% by mole or more based on the transition metal as the base, and is generally 30% by mole or less based on the transition metal as the base, and more preferably 20% by mole or less based on the transition metal as the base. In the case where the substitution degree is too small, there are some cases where the crystalline structure cannot be sufficiently stabilized, and in the case where it is too large, there are some cases where the capacity as a battery is lowered.

The positive electrode active substance generally has a specific surface area of 0.01 $m^2$/g ormore, preferably 0.1 $m^2$/g or more, and more preferably 0.4 $m^2$/g or more, and is generally 10 $m^2$/g or less, preferably 5 $m^2$/g or less, and more preferably 2 $m^2$/g or less. In the case where the specific surface area is too small, it causes reduction in rate characteristics and reduction in capacity, and in the case where it is too large, there are some cases where it reacts with the electrolyte solution to lower the cycle characteristics. The measurement of the specific surface area is made according to the BET method.

The positive electrode active substance generally has an average secondary particle diameter of 0.1 μm or more, preferably 0.2 μm or more, more preferably 0.3 μm or more, and most preferably 0.5 μm or more, and is generally 300 µm or less, preferably 100 µm or less, more preferably 50 µm or less, and most preferably 20 µm or less. In the case where the average secondary particle diameter is too small, there are some cases where the cycle deterioration of the battery is increased, and a problem occurs in safety, and in the case where it is too large, there are some cases where the internal resistance of the battery is increased to fail to obtain sufficient output.

(3) Other Materials contained in Positive Electrode Material for Lithium secondary battery

Examples of materials contained in the positive electrode material for a lithium secondary battery of the Embodiment 1 include, in addition to the fullerene compound and the positive electrode active substance, a binder (described in detail later) used in a positive electrode of a lithium secondary battery, and other additives, such as an electroconductive agent.
The species and the contents of the materials may be appropriately adjusted depending on the battery performance demanded.

(4) Relationship between Positive Electrode Active Substance and Fullerene Compound

In the invention, the fullerene compound is present on the surface of the positive electrode active substance. In the case where the fullerene compound is directly present on the surface of the positive electrode active substance, reaction on the surface of the positive electrode active substance upon float charging can be suppressed from occurring, whereby gas generation due to reaction between the positive electrode active substance and the electrolyte solution and deterioration of the positive electrode due to increase of resistance can be prevented.
While the surface of the positive electrode active substance may be entirely covered with the fullerene compound, a part covered with the fullerene compound and a part not covered therewith may be present in combination on the surface of the positive electrode active substance.
The amount of the fullerene compound present with respect to the positive electrode active substance is generally 0.001% by weight or more, preferably 0.005% by weight or more, and more preferably 0.01% by weight or more. In the case where the amount is too small, the safety upon float charging is insufficiently ensured. The amount is generally 20% by weight or less, preferably 10% by weight or less, more preferably 5% by weight or less, further preferably 3% by weight or less, particularly preferably 2% by weight or less, further particularly preferably 1.6% by weight or less, and most preferably 0.7% by weight or less. In the case where the amount is too large, there are some cases where the internal resistance of the battery is increased. The preferred amount present herein is the amount of the fullerene compound present on the surface of the positive electrode active substance, i.e., the weight of the fullerene compound treated on the surface of the positive electrode active substance. In other words, in the case where the fullerene compound is not present on the surface of the positive electrode active substance but is present as independent powder in the positive electrode, it is significantly difficult to obtain the effect of the invention even though the fullerene is used in the aforementioned prescribed amount based on the weight of the positive electrode active substance.
One of the characteristic features of the invention resides in that it is sufficient that the fullerene compound is present on the surface of the positive electrode active substance in such an amount that improves the safety upon float charging and the stability in the charge state, and there is no necessity of using a large amount of the fullerene compound. That is, even in the case where a slight amount, e.g., several percents, of the fullerene compound is used with respect to the positive electrode active substance, the effect of the invention is significantly exerted. There may be cases where the cost of the fullerene compound is increased depending on the species of the fullerene compound used, but the positive electrode material can be effectively suppressed from being increased in cost since the fullerene compound exerts the significant effect with a slight amount in the invention.
The amount of the fullerene compound present on the surface of the positive electrode active substance is preferably determined based on the surface area of the positive electrode active substance. This is because the treated state of the surface can be more preferably and appropriately determined based on the amount present per unit area in view of the state where the surface is coated and treated therewith.
The amount of the fullerene compound present on the surface of the positive electrode active substance is generally 0.01 mg/m$^2$ or more, preferably 0.1 mg/m$^2$ or more, and more preferably 1 mg/m$^2$ or more, based on the surface area of the positive electrode active substance measured by the nitrogen adsorption method (BET method). In the case where the amount present is too small, the safety upon float charging is insufficiently ensured. The amount is generally 100 mg/m$^2$ or less, preferably 50 mg/m$^2$ or less, more preferably 20 mg/m$^2$ or less, and further preferably 10 mg/m$^2$ or less. In the case where the amount present is too large, there are some cases where the internal resistance of the battery is increased. In this case, the aforementioned values are the amounts of the fullerene compound present on the surface of the positive electrode active substance, and no effect is obtained when the aforementioned amount of the fullerene compound is simply mixed with the positive electrode active substance.

The amount of the fullerene present on the surface of the positive electrode active substance or the amount of the fullerene compound present on the surface of the positive electrode active substance per unit area is a considerably convenient defining method upon managing the process. On the other hand, it is effective that the amount of the fullerene present on the surface of the positive electrode active substance is determined by the thickness of the fullerene on the surface of the positive electrode active substance. The thickness of the fullerene compound present on the surface of the positive electrode active substance is determined, in certain extent, by the amount of the fullerene present on the surface of the positive electrode active substance per unit area. There are cases where the thickness of the fullerene compound present on the surface of the positive electrode active substance varies depending on the state of the fullerene compound, i.e., in an amorphous state or a crystalline state, and the fullerene thus treated has a distribution in thickness.

Therefore, the thickness of the fullerene compound is generally 0.01 nm or more. As the size of one molecule of the fullerene compound is about 1 nm, the thickness less than the molecular size means an average thickness, and there is no inconsistency since an area coverage of 1% means a thickness of 1/100 of the molecular thickness. The thickness is preferably 0.1 nm or more, and more preferably 1 nm or more. The thickness of the fullerene compound is generally 100 nm or less, preferably 20 nm or less, more preferably 10 nm or less, and further preferably 5 nm or less. In the case where the thickness is too large, there are some cases where the resistance of the positive electrode active substance is increased. Separate from the average thickness, the maximum thickness derived from nonuniformity on treatment is necessarily considered. In the case where a part of the treated layer having a particularly large thickness is present on the surface of the positive electrode active substance, it is not preferred since not only the other parts are insufficiently treated, but also it is required to treat with an excessive amount of the fullerene compound. The part having a large thickness is also not preferred from the standpoint of characteristics due to an increased resistance. In particular, it is not preferred that protrusions in the form of granules, columns or spheres are present on the surface. The maximum thickness is generally 5 times or less, preferably 2 times or less, more preferably 1.5 times or less, and further preferably 1.2 times or less, the average thickness.

The presence or absence of the fullerene compound on the surface of the positive electrode active substance can be determined by analyzing the surface of the material obtained, for example, by the infrared spectroscopy or the X-ray photoelectron spectroscopy and so on.

A process for producing the positive electrode material for a lithium secondary battery according to the Embodiment 1 will be described later.

A-2. Embodiment 2, Embodiment 3 and Embodiment 4

In a positive electrode material for a lithium secondary battery according to the Embodiment 2, a fullerene compound is present on the aforementioned positive electrode active substance, and spherical shell structures of the fullerene compound are crosslinked through at least one atom. In a positive electrode material for a lithium secondary battery according to the Embodiment 3, a fullerene compound is present on the aforementioned positive electrode active substance, and a spherical shell structure of the fullerene compound is chemically bonded to the positive electrode active substance through at least one atom. In the Embodiment 4, the spherical shell structures of the fullerene compound are crosslinked through at least one atom, and the spherical shell structures of the fullerene compound are chemically bonded to the positive electrode active substance through at least one atom.

As the spherical shell structure of the fullerene compound used in Embodiments 2, 3 and 4, the fullerene and the fullerene derivative described in the Embodiment 1 canbe preferablyused. As the positive electrode active substance used in Embodiments 2, 3 and 4, the positive electrode active substance described in the Embodiment 1 can be preferably used.

The Embodiments 2 and 3 will be described in detail below.

(1) Embodiment 2

The Embodiment 2 has such a state that the spherical shell structures of the fullerene compound are crosslinked through at least one atom to form a fullerene layer. In the Embodiment 2, not only the fullerene compound present on the surface of the positive electrode active substance are aggregated with each other through van der Waals attraction, but also the adjacent spherical shell structures of the fullerene compound are crosslinked through at least one atom, whereby the fullerene layer is improved in strength to provide such an advantage that the fullerene compound is suppressed from being eluted into the electrolyte solution and an organic solvent used upon producing the positive electrode.

In the Embodiment 2, the positive electrode active substance has, on at least a part of the surface thereof, the fullerene layer containing the fullerene compound.

One of the characteristic features of the fullerene layer resides in that the spherical shell structures of the fullerene compound are crosslinked through at least one atom. The term crosslinking referred herein means such a state that the adjacent fullerene compound molecules are indirectly bonded to each other through a bonding group having at least one atom, and the fullerene compound may form a dimer or a polymer. The fullerene compound may also form a linear or network polymer.

The amount of the fullerene compound present in the fullerene layer is determined with respect to the surface area of the positive electrode active substance. Specifically, in the case where the positive electrode active substance is in a powder form, the amount of the fullerene compound is determined by the surface area measured by BET analysis in the nitrogen adsorption method. In the invention, the amount of the fullerene compound present in the fullerene layer is preferably 0.01 $mg/m^2$ or more, more preferably 0.1 $mg/m^2$ or more, and further preferably 0.2 $mg/m^2$ or more, per unit area of the positive electrode active substance. In the case where the amount of the fullerene present is too small, there are some cases where the effect of the surface treatment cannot be sufficiently obtained. The amount of the fullerene compound is generally 10 $mg/m^2$ or less, preferably 5 $mg/m^2$ or less, and more preferably 2 $mg/m^2$ or less. In the case where the amount of the fullerene present is too large, the proportion of the fullerene layer to the positive electrode active substance becomes too large, and thus there are some cases where the efficiency of the surface treatment is lowered.

In the case where the surface area of the positive electrode active substance is difficult to measure, the amount of the fullerene compound present may be determined in terms of the thickness of the fullerene layer. The thickness is generally 0.01 nm or more taking such cases into consideration that the surface of the positive electrode active substance is in an amorphous state or a crystalline state, and that the thickness has a distribution. The thickness herein is an average thickness. As the size of one molecule of the fullerene compound is about 1 nm, a thickness less than the molecular size is determined herein, but there is no inconsistency since an area coverage of 1% means a thickness of 1/100 of the molecular thickness. The thickness is preferably 0.1 nm or more, and more preferably 1 nm or more.

The thickness of the fullerene layer is generally 1 $\mu$m or less, preferably 100 nm or less, more preferably 20 nm or less, particularly preferably 10 nm or less, and most preferably 5 nm or less. The sufficient effect of the surface treatment can be obtained with a thickness within the range.

Separate from the average thickness, the maximum thickness derived from nonuniformity on treatment is necessarily considered. In the case where a part of the fullerene layer having a particularly large thickness is present on the surface of the positive electrode active substance, not only the other parts are insufficiently treated, but also it is required to treat with an excessive amount of the fullerene compound. There is such a possibility that the part of the fullerene layer having a large thickness suffers decrease in permeability of lithium ions to cause increase in resistance. The maximum thickness is generally 5 times or less, preferably 2 times or less, more preferably 1.5 times or less, and further preferably 1.2 times or less, the average thickness.

In the case where the positive electrode active substance is in a powder form, the amount of the fullerene compound present may be determined in terms of the weight per the weight of the powder. This is because the definition in terms of percentage by weight is convenient upon managing the process. Specifically, the amount of the fullerene present is generally 0.001% by weight or more, preferably 0.005% by weight or more, and more preferably 0.01% by weight or more. The amount is generally 10% by weight or less, preferably 5% by weight or less, more preferably 3% by weight or less, further preferably 1% by weight or less, and particularly preferably 0.3% by weight or less.

Examples of the spherical shell structure of the fullerene compound include fullerene, a fullerene derivative and a mixture of fullerene and a fullerene derivative.

The bonding group having at least one atom used upon crosslinking the spherical shell structures of the fullerene compound through at least one atom is not particularly limited as far as the group has divalent or higher valency, and specific examples thereof include an atom, such as oxygen, sulfur and selenium, a carbonyl group (-CO-), a carbonyloxy group (-COO-), an imino group (-NH-) and a carbonylimino group (-CO-NH-). These bonding groups may have another bonding group, such as a methylene group and an ethylene group, for extending the length of the bonding group.

Examples thereof also include a group obtained by removing two or more hydrogen atoms from a hydrocarbon group, for example, an aliphatic hydrocarbon group, such as a methylene group, an ethylene group, a propylene group, a trimethylene group, a butylene group, an isobutylene group and a neobutylene group, an aromatic hydrocarbon group, such as a phenylene group and a naphthylene group, and an alicyclic hydrocarbon group, such as a cyclohexylene group.

A bonding group, for example, an atom, such as oxygen, sulfur and selenium, a carbonyl group, a carbonyloxy group, an imino group and a carbonylimino group, may be introduced to the aforementioned hydrocarbon groups at the terminal part, to which the spherical shell structure of the fullerene compound is bonded, for adjusting the structure depending on purposes and for improving the reactivity. In the aforementioned bonding groups other than the aliphatic hydrocarbon groups, such a group as a methylene group and an ethylene group may be further introduced for extending the length of the bonding group.

Among the bonding groups, oxygen, sulfur, a carbonyl group and an imino group are preferred since they are industrially easily available and can produce the fullerene layer having a dense structure owing to their relatively simple and small structures. Oxygen is particularly preferred since crosslinking reaction can be effected through a simple reaction, such as an oxidation reaction.

The fullerene layer in the Embodiment 2 has such a structure that the adjacent spherical shell structures of the fullerene compound are crosslinked through at least one atom, as having been described, and in addition, such a sitemaybe contained that the spherical shell structures are directly bonded through no bonding group. As an example of the case, the adjacent fullerene compounds are indirectly bonded through oxygen, and simultaneously they are directly bonded to each other, so as to form a furan structure or a pyran structure.

Whether or not the spherical shell structures of the fullerene compound are bonded through at least one atom on the surface of the positive electrode active substance can be determined, for example, by carrying out surface analysis of the resulting material by the infrared spectroscopy or the X-ray photoelectron spectroscopy. In the case where a small amount of the fullerene compound is dispersed on the surface of the positive electrode active substance (for example, dispersed in a monomolecular level), it can be concluded that the spherical shell structures of the fullerene compound are crosslinked through at least one atom if the elution amount is small upon carrying out the elution test described later.

A process for producing the positive electrode material for a lithium secondary battery according to the Embodiment 2 will be described later.

(2) Embodiment 3

In the Embodiment 3, the spherical shell structure of the fullerene compound is chemically bonded to the positive electrode active substance through at least one atom to form a fullerene layer. In the Embodiment 3, not only the fullerene compound constituting the fullerene layer is adsorbed on the positive electrode active substance through van der Waals attraction, but also the spherical shell structure of the fullerene compound is chemically bonded to the positive electrode active substance through at least one atom to provide such an advantage that the fullerene compound is suppressed from being eluted into the electrolyte solution and an organic solvent used upon producing the positive electrode.

In the Embodiment 3, the positive electrode active substance has, on at least a part of the surface thereof, the fullerene layer containing the fullerene compound.

In the Embodiment 3, the positive electrode active substance has on the surface thereof the fullerene layer containing the fullerene compound. In the Embodiment 3, the fullerene compound constituting the fullerene layer and the positive electrode active substance are chemically bonded to each other through at least one atom, and the positive electrode active substance preferably has, on the surface thereof, a reactive group, such as a hydroxyl group, a thiol group, and a group having an unsaturated double bond, e.g., a vinyl group and an allyl group.

While the spherical shell structure of the fullerene compound is chemically bonded to the positive electrode active substance through at least one atom in the fullerene layer, preferred ranges of the amount of the fullerene compound present in the fullerene layer herein are the same as those in the Embodiment 2, and descriptions thereof is omitted. As the fullerene compound and the bonding group for chemically bonding the spherical shell structure of the fullerene compound to the positive electrode active substance through at least one atom, those described for the Embodiment 2 can also be preferably used.

However, the bonding group is preferably such a group exerting high reactivity with the group bonded to the positive electrode active substance from the standpoint of reactivity with the positive electrode active substance. For example, in the case where a hydroxyl group is bonded to the positive electrode active substance, the bonding group contained in the fullerene compound is preferably a hydroxyl group, a carboxyl group and an isocyanate group. The aforementioned combinations improve the reaction efficiency.

Whether or not the spherical shell structure of the fullerene compound is chemically bonded to the positive electrode active substance through at least one atom can be determined in the following manner. For example, in the case where a polar group is bonded to the surface of the positive electrode active substance, and the spherical shell structure of the fullerene compound is bonded to the positive electrode active substance through the bonding group, the change of the amount of the polar group on the surface of the positive electrode active substance before and after bonding the spherical shell structure is determined, for example, by the infrared spectroscopy or the X-ray photoelectron spectroscopy. In the case where a small amount of the fullerene compound is dispersed on the surface of the positive electrode active substance (for example, dispersed in a monomolecular level), it can be concluded that the spherical shell structures of the fullerene compound are crosslinked through at least one atom if the elution amount is small upon carrying out the elution test described later.

A process for producing the positive electrode material for a lithium secondary battery according to the Embodiment 3 will be described later.

(3) Embodiment 4

In the Embodiment 4, the spherical shell structures of the fullerene compound are crosslinked through at least one atom, and simultaneously, the spherical shell structures of the fullerene compound are chemically bonded to the positive electrode active substance through at least one atom.

Accordingly, the positive electrode material for a lithium secondary battery of the Embodiment 4 is a layered structure having a positive electrode active substance and a fullerene layer containing a fullerene compound formed on the surface of the positive electrode active substance, and one of the characteristic features thereof is that it has both the structure where the spherical shell structures of the fullerene compound are crosslinked through at least one atom (Embodiment 2) and the structure where the spherical shell structures of the fullerene compound are chemically bonded to the positive electrode active substance through at least one atom (Embodiment 3).

In this case, the structure having the spherical shell structures of the fullerene compound crosslinked and the structure having the spherical shell structures chemically bonded to the positive electrode active substance may be catenated to or separated from each other.

In the Embodiment 4, the fullerene compound constituting the fullerene layer is crosslinked to each other or is chemically bonded to the positive electrode active substance, whereby the fullerene compound can be suppressed from being eluted into the electrolyte solution and an organic solvent used upon producing the positive electrode.

The Embodiment 4 uses the Embodiment 2 and the Embodiment 3 in combination, and the fullerene layer used is as those described for the Embodiment 2 and the Embodiment 3. However, as the bonding group having at least one atom, it is preferred that one kind thereof having high reactivity to both the spherical shell structure of the fullerene compound and the positive electrode active substance is used, or two or more kinds thereof having high reactivity to them, respectively, are used in combination. Preferred examples of the bonding group having high reactivity to both of them include an oxygen atom.

Whether or not the positive electrode material for a lithium secondary battery according to the Embodiment 4 is obtained can be determined, for example, by carrying out surface analysis of the resulting material by the infrared spectroscopy or the X-ray photoelectron spectroscopy. In the case where a small amount of the fullerene compound is dispersed on the surface of the positive electrode active substance (for example, dispersed in a monomolecular level), it can be concluded that the spherical shell structures of the fullerene compound are crosslinked through at least one atom, or the spherical shell structures of the fullerene compound are bonded to the surface of the positive electrode active substance through at least one atom, if the elution amount is small upon carrying out the elution test described later.

A-3. Embodiment 5

In the Embodiment 5, fullerene and/or a fullerene derivative are present in a monomolecular form or an aggregated form of plural molecules on a surface of a positive electrode active substance, and simultaneously, the spherical shell structures of the fullerene compound are bonded through at least one atom, and the spherical shell structure of the fullerene compound is chemically bonded to the positive electrode active substance. In other words, the Embodiment 5 is such an embodiment that appropriately uses the Embodiment 1, the Embodiment 2 and the Embodiment 3 in combination.

In the fullerene compound present on the surface of the positive electrode active substance in the Embodiment 5, the prescribed fullerene and/or fullerene derivative may be present as single bodies (in a monomolecular state or a state where plural molecules are aggregated), the fullerene and/or fullerene derivative may be bonded to another fullerene compound (which may be fullerene or the same or different fullerene compound) through at least one atom, or the fullerene and/or fullerene derivative may be bonded to the positive electrode active substance through at least one atom.

As the positive electrode active substance, fullerene and the fullerene derivative used in the Embodiment 5, the same ones as in the Embodiment 1 can be preferably used. As the fullerene layer, the same ones as in the Embodiment 2 and the Embodiment 3 can be preferably used.

Whether or not the positive electrode material for a lithium secondary battery according to the Embodiment 5 is obtained can be determined, for example, by carrying out surface analysis of the resulting material by the infrared spectroscopy or the X-ray photoelectron spectroscopy. In the case where a small amount of the fullerene compound is dispersed on the surface of the positive electrode active substance (for example, dispersed in a monomolecular level), it can be concluded that the spherical shell structures of the fullerene compound are crosslinked through at least one atom, or the spherical shell structures of the fullerene compound are bonded to the surface of the positive electrode active substance through at least one atom, if the elution amount is small upon carrying out the elution test described later.

A-4. Elution Amount of Fullerene Compound

The positive electrode material for a lithium secondary battery of the invention can be effectively suppressed in elution amount of the fullerene compound into an organic solvent, particularly by employing the constitutions shown in the Embodiments 2 to 5. In order to enable applications to lithium secondary batteries for various purposes, it is preferred that the elution amount of the fullerene compound per unit weight of the positive electrode material for a lithium secondary battery of the invention having the fullerene compound present on the surface of the positive electrode active substance is 2 mg/g or less.

For example, in the Embodiments 2 to 5, the fullerene compound is crosslinked and/or is chemically bonded to the surface of the positive electrode active substance to improve the solvent resistance and the mechanical characteristics thereby. In the case of immersing in a solvent, it is preferred that the crosslinked fullerene compound present on the surface and/or the fullerene compound chemically bonded to the surface of the positive electrode active substance are completely not eluted. In actual cases, however, there are some cases where a part of the fullerene compound thus treated is eluted to an organic solvent because there are such site that are insufficient in crosslinking or chemical bonding, and a mild crosslinking condition is necessarily employed depending on the species of the positive electrode substance, and the elution amount in this case is preferably 2 mg/g or less per unit weight of the positive electrode material for a lithium secondary battery. The elution amount per unit weight is such a value that varies depending on the treated amount and the specific surface area of the positive electrode active substance. Upon considering the practical use conditions of the lithium secondary battery, ($\alpha$) the composition thereof is generally determined on weight basis, and ($\beta$) the eluted components not only fail to exert the primary effect, but also cause a possibility of impairing the performance by attaching to the other components. Therefore, the elution amount per unit weight is preferably a certain amount or less for stable applications of the positive electrode active substance thus treated. The elution amount is more preferably 1.5 mg/g or less, further preferably 1.3 mg/g or less, particularly preferably 1.0 mg/g or less, and most preferably 0.5 mg/g or less.

On the other hand, it is also important to comprehend the amount of the fullerene compound remaining as being present on the positive electrode active substance after the test. Specifically, the amount of the fullerene compound remaining as being present on the positive electrode active substance is preferably determined with respect to the surface area of the positive electrode active substance from the standpoint of effectiveness of the treatment. This is because from the standpoint of the treatment effected by covering the surface, a preferred treated state with the fullerene compound can be determined by estimating the amount per unit area.

Specifically, in the case where the positive electrode active substance is in a powder form, the amount of the fullerene compound remaining on the surface of the positive electrode active substance after carrying out the test is 0.01 mg/m$^2$ or more, preferably 0.1 mg/m$^2$ or more, and more preferably 0.2 mg/m$^2$ or more, with respect to the surface area measured BET analysis in the nitrogen adsorption method. In the case where the amount is too small, the effect of the surface treatment becomes insufficient.

The test method for examining the elution amount in the invention is as follows.

[Test Method]

(1) 0.1 g of the positive electrode material for a lithium secondary battery is dissolved in a trimethylbenzene (which is sometimes referred to as TMB in this specification) solvent or an N-methylpyrrolidone (which is sometimes referred to as NMP in this specification) solvent to prepare a sample fluid.

(2) The sample fluid is allowed to stand at an ordinary temperature (25 $\pm$ 5°C) and an ordinary humidity (50 $\pm$ 15%RH) for 24 hours.

(3) A supernatant fluid of the sample fluid thus allowed to stand is recovered, and a content of the fullerene compound contained in the supernatant fluid is measured.

(4) The measured value is converted to a total elution amount of the sample fluid, and the converted value is divided by 0.1 g.

The measuring method of the content of the fullerene compound in the item (3) of the aforementioned test method is not particularly limited, and for example, it can be measured by evaporating the solvent of the supernatant fluid by drying and measuring the weight of the residue.

In the case where the content of the fullerene compound in the fullerene layer is previously known, the elution ratio (%) of the fullerene compound to the solvent can be calculated in such a manner that in the item (3) of the test method, the total elution amount in a prescribed amount (for example, 2 mL) of the trimethylbenzene solvent or an N-methylpyrrolidone solvent is calculated and then divided by the content of the fullerene compound. The elution ratio is preferably 80% or less, more preferably 50% or less, more preferably 40% or less, and particularly preferably 25% or less.

Other specific examples of the method for measuring the content of the fullerene compound contained in the supernatant fluid in the item (3) of the testmethod include a method by ultraviolet-visible absorption analysis. As a specific method of the ultraviolet-visible absorption analysis, for example, the supernatant fluid obtained in the item (3) of the test method is collected and the concentration of the eluted component is quantitatively determined by ultraviolet-visible absorption analysis. The concentration can be determined by previously preparing a calibration curve. The method by absorption analysis also has such an advantage that the change in molecular structure can be comprehended by the shape of the spectrum. For example, in the case where the concentration of the supernatant fluid is determined as 0.5 mg/mL, it can be determined that 1 mg of the component is eluted from the powder since the amount of the solvent is 2 mL, and the elution amount can be calculated as 10 mg/g since the weight of the positive electrode material for a lithium secondary battery is 0.1 g.

In this method, it is preferred that the amounts of positive electrode material for a lithium secondary battery and the solvent are determined in such a manner that the measurement can be easily carried out depending on the method of detection. The elution amount is finally calculated as an elution weight per unit weight of the positive electrode material for a lithium secondary battery, and therefore, there is no large influence on the measurement effect if the amounts of the positive electrode material for a lithium secondary battery and the solvent are changed. However, it is preferred that the amount of the solvent is as large as it can sufficiently dissolve the expected elution amount.

TMB or NMP is preferred as the solvent, other solvents may be used depending on necessity of the quantitative determination method. In this case, compensation is carried out taking the difference in solubility in TMB or NMP into consideration, whereby the effect of the invention can be ensured.

It is possible that solvents may be selected depending on the species of the fullerene compound used. For example, TMB is used in the case where the fullerene compound before crosslinking or chemically bonding is an unmodified fullerene (such as $C_{60}$ and $C_{70}$), a fullerene derivative having an alkyl group or a fullerene derivative having an aromatic group. NMP can dissolve $C_{60}$ and $C_{70}$ while it is a polar solvent, and thus NMP can be used as the solvent in the case where $C_{60}$ or $C_{70}$ is used as the fullerene compound before crosslinking or chemically bonding. NMP is preferably used in the case of a fullerene compound having a polar group.

A-5. Definition by X-ray Photoelectron Spectroscopy

In the case where at least one lithium-transition metal complex oxide selected from the group consisting of a lithium-cobalt complex oxide, a lithium-nickel complex oxide and a lithium-manganese complex oxide is used as the positive electrode active substance contained in the positive electrode material for a lithium secondary battery of the invention, it is preferred that the ratios of the peak area of the 2p orbital of the transition metal to the peak area of the 3p orbital of the transition metal, which are obtained by measuring the positive electrode material for a lithium secondary battery of the invention having the fullerene compound on the surface of the lithium-transition metal complex oxide and an elemental substance of the transition metal constituting the lithium-transition metal complex oxide, respectively, by the X-ray photoelectron spectroscopy, satisfy the following equation (a):

$$1.01 \leq Rs/Rm \leq 1.6 \qquad\qquad (a)$$

(In the equation (a), Rs represents the ratio (peak area of 3p orbital of transition metal) / (peak area of 2p orbital of transition metal) in the lithium-transition metal complex oxide contained in the positive electrode material for a lithium secondary battery, and Rm represents the ratio (peak area of 3p orbital of transition metal) / (peak area of 2p orbital of transition metal) in the elemental substance of the transition metal.)

There are cases where the measured peak of the 2p orbital or the measured peak of the 3p orbital of the transition metal is split due to the spin orbital interaction. In the case where the split width is sufficiently wide, and the split peaks can be processed as independent peaks, the peaks thus split (for example, 2p(3/2)) may be used.

In the X-ray photoelectron spectroscopy, the surface of the specimen is irradiated with a characteristic X-ray (such as Al K$\alpha$ and Mg k$\alpha$) as the primary light source, and photoelectrons emitted from the excited surface are detected with an energy spectroscope. The escape depth of photoelectrons is about 5 nm, and it is an effective means for detecting the information of the outermost surface of the specimen to be measured. The difference between the energy of the incident X-ray and the kinetic energy of the photoelectrons emitted from the surface of the specimen expresses the binding energy of the photoelectrons, and the binding energy is inherent to the species of the element and the orbital of the photoelectrons. The binding energy is slightly shifted depending on the species of the adjacent elements and the species of the chemical bonds. By using the X-ray photoelectron spectroscopy, the qualitative determination of the elements and the information about the chemical state can be obtained by the aforementioned phenomena. A relative composition of elements can be obtained by comparing the peak areas derived from the respective constitutional elements. In the invention, the relative proportion of the peak area of the 2p orbital and the peak area of the 3p orbital of the transition metal element on the surface of the lithium-transition metal complex oxide, on which the fullerene compound is present, is obtained, whereby the amount and the existence mode of the fullerene compound present on the surface.

Preferred measuring conditions for the X-ray photoelectron spectroscopy are as follows, but the invention is not limited thereto.

(1) General Measuring Conditions for X-ray Photoelectron Spectroscopy (Method using no Relative Sensitivity Compensation Coefficient)

(Measurement of Positive Electrode Material for Lithium secondary battery)

A double face adhesive tape is attached to a metallic plate, on which a positive electrode material for a lithium secondary battery is sprinkled to a thickness hiding the tape, and pressed to make a smooth surface. The resulting specimen is fixed to a holder and then subjected to measurement.

A monochromatic Al K$\alpha$ ray (14 kV, 150 W) is used as a light source for measurement, and the measurement is carried out under the following conditions. Upon measurement, an electron neutralization gun is used for charge compensation.

Pass energy: 29.35 eV
Data accepting interval: 0.125 eV/step
Measurement area: 0.8 mm in diameter
Withdrawing angle: 45°

The measurement is carried out for the 2p orbital and the 3p orbital of the transition metal constituting the lithium-transition metal complex oxide contained in the positive electrode material for a lithium secondary battery.

(Calculation Method of Peak Area of 3p Orbital and Peak Area of 2p Orbital)

A baseline is determined by connecting flat areas on both sides of a peak identified as the orbital, and an area over the baseline in the peak area is designated as the peak area.

The XPS measurement of the positive electrode material for a lithium secondarybatterywill be described in more detail below.

A double face adhesive tape is attached to a metallic plate, on which the positive electrode material for a lithium secondary battery is sufficiently sprinkled to a thickness hiding the tape, and pressed to make a smooth surface. Thereafter, the double sided adhesive tape having the positive electrode material for a lithium secondary battery attached thereto is fixed to a holder along with the metallic plate, and subjected to measurement.

A monochromatic A1 K$\alpha$ ray (14 kV, 150 W) is used as a light source for measurement. The measurement is carried out under the following conditions, and upon measurement, an electron neutralization gun is used for charge compensation. The reason why the charge compensation with an electron neutralization gun is necessary upon measurement is that the lithium-transition metal complex oxide contained in the positive electrode material for a lithium secondary battery is not a completely electroconductive specimen but is charged.

Pass energy: 29.35 eV
Data accepting interval: 0.125 eV/step
Measurement area: 0.8 mm in diameter
Withdrawing angle: 45°

The XPS measurement is carried out under the aforementioned conditions, and the measured peaks are peaks derived from the 2p orbital and the 3p orbital of the transition metal constituting the lithium-transition metal complex oxide contained in the positive electrode material for a lithium secondary battery.

It is a general procedure that Co is used as the transition metal element in the case where the lithium-transition metal complex oxide contained in the positive electrode material for a lithium secondary battery is a lithium-cobalt complex oxide, Ni is used as the transition metal in the case where it is a lithium-nickel complex oxide, and Mn is used as the transition metal in the case where it is a lithium-manganese complex oxide. The transition metal element has such an advantage that the measurement can be attained with high accuracy owing to the large amount thereof.

In the case where plural kinds of transition metals are contained in the lithium-transition metal complex oxide (for example, a lithium-nickel complex oxide with another transition metal, such as Co, as an additional element), the transition metal to be measured is appropriately selected under consideration of the peak areas derived from the existence ratio thereof and the independency of the peak with respect to the peak positions of the other element (such as lithium and oxygen).

After completing the XPS measurement, the start point and the end point of peak of the 2p orbital of the transition metal element, and the start point and the end point of the peak of the 3p orbital of the transition metal in the resulting raw data are determined, and the start point and the end point is connected by the Shirley method. The start point and the end point of the peak are positioned in the parts where the tail end of the peak becomes completely flat. In the case where the start point and the end point are positioned in the midway of the tail of the peak, there is such a possibility that the peak area cannot be accurately obtained. The start point and the end point thus determined are connected with a baseline by the Shirleymethod. The area surrounded by the baseline and the peak is obtained for the 2p orbital and the 3p orbital, respectively, and are designated as the peak areas derived from the 2p orbital and the 3p orbital, respectively.

In the invention, the ratio (peak area of 3p orbital of transition metal)/(peak area of 2p orbital of transition metal) in the lithium-transition metal complex oxide contained in the positive electrode material for a lithium secondary battery is represented by Rs. The ratio (peak area of 3p orbital of transition metal) / (peak area of 2p orbital of transition metal) in the elemental substance of the transition metal is represented by Rm. The ratio Rm can be measured by the aforementioned XPS measurement, in which the measurement specimen is changed from the positive electrode material for a lithium secondary battery to a metallic plate of the elemental substance of the transition metal having a clean surface.

In the invention, the ratio (Rs/Rm) of Rs and Rm preferably satisfies the following equation (a):

$$1.01 \leq Rs/Rm \leq 1.6 \tag{a}$$

The reason why Rs/Rm is preferably in the aforementioned range will be described below.

Photoelectrons are generated from the respective elements constituting the positive electrode material for a lithium secondary battery.

The peak area formed by photoelectrons generated by the transition metal constituting the lithium-transition metal complex oxide (the lithium-transition metal complex oxide having no fullerene compound present on the surface thereof) and the peak area formed by photoelectrons generated by the elemental substance of the transition metal are compared with each other as follows. The absolute value of the peak area derived from the 3p orbital, which does not contribute to the chemical bond, and the absolute value of the peak area derived from the 2p orbital in the transition metal are changed between the transition metal constituting the lithium-transition metal complex oxide and the elemental substance of the transition metal due to the difference in amount of the transition metal. However, the ration of the absolute value of the peak area derived from the 3p orbital and the absolute value of the peak area derived from the 2p orbital in the transition metal is constant in both the transition metal constituting the lithium-transition metal complex oxide and the elemental substance of the transition metal.

That is, in the elemental substance of the transition metal, the existence ratio of the transition metal is 100%, and the peak area derived from the 2p orbital and the peak area derived from the 3p orbital are strengthened. On the other hand, the transition metal constituting the lithium-transition metal complex oxide is one of the elements in the lithium-transition metal complex oxide and has an existence ratio of about 25%, and therefore, the peak area derived from the 2p orbital and the peak area derived from the 3p orbital are weakened. However, the ratio (Rm) of the peak area derived from the 3p orbital and the peak area derived from the 2p orbital of the elemental substance of the transition metal and the ratio (Rs) of the peak area derived from the 3p orbital and the peak area derived from the 2p orbital of the transition metal constituting the lithium-transition metal complex oxide (the lithium-transition metal complex oxide having no fullerene compound present on the surface thereof) have the same value. In other words, the ratio Rs/Rm is 1.

On the other hand, in the case where the fullerene compound is present on the surface of the lithium-transition metal complex oxide as in the positive electrode material for a lithium secondary battery of the invention, photoelectrons generated in the XPS measurement are scattered by the atoms derived from the fullerene compound, whereby the intensity of the photoelectrons (peak area) is generally attenuated. The extent of the attenuation is larger when the kinetic energy of the photoelectrons are lower. Therefore, in the case where the photoelectrons are scattered by the atoms derived from the fullerene compound, the intensity of the photoelectrons (peak area) derived from the 2p orbital of the transition metal suffers larger attenuation than the intensity of the photoelectrons (peak area) derived from the 3p orbital of the transition metal. Accordingly, in the case where the fullerene compound is present on the surface of the lithium-transitionmetal complex oxide, the value of Rs is increased. Since the extent of attenuation depends on the thickness of the fullerene layer formed with the fullerene compound, the ratio Rs/Rm in the equation (a) varies depending on the thickness of the fullerene layer. Therefore, it can be confirmed as to whether or not the surface of the lithium-transition metal complex oxide is treated with the fullerene compound in a favorable state by determining the ratio Rs/Rm.

Furthermore, because the escape depth of the photoelectrons is about 5 nm, in the case where the fullerene compound is unevenly distributed on the surface of the lithium-transition metal complex oxide to produce an area where the fullerene compound is not present and an area where the fullerene compound is attached in the form of mass on the surface of the lithium-transition metal complex oxide, no photoelectron from the transition metal element is detected from the surface having the fullerene compound attached thereto in the form of mass, and the area having no fullerene compound present thereon is mainly measured (the absolute intensity measured is of course lowered). Accordingly, upon applying the aforementioned evaluation method to the case where the fullerene compound is maldistributed by the nonuniform treatment, a measurement result indicating an incomplete treatment, and therefore, the aforementioned evaluation method has considerable value as a method for evaluating the uniformity of the surface treatment with the fullerene compound.

(2) Method using Relative Sensitivity Compensation Coefficient

An ordinary XPS equipment has such a function in outputting data that peak areas of elements to be measured and orbitals of the elements (measured untouched data, i.e., raw data) are divided by relative sensitivity compensation coefficients for the respective orbitals. The reason why the peak areas of elements to be measured and orbitals of the elements (measured untouched data, i.e., raw data) are divided by relative sensitivity compensation coefficients for the respective elements and the respective orbitals is that it is necessary to consider the difference in generation efficiency of photoelectrons in the respective elements and the respective orbitals of elements.

That is, the generation efficiency of photoelectrons is not constant among the respective elements and the respective orbitals of the elements, and for example, there is such a case that a photoelectron Als of an element A has a signal intensity of 100, whereas a photoelectron A2s of the same element A has a signal intensity of 50 (i.e., with lower generation efficiency). Furthermore, for example, in the case where elements A, B and C are present in the same element ratio, there is such a case that a photoelectron Als of the element A has a signal intensity of 100, whereas a photoelectron B1s of the element B has a signal intensity of 80 (i.e., with lower generation efficiency), and a photoelectron C1s of the element C has a signal intensity of 120 (i.e., with higher generation efficiency). The relative sensitivity ratio slightly varies depending on the measurement conditions and the models of the measurement equipments, and the manufacturers of the equipments provide unique values for the respective equipments as the relative sensitivity compensation coefficients.

In the method of the item (1), the ratio of the peak areas of the different orbitals (the 2p orbital and the 3p orbital) of the same transition metal is used in the measurement of the peak area, and the ratio with respect to the peak area of the elemental substance of the transition metal is obtained, whereby the difference in generation efficiency of photoelectrons and the difference depending on the measurement conditions and the measurement equipments are compensated. Therefore, the method of the item (1) has such an advantage that the measurement can be attained without the relative sensitivity compensation coefficient. However, the relative sensitivity compensation coefficients provided as the unique values for the respective equipments by the manufacturers of the equipments have high reliability, and therefore, it is expediently possible that the peak area of the 2p orbital obtained by the measurement (raw data) and the peak area of the 3p orbital obtained by the measurement (raw data) are processed with the relative sensitivity compensation coefficient determined depending on the X-ray photoelectron spectroscopes to obtain "compensated peak areas", which are used for evaluation.

As having been described, the relative sensitivity compensation coefficient is to compensate the generation efficiency of photoelectrons. For example, in the case where an elemental substance of a transition metal is measured, the existence amount of the transition metal does not vary in both cases where the target transition metal element is measured with the 3p orbital and the target transition metal element is measured with the 2p orbital because of the existence amount of the transition metal being 100%. Therefore, it is a general procedure that upon carrying out the XPS measurement, the measuring equipment compensates the peak area derived from the 3p orbital and the peak area derived from the 2p orbital to make them be equal to each other by using the relative sensitivity compensation coefficient. Herein, the relative sensitivity compensation coefficient for the peak derived from the 3p orbital of the transition metal is represented by $\alpha 3p$, and the relative sensitivity compensation coefficient for the peak derived from the 2p orbital of the transition metal is represented by $\alpha 2p$. In this case, the ratio of the compensatedpeak area derived from the 3p orbital of the transition metal element and the compensated peak area derived from the 2p orbital of the transition metal element is represented by RmC. The value RmC is expressed by the following equation:

$$RmC = ((\text{peak area of 3p orbital of transition metal (raw}$$

data))/$\alpha$3p)/((peak area of 2p orbital of transition metal

(raw data))/$\alpha$2p) = 1

The equation can be modified as follows:

RmC = 1 = ((peak area of 3p orbital of transition metal

(raw data)) /$\alpha$3p)/((peak area of 2p orbital of transition

metal (raw data))/$\alpha$2p) = ($\alpha$2p/$\alpha$3p) x Rm

Therefore, the following equation is established:

$$\alpha2p/\alpha3p = 1/Rm$$

Accordingly, the item Rs/Rm in the center of the equation (a) can be modified to the following equation (b):

$$1.01 \leq (\alpha2p/\alpha3p) \times Rs \leq 1.6 \qquad (b)$$

Rs represents the value of (peak area of 3p orbital of transition metal (raw data))/(peak area of 2p orbital of transition metal (raw data)) in the transition metal constituting the lithium-transition metal complex oxide. Therefore, the following equation is established:

($\alpha$2p/$\alpha$3p) x Rs = ((peak area of 3p orbital of transition

metal (raw data))/$\alpha$3p)/((peak area of 2p orbital of transition metal (raw data))/$\alpha$2p)

Accordingly, ($\alpha$2p/$\alpha$3p) x Rs in the equation (b) is the ratio of the "compensated peak area (A3p) of the 3p orbital of the transition metal" obtained by compensating the raw data of the peak area of the 3p orbital of the transition metal obtained by measuring the transition metal constituting the lithium-transition metal complex oxide with the relative sensitivity compensation coefficient, and the "compensated peak area (A2p) of the 2p orbital of the transition metal" obtained by compensating the raw data of the peak area of the 2p orbital of the transition metal obtained by measuring the transition metal constituting the lithium-transition metal complex oxide with the relative sensitivity compensation coefficient.
Consequently, the equation (b) can be modified to the following equation (c):

$$1.01 \leq A3p/A2p \leq 1.6 \qquad (c)$$

The measurement method corresponds to the procedure where the compensation operation using the ratio of Rm obtained by measuring the elemental substance of the transition metal and Rs obtained by measuring the transition metal constituting the lithium-transition metal complex oxide contained in the positive electrode material for a lithium secondary battery (i.e., the method of the item (1)) is replaced by the relative sensitivity compensation coefficient provided with the measuring equipment. The measurement method not only is more convenient that the method of the item (1), but also is sufficiently equivalent to the method of the item (1) upon considering the reliability of the measuring equipment.

(3) Method using Surface Element Ratio

As a more convenient and practical method, the following method can be exemplified in addition to the method of obtaining A3p/A2p of the transition metal constituting the lithium-transition metal complex oxide contained in the positive electrode material for a lithium secondary battery by using the relative sensitivity compensation coefficient as in the item (2).

In this method, the compensated peak area (A3p) of the 3p orbital of the transition metal and the compensated peak area (A2p) of the 2p orbital of the transition metal are divided, respectively, by the total value of the compensated peak areas of the respective elements constituting the positive electrode material for a lithium secondary battery. The method is to obtain the surface element ratio of the transition metal element by the 2p orbital of the transition metal and the surface element ratio of the transition metal element by the 3p orbital of the transition metal. The surface element ratio of the transition metal element by the 2p orbital of the transition metal and the surface element ratio of the transition metal element by the 3p orbital of the transition metal are expressed as follows:

(surface element ratio of transition metal element by 2p orbital of transition metal) = A2p/(total value of compensated peak areas of elements constituting positive electrode material for lithium secondary battery)

(surface element ratio of transition metal element by 3p orbital of transition metal) = A3p/(total value of compensated peak areas of elements constituting positive electrode material for lithium secondary battery)

In the method, the following equation is also established:

{A3p/ (total value of compensated peak areas of elements constituting positive electrode material for lithium secondary battery)}/{A2p/(total value of compensated peak areas of elements constituting positive electrode material for lithium secondary battery)} = A3p/A2p

Therefore, in the item A3p/A2p in the equation (c), the numerator and the denominator are divided, respectively, by "the total value of the compensated peak areas of the respective elements present in the positive electrode material for a lithium secondary battery", and thus "the total value of the compensated peak areas of the respective elements present in the positive electrode material for a lithium secondary battery" is counteracted by each other. Accordingly, this method can provide such results that are substantially equivalent to the method of the item (2), and furthermore to the method of the item (1). The method has such an advantage that the method is more convenient that the method of the item (2).

(4) Summary

The measurement method of XPS in the invention that is convenient with high reliability is the use of the method of the item (2) or (3). These methods can be summarized as follows.

In the case where the positive electrode material for a lithium secondary battery containing the lithium-transition metal complex oxide is measured by the X-ray photoelectron spectroscopy,
the ratio of A2p andA3p is expressed by the following equation (d):

$$1.01 \leq A3p/A2p \leq 1.6 \qquad\qquad (d)$$

wherein A2p represents the compensated peak area obtained by compensating the peak area of the 2p orbital of the transition metal constituting the lithium-transition metal complex oxide with the relative sensitivity compensation coefficient, and

A3p represents the compensated peak area obtained by compensating the peak area of the 3p orbital of the transition metal constituting the lithium-transition metal complex oxide with the relative sensitivity compensation coefficient.

B. Process for producing Positive Electrode Material for Lithium secondary battery

The process for producing the positive electrode material for a lithium secondary battery used in the invention is not particularly limited as far as the aforementioned embodiments can be attained.

As an example of the process for producing the positive electrode material for a lithium secondary battery used in the invention, a process for producing a positive electrode material for a lithium secondary battery having a fullerene compound is present in a monomolecular form or an aggregated form of molecules on a surface of a positive electrode active substance as in the Embodiment 1 (hereinafter, the production process is sometimes referred to as "Production Process 1") will be described below.

Subsequently, a process for producing a positive electrode material for a lithium secondary battery according to the Embodiments 2 to 4 (hereinafter, the production process is sometimes referred to as "Production Process 2") will be described. The Production Process 2 relates to a process for producing a positive electrode material for a lithium secondary battery having a fullerene compound with spherical shell structures thereof crosslinked with each other through at least one atom, a process for producing a positive electrode material for a lithium secondary battery having a fullerene compound with a spherical shell structure thereof chemically bonded to a surface of a positive electrode active substance through at least one atom, or a process for producing a positive electrode material for a lithium secondary battery having a fullerene compound with spherical shell structures thereof crosslinked with each other through at least one atom and the spherical shell structures of the fullerene compound being chemically bonded to a surface of a positive electrode active substance through at least one atom.

The positive electrode material for a lithium secondary battery of the Embodiment 5 is a combination of the Embodiments 1, 2 and 3, and therefore, the production process thereof may be obtained by appropriately combining the following Production Process 1 and Production Process 2. For example, the Production Process 2 is carried out, and the Production Process 1 is carried out.

B-1. Production Process 1

In the Production Process 1, the fullerene compound is made present on the surface of the positive electrode active substance.

Examples of the method for making the fullerene compound present on the surface of the positive electrode active substance include such various methods as a gas phase process, in which the fullerene compound in a gas state is made present on the positive electrode active substance, a liquid phase process, in which the fullerene compound and the positive electrode active substance are dissolved or dispersed in a solvent to make present on the surface of the positive electrode active substance, and a solid phase process, in which the fullerene compound in a sold state is made in contact with the positive electrode active substance in a solid state to effect surface modification. Among these methods, the most convenient method is the liquid phase process.

(1) Liquid Phase Process

Specific examples of the liquid phase process include such a method that a solution having the fullerene compound dissolved therein is mixed with the positive electrode active substance, and after stirring for a prescribed period of time, the solution is removed by decantation, followed by drying, to obtain processed powder. In this method, the fullerene compound adsorbed to the surface of the positive electrode active substance is basically molecules treating the surface of the positive electrode active substance while depending on the extent of the removal of the solution by decantation. Amonomolecular adsorption layer can be relatively easily formed by adsorption of the molecules from the solution, and the surface nature can be significantly effectively modified even with an extremely small amount of the fullerene present on the surface of the positive electrode active substance.

Other specific examples of the liquid phase process include such a method that a solution having the fullerene compound dissolved therein is put into the positive electrode active substance in an amount providing a desired surface treatment rate, and after stirring, the solvent is removed by evaporation to obtain processed powder. In this method, the fullerene compound thus put is entirely used for the surface treatment of the positive electrode active substance to provide such an advantage that the amount of the fullerene compound present on the surface of the positive electrode active substance can be easily controlled. It is also convenient from the standpoint of process since the positive electrode active substance to be treated and the solution of the fullerene compound are simply put in a vessel, followed by drying as they are. In this method, it is preferred that the system is adjusted under consideration of the species of the solvent, the drying conditions, the concentration of the fullerene compound, the total amount of the fullerene compound with respect to the positive electrode active substance, and the like. This is because there are cases where the fullerene compound is separately precipitated, and after the treatment, an excessive fullerene compound is deposited in a large amount on the surface of the positive electrode active substance.

Specific examples of the liquid phase process in the case where the positive electrode active substance is in a powder form also include the so-called spray drying method, in which the positive electrode active substance in a powder form is mixed by spraying in a solution having the fullerene compound dissolved therein or a dispersion liquid having the fullerene compound dispersed therein, followed by drying. This method can reduce the necessary amount of the solvent and can be carried out as a continuous process, and thus it is excellent in productivity.

The solvent used in the liquid phase process is not particularly limited and is preferably a solvent capable of dissolving the fullerene compound. Examples of the solvent include an aromatic compound, such as benzene, toluene, xylene and trimethylbenzene, dipehnylsulfide, N-methyl-2-pyrrolidone, N,N-dimethylacetamide, N,N-dimethylformamide, N-methylacetamide, N-methylformamide, formamide, tetramethylenesulfoxide, tetramethylenesulfone and dimethylsulfoxide. It is of course possible that plural kinds of the solvent may be used in combination.

The concentration of the fullerene compound in the solvent used in the liquid phase process is not particularly limited and is preferably within the solubility of the fullerene compound in the solvent used. Specifically, the concentration is generally 0.01 mg/mL or more, and preferably 0.1 mg/mL or more, and is generally 100 mg/mL or less, preferably 50 mg/mL or less, and more preferably 20 mg/mL or less.

In the liquid phase process, upon making the positive electrode active substance into contact with the solution having the fullerene compound dissolved therein or the solvent having the fullerene compound dispersed therein (for example, the positive electrode active substance is put in the solution having the fullerene compound dissolved therein, followed by stirring), the contact time is not particularly limited, and it is generally 5 minutes or more, preferably 10 minutes or more, and more preferably 15 minutes or more, and is generally 3 hours or less, and preferably 1 hour or less. The temperature upon contact is also particularly not limited, and it is generally 0°C or more, and preferably 20°C or more, and is generally 100°C or less. In the case where the contact operation with the fullerene compound and the solvent is carried out at a temperature equal to or higher than the boiling point of the solvent, in which the fullerene compound is dissolved or dispersed, the operation may be carried out under sealing.

In the case where, in liquid phase process, the solvent is removed after making the positive electrode active substance into contact with the solution having the fullerene compound dissolved therein (for example, the positive electrode active substance is put in the solution having the fullerene compound dissolved the rein, followed by stirring), the temperature upon removing is not particularly limited, and it is generally 20°C or more, and preferably 50°C or more, and is generally 200°C or less, and preferably 180°C or less. The period of time for removing is not limited, and it is generally 10 minutes ormore, and preferably 20 minutes or more, and is generally 12 hours or less, preferably 10 hours or less, and more preferably 7 hours or less.

Other specific examples of the liquid phase process include such a method that an active substance layer (details thereof will be described later) containing the positive electrode active substance is formed on a current collector (details thereof will be described later), and the solution having the fullerene compound dissolved therein or the solvent having the fullerene compound dispersed therein is coated on the surface of the active substance layer to make the fullerene compound present on the surface of the active substance and in the active substance layer, followed by evaporating the solvent. In this method, only the surface of the positive electrode active substance, which is actually in contact with the electrolyte solution, is treated with the fullerene compound, and thus the safety on float charging can be ensured with a small treating amount. The treatment is effected substantially only on the surface of the active substance because the surface area of the active substance is overwhelmingly larger than the surface area of the current collector and the surface area of the binder in the active substance layer, and it is also possible to control that only the surface of the positive electrode active substance can be further effectively treated by appropriately selecting the solvent in connection with the surface tension.

Upon carrying out the liquid phase process, the solvent, in which the fullerene compound is dissolved or dispersed, is not particularly limited, and is preferably those that do not dissolve the components contained in the active substance layer. Examples of the solvent include an aromatic compound, such as benzene, toluene, xylene and trimethylbenzene, diphenylsulfide, tetramethylenesulfoxide, tetramethylenesulfone and dimethylsulfoxide. It is of course possible that plural kinds of the solvent may be used in combination.

The concentration of the fullerene compound in the solvent used in the liquid phase process is not particularly limited and is preferably within the solubility of the fullerene compound in the solvent used. Specifically, the concentration is generally 0.01 mg/mL or more, and preferably 0.1 mg/mL or more, and is generally 100 mg/mL or less, preferably 50 mg/mL or less, and more preferably 20 mg/mL or less.

In the case where the solution having the fullerene compound dissolved therein or the dispersion liquid having the fullerene compound dispersed in a solvent is coated on the surface of the active substance layer in the liquid phase process, such a method may be appropriately used as a method of dropping liquid droplets, a spray coating method and a die coating method.

In the liquid phase process, the solution having the fullerene compound dissolved therein or the dispersion liquid having the fullerene compound dispersed in a solvent infiltrates into the active substance layer after coating, and the period of time necessary for the infiltration is generally 1 second or more, preferably 5 seconds or more, and more preferably 10 seconds or more, and is generally 5 minutes or less, preferably 3 minutes or less, and more preferably 1 minute or less. After completing the infiltration step, the solvent may be removed. The temperature upon removal is not particularly limited, and it is generally 20°C or more, and preferably 50°C or more, and is generally 200°C or less, and preferably 180°C or less. The period of time for removing is not particularly limited, and it is generally 10 minutes or more, and preferably 20 minutes or more, and is generally 12 hours or less, preferably 10 hours or less, and more preferably 5 hours or less.

(2) Solid Phase Process

Specific examples of the solid phase process for the case where the positive electrode active substance is in a powder form include such a method that the positive electrode active substance is mixed with the fullerene compound in a fine particle form and stirring and shearing at high speed to make the fullerene compound present on the surface of the positive electrode active substance. The method can be classified depending on the stirring method into the jet-mill method, in which the particles are made collide with each other in airflow, and a planetary stirring method, in which powder having a relatively high density is strongly stirred with blades.

(3) Gas Phase Process

Specific examples of the gas phase process for the case where the positive electrode active substance is in a powder form include the so-called vacuum deposition method, in which the fullerene compound is sublimated by heating preferably in vacuum and accumulated on the surface of the positive electrode active substance disposed as opposite thereto.

B-2. Production Process 2

In the Production Process 2, for example, after making the fullerene compound present on the surface of the positive electrode active substance, the fullerene layer may be formed by crosslinking or chemically bonding, and a part or the whole of the fullerene compound may be previously crosslinked and then made present on the surface of the positive electrode active substance.

The process for producing a positive electrode material for a lithium secondary battery according to the Production Process 2 is a process for producing a positive electrode material for a lithium secondary battery, the positive electrode material having a positive electrode active substance having on a surface thereof a fullerene layer containing a fullerene compound, characterized by having:

a fullerene compound supporting step of making the fullerene compound present on the surface of the positive electrode active substance; and
at least one step of: a crosslinking step of crosslinking spherical shell structures of the fullerene compound through at least one atom; and a chemically bonding step of chemically bonding a spherical shell structure of the fullerene compound to the surface of the positive electrode active substance through at least one atom. The steps will be described in detail below.

(1) Fullerene Compound Supporting Step

In the fullerene compound supporting step, the fullerene compound is made present on the surface of the positive electrode active substance. As the positive electrode active substance and the fullerene compound, those that are the same as in the aforementioned positive electrode material for a lithium secondary battery can be used.

The method for making the fullerene compound on the surface of the positive electrode active substance is not particularly limited as far as the fullerene compound can be present uniformly on the surface of the positive electrode active substance. For example, the liquid phase process, the solid phase process and the gas phase process as in the Production Process 1 can be used.

(2) Crosslinking Step or Chemically Bonding Step

The Production Process 2 has at least one of the crosslinking step and the chemically bonding step. These steps may be carried out sequentially, or these steps may be carried out simultaneously. In the case where they are carried out sequentially, the order thereof is not particularly limited. In the case where they are carried out simultaneously, for example, it is possible that these steps are carried out simultaneously under the same heating treatment conditions. The respective steps will be described below.

(Crosslinking Step)

In the crosslinking step, the spherical shell structures of the fullerene compound present on the surface of the positive electrode active substance are crosslinked through at least one atom.

In the case where the fullerene compound made present in the aforementioned fullerene compound supporting step does not have a crosslinking functional group, the fullerene compound can be crosslinked by making in contact with a compound having a crosslinking functional group (hereinafter, referred to as an addition reaction).

Examples of the compound for effecting the addition reaction include a compound having oxygen, sulfur and at least two crosslinking functional groups. From the standpoint of reactivity, a compoundhavingoxygen, sulfur and at least two crosslinking functional groups at the ends thereof is preferred.

Examples of the crosslinking functional group include a mercapto group, an amino group, a carboxyl group, an isocyanate group, an epoxy group, a vinyl group and an acrylic group. These functional groups may be used solely or in combination of two or more kinds of them.

The compound having at least two crosslinking functional groups preferably has a low molecular weight for improving the surface treating effect of the fullerene compound, and specifically, the molecular weight thereof is preferably 40 or more, and particularly preferably 50 or more, and is preferably 200 or less, and particularly preferably 100 or less. In the case where the molecular weight is in the range, the distance between the fullerene compounds or the distance between the fullerene compound and the substrate bonded thereto is shortened to make a fullerene layer having a dense structure.

Specific examples of the method for crosslinking by the addition reaction include such a method that a divalent amine, such as diaminopropylene, is made in contact with fullerene in a gas phase to effect crosslinking through chemical reaction between the amine and fullerene. Other examples thereof include such a method that oxygen is added to fullerene by heat oxidation, contact with ozone or treatment with an oxidative substance, so as to effect crosslinking by an ether bond.

Among these, the method of crosslinking the spherical shell structures of the fullerene compound through an ether bond containing an oxygen atom is preferred since industrial production can be easilymade.

In the case where the fullerene compound originally has a crosslinking functional group, on the other hand, it can be crosslinked through the bonding reaction of the groups. The reaction by contacting a compound having a crosslinking functional group may further be used in combination.

Examples of the crosslinking functional group contained in the fullerene compound include a sulfur atom, an oxygen atom, a hydroxyl group, a mercapto group, an amino group, a carboxyl group, an isocyanate group, a vinyl group and an acrylic group.

Specific examples of the method for crosslinking by the bonding reaction include such a method that the fullerene compound having a hydroxyl group is crosslinked by a condensation reaction, and in this method, a dehydration reaction of the hydroxyl groups of the fullerene compounds adjacent to each other is effected to crosslink them through an ether bond. The fullerene compound having a hydroxyl group is preferably a fullerene compound obtained by bonding a hydroxyl group directly to $C_{60}$ or $C_{70}$.

The number of the hydroxyl groups in one molecule of the fullerene compound is generally 2 or more, preferably 4 or more, and more preferably 6 or more. In the case where the number of the hydroxyl groups is too small, the number of the crosslinking bonds is small, whereby there are some cases where the sufficient elution suppression effect of the fullerene compound cannot be obtained. The number of the hydroxyl groups is generally 70 or less, preferably 36 or less, and more preferably 20 or less. In the case where the number of the hydroxyl groups is too large, the spherical shell structure of the fullerene compound is instabilized, and the electron state is changed, whereby there are some cases where the surface treatment effect of the fullerene compound is lost depending on purposes. A large number of sites, to which hydroxyl groups are introduced, are present in the fullerene compound, and the hydroxyl groups may be randomly bonded to the carbon atoms constituting the spherical shell structure of the fullerene compound. It is preferred that the hydroxyl groups are uniformly present.

There are cases where the number of hydroxyl groups introduced is different depending on the fullerene compound, but such a state causes no problem. It is preferred that the number of introduction is distributed in a narrow range with the average value as the center.

The crosslinking step can be effected by a heat treatment (which includes thermal oxidation in some cases), an ultraviolet ray irradiation treatment, an electron beam irradiation treatment and the like, and the heat treatment is preferred owing to the simpleness thereof.

The heating temperature is generally 60°C or more, preferably 100°C or more, more preferably 120°C or more, and most preferably 200°C or more, while it depends on the treating conditions. In the case where thermal oxidation is effected, the temperature is generally 0°C or more, preferably 100°C or more, more preferably 250°C ormore, andmostpreferably300°Cormore. This is because there are some cases where the crosslinking cannot be sufficiently effected when the temperature is too low. The temperature is generally 1, 500°C or less, preferably 1,000°C or less, more preferably 500°C or less, and most preferably 400°C or less. In the case where the temperature is too high, there are some cases where the spherical shell structure of the fullerene compound is broken, and the fullerene compound is burnt out when thermal oxidation is effected.

The period of time for heating is generally 1 minute or more, preferably 10 minutes or more, more preferably 30 minutes or more, and most preferably 1 hour or more, while it varies depending on the treating conditions. This is because there are some cases where the crosslinking cannot be sufficiently effected when the period is too short. The period of time is generally 24 hours or less, preferably 12 hours or less, more preferably 6 hours or less, and most preferably 4 hours or less. In the case where the period is too long, there are some cases where the spherical shell structure of the fullerene compound is broken, and the fullerene compound is burnt out when thermal oxidation is effected, whereby the production efficiency is deteriorated.

The atmosphere thereon is preferably an inert atmosphere. Examples of the inert atmosphere include nitrogen, a rare gas and vacuum, and preferably nitrogen and vacuum. In the case where thermal oxidation is effected, air or oxygen is used. The pressure is generally $10^{-5}$ atm or more, while it varies depending on the treating conditions. The pressure is preferably as low as pos sible when a vacuum atmosphere is used, and under consideration of productivity, such a range that can be depressurized by an ordinary oil rotary pump or aspirator is practically used. The pressure is generally 10 atm or less, preferably 1.1 atm or less, and more preferably 1 atm or less. This is because there are some cases where removal of water thus dehydrated is delayed or becomes insufficient when the pressure is too high.

The oxygen pressure upon effecting thermal oxidation is generally $10^{-5}$ atm or more, preferably $10^{-3}$ atm or more, more preferably 0.1 atm or more, and most preferably the atmospheric pressure, while it varies depending on the treating conditions. This is because in the case where the oxygen pressure is too low, there are some cases where oxidation cannot proceed sufficiently, whereby the fullerene compound is not crosslinked, or the crosslinking rate is lowered to deteriorate the productivity. The pressure is generally 10 atm or less, preferably 1 atm or less, more preferably 0.3 atm or less, and most preferably the oxygen partial pressure in the air (about 0.2 atm). This is because it is necessary to consider the explosion safety and the production equipments in the case where the oxygen pressure is too high.

It is preferred in the positive electrode material for a lithium secondary battery thus obtained that the bonding group containing at least one atom for bonding the spherical shell structures of the fullerene compound is an oxygen atom.

(Chemically Bonding Step)

In the chemically bonding step, the spherical shell structure of the fullerene compound present on the surface of the positive electrode active substance is chemically bonded to the positive electrode active substance through at least one atom.

As the method for chemically bonding, the same procedures as described for the crosslinking step can be used.

Specifically, in the case where the fullerene compound present in the fullerene compound supporting step or the positive electrode active substance does not originally have a chemically bonding functional group, the chemical bonding can be effected by making the fullerene compound or the positive electrode active substance into contact with a compound having a chemically bonding functional group.

In the case where the fullerene compound or the positive electrode active substance originally has a chemically bonding functional group, the chemical bonding can be effected by bonding reaction of these groups or by an addition reaction in combination.

The compound for making in contact therewith for effecting the addition reaction is not particularly limited as far as it is a compound having at least two chemically bonding functional groups. Examples of the chemically bonding functional group include a mercapto group, an amino group, a carboxyl group and an isocyanate group. These functional groups may be used solely or in combination of two or more kinds of them.

The compound having the functional group preferably has a low molecular weight for improving the surface treating effect of the fullerene compound, and specifically, the molecular weight thereof is preferably 40 or more, and particularly preferably 50 or more, and is preferably 200 or less, and particularly preferably 100 or less. In the case where the molecular weight is in the range, the distance between the fullerene compounds or the distance between the fullerene compound and the substrate bonded thereto is shortened to make a fullerene layer having a dense structure.

Such a method also can be exemplified that oxygen is added to the fullerene compound or the positive electrode active substance by effecting thermal oxidation, contact with ozone or treatment with an oxidative substance to make chemical bonding through an ether bond, and among these, thermal oxidation is preferably used.

Examples of the method for chemically bonding through bonding reaction include such a method that condensation reaction (dehydration reaction) of the fullerene compound and the positive electrode active substance having a hydroxyl group is effected to make chemical bonding through an ether bond. Preferred examples of the fullerene compound having a hydroxyl group is the same as those described in the crosslinking reaction.

The chemically bonding step can be effected by a heat treatment (which includes thermal oxidation in some cases), an ultraviolet ray irradiation treatment, an electron beam irradiation treatment and the like, and the heat treatment is preferred owing to the simpleness thereof. The preferred treating conditions are the same as those described for the crosslinking step.

It is preferred in the positive electrode material for a lithium secondary battery thus obtained that the bonding group containing at least one atom for bonding the spherical shell structures of the fullerene compound is an oxygen atom.

C. Positive Electrode for Lithium secondary battery and Lithium secondary battery

In the invention, the safety of the lithium secondary battery is improved by using the positive electrode material for a lithium secondary battery having the fullerene compound present on the surface of the positive electrode active substance and by mutually acting the fullerene compound and the positive electrode active substance.

A positive electrode for a lithium secondary battery containing the positive electrode material for a lithium secondary battery (in this specification, the positive electrode material for a lithium secondary battery is sometimes simply referred to as a positive electrode material), and a lithium secondary battery using the positive electrode will be described below.

The positive electrode of the invention is formed by using the positive electrode material and is generally produced by forming an active substance layer containing the positive electrode material on a current collector.

The positive electrode can be produced by preparing a dispersed coating composition of the positive electrode material using a solvent capable of dissolving a binder and the like, and coating the coating composition on a current collector, followed by drying.

The proportion of the positive electrode active substance in the active substance layer is generally 10% by weight or more, more preferably 30% by weight or more, and more preferably 50% by weight or more, and is generally 99% by weight or less, and preferably 98% by weight or less. In the case where the amount of the active substance is too large, there is such a tendency that the mechanical strength of the electrode is deteriorated, and in the case where it is too small, there is such a tendency that the battery performance, such as the capacity, is deteriorated.

It is necessary that the binder used in the active substance layer is stable to the electrolyte solution and the like, and various materials are used from the standpoint of weather resistance, chemical resistance, heat resistance, flame resistance and the like. Specific examples thereof include an inorganic compound, such as silicate and glass; an alkane polymer, such as polyethylene, polypropylene and poly-1,1-dimethylethylene; an unsaturated polymer, such as polybutadiene and polyisoprene; a polymer having a cyclic structure in the polymer chain, such as polystyrene, polymethylstyrene, polyvinylpyridine and poly-N-vinylpyrrolidone; and a cellulose compound, such as methyl cellulose and carboxymethyl cellulose.

Other specific examples thereof include an acrylic derivative polymer, such as polymethyl methacrylate, polyethyl methacrylate, polybutyl methacrylate, polymethyl acrylate, polyethyl acrylate, polyacrylic acid, polymethacrylicacidand polyacrylamide; a fluorine resin, such as polyvinyl fluoride, polyvinylidene fluoride and polytetrafluoroethylene; a CN group-containing polymer, such as polyacrylonitrile and polyvinyldene cyanide; a polyvinyl alcohol polymer, such as polyvinyl acetate and polyvinyl alcohol; a halogen-containing polymer, such as polyvinyl chloride and polyvinylidene chloride; and an electroconductive polymer, such as polyaniline.

A mixture, a modified product, a derivative, a random copolymer, an alternating copolymer, a graft copolymer and a block copolymer of the aforementioned polymers may be used. The weight average molecular weight of the resin is generally 10,000 or more, and preferably 100, 000 or more, and is generally 3, 000, 000 or less, and preferably 1,000,000 or less. The weight average molecular weight is too small, there is such a tendency that the strength of the coated film is lowered. In the case where it is too large, on the other hand, there are such cases that the coating composition for forming a positive electrode is increased in viscosity to make the formation of the electrode difficult. Preferred examples of the binder resin include a fluorine resin and a CN group-containing polymer, and more preferably polyvinylidene fluoride.

The using amount of the binder is generally 0.1 part by weight or more, and preferably 1 part by weight or more, and is generally 30 parts by weight or less, preferably 20 parts by weight or less, and more preferably 10 parts by weight or less, per 100 parts by weight of the positive electrode active substance. In the case where the amount of the binder is too small, there is such a tendency that the strength of the active substance layer is lowered, and in the case where the amount of the binder is too large, there is such a tendency that the capacity of the battery is lowered.

The active substance layer may contain, depending on necessity, an electroconductive material, such as acetylene black and Ketjen black, an additive exerting various functions, such as a reinforcing material, powder and a filler.

Examples of the solvent used upon forming the active substance layer include N-methylpyrrolidone and dimethylformamide, and preferably N-methylpyrrolidone. The concentration of the solvent in the coating composition is more than 10% by weight, generally 20% by weight or more, preferably 30% by weight or more, and more preferably 35% by weight or more. The upper limit thereof is generally 90% by weight or less, and preferably 80% by weight or less. In the case where the solvent concentration is too small, there are some cases where coating is difficultly carried out, and in the case where it is too large, there are some cases where the thickness of the coated film is difficult to increase, and the stability of the coating composition is deteriorated.

An ordinary dispersing machine can be used for dispersing the coating composition, and a planetarymixer, a ball mill, a sand mill, a biaxial kneading machine and the like may be used.

The coating machine for coating the coating composition on the current collector is not particularly limited, and preferred examples thereof include a slide coater, an extrusion type die coater, a reverse roll, a gravure coater, a knife coater, a kiss coater, a microgravure coater, a rod coater and a blade coater, preferably a die coater, a blade coater and a knife coater, and most preferably an extrusion type die coater under consideration of the viscosity of the coating composition and the thickness of the coated film, and a blade coater from the standpoint of convenience.

After coating the coating composition on the current collector, the coated film is dried, for example, at a temperature of 120°C for a period of about 10 minutes to form the active substance layer.

The thickness of the active substance layer is generally 10 μm or more, and more preferably 20 μm or more, and is generally 200 μm or less, and preferably 150 μm or less. In the case where the thickness of the active substance layer is too thin, the capacity of the battery is too small. In the case where it is too thick, on the other hand, the rate characteristics are lowered.

Examples of the material for the current collector used in the positive electrode generally include a metal, such as aluminum, copper, nickel, tin and stainless steel, and an alloy of the metals. In this case, aluminum is generally used as the current collector of the positive electrode. The shape of the current collector is not particularly limited, and examples thereof include a plate form and a mesh form. The thickness of the current collector is generally 1 or more, and is generally 50 μm or less, and preferably 30 μm or less. In the case where it is too thin, the mechanical strength is lowered, but in the case where it is too thick, the size of the battery is increased, and the space occupied by the current collector in the battery is increased, so as to decrease the energy density of the battery.

The lithium secondary battery of the invention generally has, in addition to the aforementioned positive electrode, battery elements including a negative electrode and an electrolyte solution, and has such a conformation that the battery elements are housed in a housing.

The negative electrode is generally produced by forming, on a current collector, an active substance layer containing a negative electrode active substance capable of absorbing and releasing Li, a binder, and depending on necessity, an additive, such as an electroconductive agent. As the binder, the additive and the production process of the active substance layer, the same materials and the same process as described for the positive electrode can be used.

A carbonaceous substance is generally used as the negative electrode active substance. Examples of the carbonaceous substance include a graphite material, such as graphite; carboniferous coke and petroleum coke; a carbide of carboniferous pitch or petroleum pitch, or a carbide of pitch having been subjected to an oxidation treatment; needle coke, pitch coke, and a carbide of a phenol resin or crystalline cellulose. Examples thereof also include a carbon material obtained by partially graphitizing the aforementioned carbonaceous substances, furnace black, acetylene black and pitch carbon fibers.

Among the carbonaceous substances, coke and a graphite material, such graphite, are preferred, and a graphite material, such as graphite, is particularly preferred owing to the large capacity thereof.

Examples of the graphite material include graphite powder, such as artificial graphite and natural graphite, and a purified product thereof, a graphitized product of electroconductive carbon black, such as acetylene black and Ketjen black, and carbon fibers, such as vapor phase growth carbon fibers. All the graphite materials may be used, and artificial graphite or natural graphite is preferred from the standpoint of capacity. Artificial graphite is particularly preferred since the battery performance can be easily controlled.

The graphite material may be subjected to an amorphous treatment on the surface thereof.

The average particle diameter of the graphite material is generally 1 μm or more, and preferably 5 μm or more, and is generally 45 μm or less, preferably 35 μm or less, and more preferably 25 μm or less. In the case where the average particle diameter is too small, the specific surface area of the graphite material is increased, whereby the irreversible capacity is increased to lower the battery capacity. In the case where the average particle diameter is too large, on the other hand, the thickness of the active substance layer is restricted, whereby it is difficult to form a uniform active substance layer on the substrate.

The specific surface area of the graphite material is generally 0.1 $m^2/g$ or more, preferably 0.3 $m^2/g$ or more, and more preferably 0.5 $m^2/g$ or more. In the case where the specific surface area is too small, the rate characteristics of the battery are deteriorated. The specific surface area of the graphite material is generally 30 $m^2/g$ or less, preferably 20 $m^2/g$ or less, and more preferably 10 $m^2/g$ or less. In the case where the specific surface area is too large, the initial efficiency of the battery is lowered. The measurement of the specific surface area is attained by the BET method.

In the invention, a fullerene compound may be present on the surface of the negative electrode active substance. For example, in the case where a carbonaceous substance is used as the negative electrode active substance, fullerene or a fullerene derivative may be present in a monomolecular form or an aggregated form of plural molecules on the surface of the negative electrode active substance. Furthermore, for example, a fullerene compound is made present on the surface of the carbonaceous substance used as the negative electrode active substance, and the spherical shell structures of the fullerene compound may be crosslinked through at least one atom. Moreover, for example, a fullerene compound is made present on the surface of the carbonaceous substance used as the negative electrode active substance, and the spherical shell structure of the fullerene compound is chemically bonded to the carbonaceous substance through at least one atom.

The fullerene compound, the bonding group, and the relationship between the fullerene compound and the negative electrode active substance may be the same as those described for the positive electrode active substance.

In the case where the fullerene compound is made present on the surface of the negative electrode active substance, for example, the initial efficiency of the battery can be improved.

As the current collector used as the negative electrode, various materials that cause no electrochemical problem, such as elution, and can function as a current collector of a battery can be used, and in general, a metal and an alloy, such as copper, nickel and stainless steel, are used. Copper is preferably used. Examples of the shape of the current collector include a plate form and a mesh form. The thickness of the current collector is generally 0.1 μm or more, and preferably 1 μm or more, and is generally 100 μm or less, preferably 30 μm or less, and more preferably 20 μm or less. In the case where it is too thin, the mechanical strength is lowered, but in the case where it is too thick, the space occupied thereby in the battery is increased to lower the energy density of the battery.

The electrolyte solution used in the lithium secondary battery is generally formed by dissolving a lithium salt as a supporting electrolyte in a nonaqueous solvent.

As the nonaqueous solvent, a solvent having a relatively high dielectric constant is preferably used. Specific examples thereof include a cyclic carbonate compound, such as ethylene carbonate and propylene carbonate, a non-cyclic carbonate, such as dimethyl carbonate, diethyl carbonate and ethylmethyl carbonate, a glyme compound, such as tetrahydrofuran, 2-methyltetrahydrofuran and dimethoxyethane, a lactone compound, such as γ-butyrolactone, a sulfur compound, such as sulfolane, and a nitrile compound, such as acetonitrile. The nonaqueous solvent may be used in combination of plural kinds thereof.

The nonaqueous solvent preferably has a viscosity of 1 mPa·s or more.

Examples of the lithium salt as the supporting electrolyte contained in the electrolyte solution include $LiPF_6$, $LiAsF_6$, $LiSbF_6$, $LiBF_4$, $LiClO_4$, LiI, LiBr, LiCl, LiAlCl, $LiHF_2$, LiSCN and $LiSO_3CF_2$. Among these, $LiPF_6$ and $LiClO_4$ are particularly preferred. The content of the supporting electrolyte in the electrolyte solution is generally from 0.5 to 2.5 mole/L.

Various kinds of additives may be added to the electrolyte solution for improving the performance of the battery depending on necessity.

The electrolyte solution is present in the positive electrode and the negative electrode and between the positive electrode and the negative electrode, and it is preferred that a support (separator), such as a porous film, is inserted between the positive electrode and the negative electrode for preventing the positive electrode and the negative electrode from forming short circuit. As the porous film, a film formed of a polymer resin and a thin film formed of powder and a binder are preferably used, and a porous film formed of polyethylene, polypropylene or the like is more preferred.

The battery elements including the positive electrode, the negative electrode and the electrolyte solution are housed in a housing. Examples of the battery element include a wound accumulated body, which is obtained by accumulating the positive electrode and the negative electrode through an electrolyte solution layer, an accumulated body obtained by accumulating the positive electrode and the negative electrode through an electrolyte solution layer in a flat plate form, and an accumulated body obtained by accumulating plural pieces of the battery elements obtained by accumulating in a flat plate form.

Examples of the housing, in which the battery elements are housed, include a metallic can for a coin cell and a dry battery, and a housing having shape variability. Any of the housings may be used in the invention. Under consideration of safety upon float charging, however, the effect of the invention can be significantly exerted by using a housing having shape variability. In the case where a housing having shape variability is used, increase of the internal pressure of the battery, which is caused through gas generation due to electrolysis occurring on the surface of the positive electrode and the surface of the negative electrode upon float charging, not only brings about expansion of the battery (deformation of the battery shape), but also sometimes causes leakage of the electrolyte solution due to leakage from the housing having shape variability, which is dangerous to human bodies. Therefore, in the case where a housing having shape variability is used, it is important that gas generation upon float charging is suppressed to ensure the safety of the lithium secondary battery.

The housing having shape variability herein means a housing having flexibility. Specifically, it means a housing having ductility, bendability and the like. More specifically, it means such a housing that can be bend by hand of human, whereby a housing having a flat plate form can be easily changed into such a shape as an L-shape and an S-shape.

As a material for the housing having shape variability, a metal having a small thickness, such as aluminum, nickel-plated iron and copper, a synthetic resin and the like can be used. Preferred examples thereof include a laminated film having a gas barrier layer and a resin layer, and particularly a laminated film having resin layers provided on both sides of a gas barrier layer. The laminated film having the structure has high gas barrier property, high shape variability and thinness. The use thereof results in a thin and lightweight housing material to improve the overall capacity of the battery.

Examples of the material for the gas barrier layer used in the laminated film include a metal, such as aluminum, iron, copper, nickel, titanium, molybdenum and gold, an alloy, such as stainless steel and Hastelloy, and a metallic oxide, such as silicon oxide and aluminum oxide. Aluminum is preferably used owing to the light weight and the excellent processability thereof.

Examples of the resin used in the resin layer include various kinds of synthetic resins, such as a thermoplastic resin, a thermoplastic elastomer, a thermosetting resin and a plastic alloy. The resins also include those containing a packing material, such as a filler.

The thickness of the housing having shape variability is generally 0.01 $\mu$m or more, preferably 0.02 $\mu$m or more, and more preferably 0.05 $\mu$m or more, and is generally 1 mm or less, preferably 0.5 mm or less, more preferably 0.3 mm or less, further preferably 0.2 mm or less, and most preferably 0.15 mm or less. The size and the weight of the battery can be reduced when the thickness is smaller, but in the case where the thickness is too small, not only such a dangerousness is increased that the housing is broken by increase of the inner pressure of the housing upon storing at a high temperature, but also there are such possibilities that sufficient rigidity cannot be imparted, and the sealing property is deteriorated.

Examples of an electric equipment, in which the lithium secondary battery is used as an electric power source, include a portable personal computer, a stylus-operated personal computer, a mobile personal computer, anelectronicbookplayer, a portable telephone, a cordless handset, a pager, a handy terminal, a portable facsimile machine, a portable duplicator, a portable printer, a personal stereo, a video cam, a liquid crystal television, a handy cleaner, a portable CD player, a mini-diskplayer, an electric shaver, a radio transceiver, an electronic organizer, an electronic calculator, a memory card, a portable tape recorder, a radio receiver, an electric motor, a lighting fixture, a toy, a gamemachine, a load conditioner, a clock, a strobe light, a camera, and a medical equipment (such as a heart pacer, a hearing aid and a shoulder massager). Among the electric equipments, those using the lithium secondary battery as a backup electric power source are preferred. A backup electric power source suffers high possibility of float charging, and thus the effect of the invention is effectively exerted. Among the electric equipments, examples of those using the lithium secondary battery as a backup electric power source include a mobile personal computer, a pager, a handy terminal, a video cam, a liquid crystal television, a handy cleaner, an electric shaver, a radio receiver, a motor, a lighting fixture, a toy, a game machine, a load conditioner, and a medical equipment (such as a heart pacer, a hearing aid and a shoulder massager).

The lithium secondary battery of the invention can also be used as a large electric power source, such as that for an electric vehicle. A large electric power source has an increased amount of a positive electrode active substance owing to an increased battery capacity thereof, and thus there is increased significance in ensuring the safety in a charged state by making the fullerene compound present on the surface of the positive electrode active substance.

[2] Other Embodiments

In the invention, uponmaking the fullerene compound present on the surface of the positive electrode active substance, the spherical shell structures of the fullerene compound are bonded through at least one atom, and/or the spherical shell structure of the fullerene compound is bonded to the positive electrode active substance as a substrate through at least one atom, whereby the fullerene compound can be prevented from being eluted to a solvent, and the mechanical strength of the fullerene layer can be improved.

The technique of bonding the spherical shell structures of the fullerene compound to each other and bonding the spherical shell structure of the fullerene compound to the substrate can be applied not only to the case where the positive electrode active substance is used as the substrate (the case intending a lithium secondary battery), but also to a wide range of commonly used substrates. That is, the invention can provide such a layered structure that has a fullerene layer containing fullerene compound capable of exerting the function of the fullerene compound as a surface treating agent by suppressing elution to an organic solvent and by increasing the aggregated body of fullerene, and a process for producing the same.

The case where the technique of bonding the spherical shell structures of the fullerene compound to each other and bonding the spherical shell structure of the fullerene compound to the substrate is applied to other purposes than a lithium secondary battery will be described below.

The invention provides a layered strucutre containing a substrate, and a fullerene layer containing a fullerene compound formed on a surface of the substrate, characterized in that spherical shell structures of the fullerene compound are crosslinked through at least one atom.

The invention has such a structure that spherical shell structures of the adjacent fullerene compound are crosslinked through at least one atom, whereby the fullerene compound is suppressed from being eluted to an organic solvent. Furthermore, the fullerene layer is not easily released owing to high adhesion strength to the substrate, and can be easily produced industrially.

The invention also provides a layered structure containing a substrate, and a fullerene layer containing a fullerene compound formed on a surface of the substrate, characterized in that a spherical shell structure of the fullerene compound is chemically bonded to the substrate through at least one atom.

The invention has such a structure that a spherical shell structure of the fullerene compound is chemically bonded to the positive electrode active substance through at least one atom, whereby the fullerene compound is suppressed from being eluted to an organic solvent, and has high adhesion strength to the substrate, and can be easily produced industrially.

In the invention, the at least one atom is preferably an oxygen atom. An oxygen atom is easily available industrially and can provide a crosslinked fullerene layer having a relatively simple and small structure with a dense structure, or it has high reactivity with both the fullerene compound and the substrate.

In the invention, an elution amount of the fullerene compound per unit weight of the layered structure is preferably 2 mg/g or less by the following test method:

[test method]

(1) 0.1 g of the layered structure is dissolved in a trimethylbenzene solvent or an N-methylpyrrolidone solvent to prepare a sample fluid;

(2) the sample fluid is allowed to stand at an ordinary temperature (25 $\pm$ 5°C) and an ordinary humidity (50 $\pm$ 15%RH) for 24 hours;

(3) a supernatant fluid of the sample fluid thus allowed to stand is recovered, and a content of the fullerene compound contained in the supernatant fluid is measured; and

(4) the measured value is converted to a total elution amount of the sample fluid, and the converted value is divided by 0.1 g.

This is because the elution amount of the fullerene compound eluted from the fullerene layer per unit weight is 2 mg/g or less, whereby the stability of the effect of the surface treatment is further improved.

In the invention, the substrate is preferably in a particle form.

The invention provides a process for producing a layered structure containing a substrate, and a fullerene layer containing a fullerene compound formed on the surface of the substrate, characterized in that the process contains: a fullerene compound supporting step of making a fullerene compound present on a surface of a substrate; and at least one of a crosslinking step of crosslinking spherical shell structures of the fullerene compound through at least one atom, and a chemically bonding step of chemically bonding a spherical shell structure of the fullerene compound to a the substrate through at least one atom.

According to the production process of the invention, such a fullerene layer that can be suppressed in elution of the fullerene compound can be formed on the surface of the substrate. The resulting fullerene layer is not easily released owing to the high adhesion strength to the substrate, and is excellent in productivity.

In the invention, the crosslinking step or the chemically bonding step is preferably carried out by a heat treatment at 100°C or more. This is because elution of the fullerene compound to an organic solvent can be further surely suppressed.

In the invention, the at least one atom is preferably an oxygen atom. An oxygen atom is easily available industrially and can provide a crosslinked fullerene layer having a relatively simple and small structure with a dense structure, or it has high reactivity with both the fullerene compound and the substrate.

The layered structure and the process for producing the same of the invention will be described, respectively.

A. Layered Structure

The layered structure of the invention has a substrate, and a fullerene layer containing a fullerene compound formed on a surface of the substrate, and it is excellent in mechanical strength of the fullerene layer and can suppress the fullerene compound from being eluted to an organic solvent. The layered structure of the invention includes the following three embodiments. The constitutions of the embodiments and the elution amount of the fullerene compound will be described below.

A-1. Constitution of Layered Structure

(1) First Embodiment

A layered structure according to the first embodiment contains a substrate, and a fullerene layer containing a fullerene compound formed on a surface of the substrate, characterized in that spherical shell structures of the fullerene compound are crosslinked through at least one atom.

In the layered structure of the first embodiment, not only the fullerene compound constituting the fullerene layer are aggregated through van der Waals attraction, but also the adjacent spherical shell structures of the fullerene compound are crosslinked through at least one atom, whereby there are some advantages that the fullerene layer is improved in strength, and that the fullerene compound is suppressed from being eluted into an organic solvent.

The elements constituting the first embodiment will be described.

a. Substrate

The substrate is not particularly limited as far as it maintains a certain shape and may be in a plate form or a powder form.

The substrate necessarily has heat resistance in the case where the fullerene compound is crosslinked on the surface thereof, and the melting point of the substrate is generally 100°C or more, preferably 200°C or more, and more preferably 500°C or more, and is generally 4,000°C or less, preferably 3,500°C or less, and more preferably 3,000°C or less.

In the case where the substrate is in a plate form, the thickness of the substrate, while it largely varies depending on purposes, is generally 1 μm or more, preferably 10 μm or more, and more preferably 100 μm or more. The thickness of the substrate is generally 1 m or less, preferably 10 cm or less, more preferably 1 cm or less, and most preferably 1 mm or less.

The substrate may have a powder form as having been described. The fact that the substrate is in a powder form means that the substrate is in a particle form. The case where the substrate is in a particle form includes both the case where the substrate is formed of single particles (the case where it is formed of primary particles), and the case where the substrate is formed by aggregating plural particles (the case where it is formed of secondary particles).

In the case where the substrate is in a particle form, the particle diameter of the substrate is generally 1 nm or more, preferably 10 nm or more, and more preferably 100 nm or more, and is generally 1 mm or less, preferably 100 μm or less, and more preferably 50 μm or less.

In the case where the substrate is in an irregular form (for example, the case where the substrate is an H-section steel beam, a plastic member for building houses, or the like), it is sufficient that the effective thickness of the substrate at a part of the substrate (member) covered with the fullerene layer. Similarly, a substrate having a large particle form having a diameter of 1 mm or more is considered as a mass rather than powder (particle). Therefore, the substrate can be considered as similar to the plate form. For example, a spherical body having a diameter of 1 mm can be considered as similar to a substrate in a plate form having a thickness of 1 mm.

The material for the substrate is not particularly limited and is appropriately selected depending on purposes, and both an organic material and an inorganic material may be used.

Examples of the inorganic material include a metal (including a pure metal and an alloy), an oxide of a metal, a complex oxide of metals, a sulfide of a metal, a fluoride of a metal, a chloride of a metal, a semiconductor (such as Si, Ge and GaAs), a glass material, concrete, asphalt, various kinds of ceramics, various kinds of rock, a wood material, such as wood. Among these, an oxide of a metal, a complex oxide of metals and a glass material are preferred owing to the high functionality thereof, and more specifically, alumina, silica, titania and iron oxide used as pigments are particularly preferred.

The organic material is not particularly limited as far as it is an organic compound, and examples thereof include a carbonaceous substance, such as graphite, and a polymer material, such as polyethylene, polypropylene, polyethylene terephthalate, polysulfone, polyethersulfone, polyimide, nylon, polystyrene, polycarbonate, an epoxy resin, a phenol resin, a Novolac resin, an acrylic resin and a siloxane resin.

Examples of the carbonaceous substance, include a graphite material, such as graphite, carboniferous coke and petroleum coke, a carbide of carboniferous pitch or petroleum pitch, or a carbide of pitch having been subjected to an oxidation treatment, needle coke, pitch coke, and a phenol resin or crystalline cellulose. Examples thereof also include a carbon material obtained by partially graphitizing the aforementioned carbonaceous substances, furnace black, acetylene black and pitch carbon fibers.

Among the carbonaceous substances, coke and a graphite material, such graphite, are preferred, and a graphite material, such as graphite, is particularly preferred.

Examples of the graphite material include graphite powder, such as artificial graphite and natural graphite, and a purified product thereof, a graphitized product of electroconductive carbonblack, such as acetylene black and Ketjen black, and carbon fibers, such as vapor phase growth carbon fibers. Among these, artificial graphite or natural graphite is preferred, and artificial graphite is particularly preferred. The graphite material may be subjected to an amorphous treatment on the surface thereof.

b. Fullerene Layer

A fullerene layer containing a fullerene compound is formed on the surface of the substrate.

One of the characteristic features of the fullerene layer of the first embodiment resides in that the spherical shell structures of the fullerene compound are crosslinked through at least one atom. The term crosslinking referred herein means such a state that the adjacent fullerene compound molecules are indirectly bonded to each other through a bonding group having at least one atom, and the fullerene compound may form a dimer or a polymer. The fullerene compound may also form a linear or network polymer.

The adjacent fullerene compound molecules have the crosslinked structure, whereby the fullerene layer is improved in mechanical strength, and the fullerene compound is suppressed from being eluted to an organic solvent, and thus such a fullerene layer can be obtained that has high stability in surface treatment effect.

The amount of the fullerene compound present in the fullerene layer is determined with respect to the surface area of the substrate. Specifically, in the case where the substrate is in a powder form, the amount of the fullerene compound is determined by the surface area measured by BET analysis in the nitrogen adsorption method, and in the case where the substrate is in a plate form, the amount is determined by the surface area geometrically measured. In the invention, the amount of the fullerene compound present in the fullerene layer is preferably $0.01 \text{ mg/m}^2$ or more, more preferably $0.1 \text{ mg/m}^2$ or more, and further preferably $1 \text{ mg/m}^2$ or more, per unit area of the substrate. In the case where the amount of the fullerene present is too small, there are some cases where the effect of the surface treatment cannot be sufficiently obtained. The amount of the fullerene compound is generally $20 \text{ kg/m}^2$ or less, preferably $1 \text{ kg/m}^2$ or less, more preferably $1,000 \text{ mg/m}^2$ or less, further preferably $100 \text{ mg/m}^2$ or less, particularly preferably $20 \text{ mg/m}^2$ or less, and most preferably $10 \text{ mg/m}^2$ or less. In the case where the amount of the fullerene present is too large, the proportion of the fullerene layer to the substrate becomes too large, and thus there are some cases where the efficiency of the surface treatment is lowered.

In the case where the surface area of the substrate is difficult to measure since the substrate is in a plate form, the amount of the fullerene compound present may be determined in terms of the thickness of the fullerene layer. The thickness is generally 0.01 nm or more taking such cases into consideration that the surface of the substrate is in an amorphous state or a crystalline state, and the thickness has a distribution. The thickness herein is an average thickness. As the size of one molecule of the fullerene compound is about 1 nm, a thickness less than the molecular size is determined herein, but there is no inconsistency since an area coverage of 1% means a thickness of 1/100 of the molecular thickness. The thickness is preferably 0.1 nm or more, and more preferably 1 nm or more.

The thickness of the fullerene layer is generally 1 cm or less, preferably 1 μm or less, more preferably 100 nm or less, further preferably 20 nm or less, particularly preferably 10 nm or less, and most preferably 5 nm or less. The sufficient effect of the surface treatment can be obtained with a thickness within the range.

Separate from the average thickness, the maximum thickness derived from nonuniformity on treatment is need to be considered. In the case where apart of the fullerene layer having a particularly large thickness is present on the surface of the substrate, not only the other parts are insufficiently treated, but also it is required to treat with an excessive amount of the fullerene compound. It is particularly not preferred that protrusions in the form of granules, columns or spheres are present on the surface. The maximum thickness is generally 5 times or less, preferably 2 times or less, more preferably 1.5 times or less, and further preferably 1.2 times or less, the average thickness.

In the case where the substrate is in a powder form, the amount of the fullerene compound present may be determined in terms of the weight per the weight of the powder. This is because the definition in terms of percentage by weight is convenient upon managing the process. Specifically, the amount of the fullerene present is generally 0.001% by weight or more, preferably 0.005% by weight or more, and more preferably 0.01% by weight or more. The amount is generally 10% by weight or less, preferably 5% by weight or less, more preferably 3% by weight or less, further preferably 1% by weight or less, particularly preferably 0.3% by weight or less, and most preferably 0.1% by weight or less.

The fullerene compound and the bonding group bonding the fullerene compound constituting the fullerene layer used in the invention will be described.

(Fullerene Compound)

Compounds as similar to those described for the aforementioned item [1] may be used.

(Bonding Group)

As the bonding group having at least one atom used for crosslinking the spherical shell structures of the fullerene compound through at least one atom, the groups as similar to those described for the aforementioned item

[1] may be used.

However, as the bonding group having at least one atom, it is preferred that one kind thereof having high reactivity to both the spherical shell structure of the fullerene compound and the substrate is used, or two or more kinds thereof having high reactivity to them, respectively, are used in combination. Preferred examples of the bonding group having high reactivity to both of them include an oxygen atom.

(2) Second Embodiment

The layered structure of the second embodiment is a layered structure containing a substrate, and a fullerene layer containing a fullerene compound formed on a surface of the substrate, characterized in that the spherical shell structure of the fullerene compound is chemically bonded to the substrate through at least one atom.
In the layered structure of the second embodiment, not only the fullerene compound constituting the fullerene layer is adsorbed on the substrate through van der Waals attraction, but also the spherical shell structure of the fullerene compound is chemically bonded to the substrate through at least one atom to provide such an advantage that the fullerene compound is suppressed from being eluted into an organic solvent.
The elements of the second embodiment will be described below.

a. Substrate

As the shape, the melting point, the thickness and the material of the substrate used in the second embodiment, those described for the first embodiment may be exemplified.
In the second embodiment, however, the fullerene compound constituting the fullerene layer and the substrate are chemically bonded to each other through at least one atom, and the substrate preferably has, on the surface thereof, a reactive group, such as a hydroxyl group, a thiol group, and a group having an unsaturated double bond, e.g., a vinyl group and an allyl group.

b. Fullerene Layer

The fullerene layer containing the fullerene compound is formed on the surface of the substrate.
The fullerene layer of the second embodiment is characterized in that the spherical shell structure of the fullerene compound is chemically bonded to the substrate through at least one atom.
Since the fullerene compound is bonded to the substrate, the fullerene compound can be suppressed from being eluted to an organic solvent to obtain such a fullerene layer that has high stability in surface treatment effect.
A preferred range of the amount of the fullerene compound present in the fullerene layer of the second embodiment is the same as that in the first embodiment, and descriptions therefor are omitted herein. Examples of the fullerene compound and the bonding group for chemically bonding the spherical shell structure of the fullerene compound to the substrate through at least one atom in the second embodiment include those described for the first embodiment.
With respect to the bonding group, however, a group having high reactivity to the group bonded to the substrate is preferred from the standpoint of reactivity to the substrate. For example, in the case where a hydroxyl group is bonded to the substrate, a hydroxyl group, a carboxyl group and an isocyanate group are preferably used as the bonding group contained in the fullerene compound. The aforementioned combinations improve the reaction efficiency.
However, as the bonding group having at least one atom, it is preferred that one kind thereof having high reactivity to both the spherical shell structure of the fullerene compound and the substrate is used, or two or more kinds thereof having high reactivity to them, respectively, are used in combination. Preferred examples of the bonding group having high reactivity to both of them include an oxygen atom.

(3) Third Embodiment

The layered structure of the third embodiment is a layered structure containing a substrate, and a fullerene layer containing a fullerene compound formed on the surface of the substrate, characterized in that both such a structure that spherical shell structures of the fullerene compound are crosslinked through at least one atom, and such a structure that the spherical shell structure of the fullerene compound is chemically bonded to the substrate through at least one atom are used in combination.

In this case, the structure having the spherical shell structures of the fullerene compound crosslinked and the structure having the spherical shell structures chemically bonded to the substrate may be chained with or separated from each other.

In the layered structure of the third embodiment, the fullerene compound constituting the fullerene layer is crosslinked to each other or is chemically bonded to the substrate, whereby the fullerene compound can be suppressed from being eluted into an organic solvent.

As the substrate and the fullerene layer used in the third embodiment, those described for the first embodiment and the second embodiment may be used. However, as the bonding group having at least one atom, it is preferred that one kind thereof having high reactivity to both the spherical shell structure of the fullerene compound and the substrate is used, or two or more kinds thereof having high reactivity to them, respectively, are used in combination. Preferred examples of the bonding group having high reactivity to both of them include an oxygen atom.

A-4. Elution Amount of Fullerene Compound

The layered structure of the invention can be suppressed in elution amount of the fullerene compound to an organic solvent owing to the aforementioned constitution, and in order to apply to various fields of art, it is preferred that the elution amount of the fullerene compound per unit weight of the layered structure is 2 mg/g or less.

The fullerene compound is crosslinked and/or is chemically bonded to the surface of the substrate to improve the solvent resistance and the mechanical characteristics thereby. In the case of immersing in a solvent, it is preferred that the crosslinked fullerene compound present on the surface and/or the fullerene compound chemically bonded to the surface of the substrate are completely not eluted. In actual cases, however, there are some cases where a part of the fullerene compound thus treated is eluted to an organic solvent because there are such site that are insufficient in crosslinking or chemical bonding, and a mild crosslinking condition is necessarily employed depending on the species of the substrate, and the elution amount in this case is preferably 2 mg/g or less per unit weight of the layered structure. The elution amount per unit weight is such a value that varies depending on the treated amount and the specific surface area of the powder. Upon considering the practical purposes, such as a coating composition, ($\alpha$) the composition thereof is generally determined on weight basis, and ($\beta$) the eluted components not only fail to exert the primary effect, but also cause a possibility of impairing the performance by existing in the solvent of the coating composition and attaching to the other components thereof. Therefore, the elution amount per unit weight is preferably a certain amount or less for stable applications of the substrate thus treated. The elution amount is preferably 1.5 mg/g or less, further preferably 1.3 mg/g or less, particularly preferably 1.0 mg/g or less, and most preferably 0.5 mg/g or less.

On the other hand, it is also important to comprehend the amount of the fullerene compound remaining as being present on the substrate after the test. Specifically, the amount of the fullerene compound remaining as being present on the substrate is preferably determined with respect to the surface area of the substrate from the standpoint of effectiveness of the treatment. This is because from the standpoint of the treatment effected by covering the surface, a preferred treated state with the fullerene compound can be determined by estimating the amount per unit area.

Specifically, in the case where the substrate is in a particle form (powder form), the amount of the fullerene compound remaining on the surface of the substrate after carrying out the test is 0.01 mg/m$^2$ or more, preferably 0.1 mg/m$^2$ or more, and more preferably 1 mg/m$^2$ or more, with respect to the surface area measured BET analysis in the nitrogen adsorption method. In the case where the amount is too small, the effect of the surface treatment becomes insufficient. In the case where the substrate is a flat plate, the remaining amount of the fullerene compound may be in the aforementioned range per unit area of the surface area defined by the geometrical dimension.

The test method for examining the elution amount in the invention is as follows.

[Test Method]

(1) 0.1 g of the layered structure is dissolved in a trimethylbenzene (which is sometimes referred to as TMB in this specification) solvent or an N-methylpyrrolidone (which is sometimes referred to as NMP in this specification) solvent to prepare a sample fluid.

(2) The sample fluid is allowed to stand at an ordinary temperature (25 $\pm$ 5°C) and an ordinary humidity (50 $\pm$ 15%RH) for 24 hours.

(3) A supernatant fluid of the sample fluid thus allowed to stand is recovered, and a content of the fullerene compound contained in the supernatant fluid is measured.

(4) The measured value is converted to a total elution amount of the sample fluid, and the converted value is divided by 0.1 g.

The measuring method of the content of the fullerene compound in the item (3) of the aforementioned test method is not particularly limited, and for example, it can be measured by evaporating the solvent of the supernatant fluid by drying and measuring the weight of the residue.

In the case where the content of the fullerene compound in the fullerene layer is previously known, the elution ratio (%) of the fullerene compound to the solvent can be calculated in such a manner that in the item (3) of the test method, the total elution amount in a prescribed amount (for example, 2 mL) of the trimethylbenzene solvent or an N-methylpyrrolidone solvent is calculated and then divided by the content of the fullerene compound. The elution ratio is preferably 80% or less, more preferably 50% or less, more preferably 40% or less, and particularly preferably 25% or less.

Other specific examples of the method for measuring the content of the fullerene compound contained in the supernatant fluid in the item (3) of the test method include a method by ultraviolet-visible absorption analysis. As a specific method of the ultraviolet-visible absorption analysis, for example, the supernatant fluid obtained in the item (3) of the test method is collected and the concentration of the eluted component is quantitatively determined by ultraviolet-visible absorption analysis. The concentration can be determined by previously preparing a calibration curve. The method by absorption analysis also has such an advantage that the change in molecular structure can be comprehended by the shape of the spectrum. For example, in the case where the concentration of the supernatant fluid is determined as 0. 5 mg/mL, it can be determined that 1 mg of the component is eluted from the powder since the amount of the solvent is 2 mL, and the elution amount can be calculated as 10 mg/g since the weight of the layered structure is 0.1 g.

In this method, it is preferred that the amounts of layered structure and the solvent are determined in such a manner that the measurement can be easily carried out depending on the method of detection. The elution amount is finally calculated as an elution weight per unit weight of the layered structure, and therefore, there is no large influence on the measurement effect if the amounts of the layered structure and the solvent are changed. However, it is preferred that the amount of the solvent is as large as it can sufficiently dissolve the expected elution amount.

TMB or NMP is preferred as the solvent, other solvents may be used depending on necessity of the quantitative determination method. In this case, compensation is carried out taking the difference in solubility in TMB or NMP into consideration, whereby the effect of the invention can be ensured.

It is possible that solvents may be selected depending on the species of the fullerene compound used. For example, TMB is used in the case where the fullerene compound is an unmodified fullerene (such as $C_{60}$ and $C_{70}$), a fullerene derivative having an alkyl group or a fullerene derivative having an aromatic group. NMP can dissolve $C_{60}$ and $C_{70}$ while it is a polar solvent, and thus NMP can be used as the solvent in the case where $C_{60}$ or $C_{70}$ is used as the fullerene compound. NMP is preferably used in the case of a fullerene compound having a polar group.

B. Production Process

The process for producing the layered structure of the invention is not particularly limited as far as the aforementioned embodiments can be attained. For example, it is possible that the fullerene compound is made present on the surface of the substrate, and then the fullerene layer is formed by crosslinking or chemically bonding, or in alternative, a part or the whole of the fullerene compound is previously crosslinked, and then it is made present on the surface of the substrate. It is preferably produced in the following process.

The process for producing a layered structure according to the invention is a process for producing a layered structure containing a substrate, and a fullerene layer containing a fullerene compound formed on a surface of the substrate,

characterized in that the process contains:

a fullerene compound supporting step of making a fullerene compound present on a surface of a substrate; and at least one of a crosslinking step of crosslinking spherical shell structures of the fullerene compound through at least one atom, and a chemically bonding step of chemically bonding a spherical shell structure of the fullerene compound to a the surface of the substrate through at least one atom. The respective steps will be described below.

B-1. Fullerene Compound Supporting Step

In the fullerene compound supporting step, the fullerene compound is made present on the surface of the substrate. As the substrate and the fullerene compound, those described for the aforementioned layered structure can be used.

Examples of the method for making the fullerene compound present on the surface of the substrate include such various methods as a gas phase process, in which the fullerene compound in a gas state is made present on the substrate, a liquid phase process, in which the fullerene compound and the substrate are dissolved or dispersed in a solvent to make present on the surface of the substrate, and a solid phase process, in which the fullerene compound in a sold state is made in contact with the substrate. Among these methods, the most convenient method is the liquid phase process.

(1) Liquid Phase Process

Specific examples of the liquid phase process in the case where the substrate is in a powder form include such a method that a solution having the fullerene compound dissolved therein or a dispersion liquid having the fullerene compound dispersed therein is mixed with the powder, and after stirring for a prescribed period of time, the solution is removed by decantation, followed by drying, to obtain processed powder. In this method, the fullerene compound adsorbed to the surface of the powder is basically molecules treating the surface of the powder while depending on the extent of the removal of the solution by decantation. A monomolecular adsorption layer can be relatively easily formed by adsorption of the molecules from the solution, and the surface nature can be significantly effectively modified even with an extremely small amount of the fullerene present on the surface of the powder.

Other specific examples of the liquid phase process in the case where the substrate is in a powder form include such a method that the powder is put into a solution having the fullerene compound dissolved therein or a dispersion liquid having the fullerene compound dispersed therein in an amount providing a desired surface treatment rate, and after stirring, the solvent is removed by evaporation to obtain processed powder. In this method, the fullerene compound thus put is entirely used for the surface treatment of the powder to provide such an advantage that the amount of the fullerene compound present on the surface of the powder can be easily controlled. It is also convenient from the standpoint of process since the powder to be treated and the solution of the fullerene compound are simply put in a vessel, followed by drying as they are. In this method, it is preferred that the system is adjusted under consideration of the species of the solvent, the drying conditions, the concentration of the fullerene compound, the total amount of the fullerene compound with respect to the substrate, and the like. This is because there are cases where the fullerene compound is separately precipitated, and after the treatment, an excessive fullerene compound is deposited in a large amount on the surface of the powder.

Specific examples of the liquid phase process in the case where the substrate is in a powder form also include the so-called spray drying method, in which the powder is mixed by spraying in a solution having the fullerene compound dissolved therein or a dispersion liquid having the fullerene compound dispersed therein, followed by drying. This method can reduce the necessary amount of the solvent and can be carried out as a continuous process, and thus it is excellent in productivity.

Specific examples of the liquid phase process in the case where the substrate is in a plate form include such a method that the surface of the substrate in a plate form (base plate) is immersed in a solution having the fullerene compound dissolved therein or a dispersion liquid having the fullerene compound dispersed therein, and then withdrawn therefrom, followed by drying, for example, a method using film formation by dip coating. In order to obtain a desired modification ratio, adjustment may be carried out under consideration of the concentration of the solution, the temperature of the solution, the species of the solvent, the withdrawing speed and the drying rate.

Other specific examples of the liquid phase process in the case where the substrate is in a plate form include such a method that a solution having the fullerene compound dissolved therein or a dispersion liquid having the fullerene compound dispersed therein is made present on the surface of the substrate in a plate form (base plate) in an amount providing a desired modification ratio, for example, a method using film formation by the ordinary coating and drying procedure, such as spin coating, gravure coating and die coating.

The solvent used for dissolving or dispersing the fullerene compound in the liquid phase process is not particularly limited and is preferably a solvent capable of dissolving the fullerene compound. Examples of the solvent include an aromatic compound, such as toluene, benzene, xylene and trimethylbenzene, dipehnylsulfide, N-methyl-2-pyrrolidone, N,N-dimethylacetamide, N,N-dimethylformamide, N-methylacetamide, N-methylformamide, formamide, tetramethylenesulfoxide, tetramethylenesulfone and dimethylsulfoxide. It is of course possible that plural kinds of the solvent may be used in combination.

The concentration of the fullerene compound in the solvent used in the liquid phase process is not particularly limited and is preferably within the solubility of the fullerene compound in the solvent used. Specifically, the concentration is generally 0.01 mg/mL or more, and preferably 0.1 mg/mL or more, and is generally 100 mg/mL or less, preferably 50 mg/mL or less, and more preferably 20 mg/mL or less.

In the liquid phase process, upon making the positive electrode active substance into contact with the solution having the fullerene compound dissolved therein or the solvent having the fullerene compound dispersed therein (for example, the positive electrode active substance is put in the solution having the fullerene compound dissolved therein, followed by stirring), the contact time is not particularly limited, and it is generally 5 minutes or more, preferably 10 minutes or more, and more preferably 15 minutes or more, and is generally 3 hours or less, and preferably 1 hour or less. The temperature upon contact is also particularly not limited, and it is generally 0°C or more, and preferably 20°C or more, and is generally 100°C or less. In the case where the contact operation with the fullerene compound and the solvent is carried out at a temperature equal to or higher than the boiling point of the solvent, in which the fullerene compound is dissolved or dispersed, the operation may be carried out under sealing.

In the case where, in liquid phase process, the solvent is removed after making the positive electrode active substance into contact with the solution having the fullerene compound dissolved therein (for example, the positive electrode active substance is put in the solution having the fullerene compound dissolved therein, followed by stirring), the temperature upon removing is not particularly limited, and it is generally 20°C or more, and preferably 50°C or more, and is generally 200°C or less, and preferably 150°C or less. The period of time for removing is not limited, and it is generally 10 minutes or more, and preferably 30 minutes or more, and is generally 12 hours or less, preferably 10 hours or less, and more preferably 5 hours or less.

(2) Solid Phase Process

Specific examples of the solid phase process for the case where the substrate is in a powder form include such a method that the powder is mixed with the fullerene compound in a fine particle form and stirring and shearing at high speed to make the fullerene compound present on the surface of the powder. The method can be classified depending on the stirring method into the jet-mill method, in which the particles are made collide with each other in airflow, and a planetary stirring method, in which powder having a relatively high density is strongly stirred with blades.

(3) Gas Phase Process

Specific examples of the gas phase process for the case where the positive electrode active substance is in a plate form include the so-called vacuum deposition method, in which the fullerene compound is sublimated by heating preferably in vacuum and accumulated on the surface of the base plate disposed as opposite thereto.

B-2. Crosslinking Step or Chemically Bonding Step

The production process of the invention has at least one of the crosslinking step and the chemically bonding step. These steps may be carried out sequentially, or these steps may be carried out simultaneously. In the case where they are carried out sequentially, the order thereof is not particularly limited. In the case where they are carried out simultaneously, for example, it is possible that these steps are carried out simultaneously under the same heating treatment conditions. The respective steps will be described below.

(1) Crosslinking Step

In the crosslinking step, the spherical shell structures of the fullerene compound present on the surface of the substrate are crosslinked through at least one atom.

In the case where the fullerene compound made present in the aforementioned fullerene compound supporting step does not have a crosslinking functional group, the fullerene compound can be crosslinked by making in contact with a compound having a crosslinking functional group (hereinafter, referred to as an addition reaction).

Examples of the compound for effecting the addition reaction include a compound having oxygen, sulfur and at least two crosslinking functional groups. From the standpoint of reactivity, a compound having oxygen, sulfur and at least two crosslinking functional groups at the ends thereof is preferred.

Examples of the crosslinking functional group include a hydroxyl group, a mercapto group, an amino group, a carboxyl group, an isocyanate group, an epoxy group, a vinyl group and an acrylic group. These functional groups may be used solely or in combination of two or more kinds of them.

The compound having at least two crosslinking functional groups preferably has a low molecular weight for improving the surface treating effect of the fullerene compound, and specifically, the molecular weight thereof is preferably 40 or more, and particularly preferably 50 or more, and is preferably 200 or less, and particularly preferably 100 or less. In the case where the molecular weight is in the range, the distance between the fullerene compounds or the distance between the fullerene compound and the substrate bonded thereto is shortened to make a fullerene layer having a dense structure.

Specific examples of the method for crosslinking by the addition reaction include such a method that a divalent amine, such as diaminopropylene, is made in contact with fullerene in a gas phase to effect crosslinking through chemical reaction between the amine and fullerene, such a method that a divalent amine is made in contact with a fullerene compound having two or more carboxyl groups in a solvent or in a gas phase to effect crosslinking through an amide bond, and such a method that a dihydric alcohol, such as ethylene glycol, is made in contact with a fullerene compound having two or more carboxyl groups in a solvent or in a gas phase to effect crosslinking through an ester bond. By using fullerene having two carboxyl groups with ethylene glycol as the dihydric alcohol, such a polymer compound is formed that corresponds to a polyethylene terephthalate structure, in which a part of the benzene ring is replaced by fullerene. Other examples thereof include such a method that oxygen is added to fullerene by heat oxidation, contact with ozone or treatment with an oxidative substance, so as to effect crosslinking by an ether bond.

Among these, the method of crosslinking the spherical shell structures of the fullerene compound through an ether bond containing an oxygen atom is preferred since industrial production can be easily made.

In the case where the fullerene compound originally has a crosslinking functional group, on the other hand, it can be crosslinked through the bonding reaction of the groups. The reaction by contacting a compound having a crosslinking functional group may further be used in combination.

Examples of the crosslinking functional group contained in the fullerene compound include a sulfur atom, an oxygen atom, a hydroxyl group, a mercapto group, an amino group, a carboxyl group, an isocyanate group, a vinyl group and an acrylic group.

Specific examples of the method for crosslinking by the bonding reaction include such a method that the fullerene compound having a hydroxyl group is crosslinked by a condensation reaction, and in this method, a dehydration reaction of the hydroxyl groups of the fullerene compounds adjacent to each other is effected to crosslink them through an ether bond. The fullerene compound having a hydroxyl group is preferably a fullerenol compound obtained by bonding a hydroxyl group directly to $C_{60}$ or $C_{70}$.

The number of the hydroxyl groups in one molecule of the fullerene compound is generally 2 or more, preferably 4 or more, and more preferably 6 or more. In the case where the number of the hydroxyl groups is too small, the number of the crosslinking bonds is small, whereby there are some cases where the sufficient elution suppression effect of the fullerene compound cannot be obtained. The number of the hydroxyl groups is generally 70 or less, preferably 36 or less, and more preferably 20 or less. In the case where the number of the hydroxyl groups is too large, the spherical shell structure of the fullerene compound is instabilized, and the electron state is changed, whereby there are some cases where the surface treatment effect of the fullerene compound is lost depending on purposes. A large number of sites, to which hydroxyl groups are introduced, are present in the fullerene compound, and the hydroxyl groups may be randomly bonded to the carbon atoms constituting the spherical shell structure of the fullerene compound. It is preferred that the hydroxyl groups are uniformly present.

There are cases where the number of hydroxyl groups introduced is different depending on the fullerene compound, but such a state causes no problem. It is preferred that the number of introduction is distributed in a narrow range with the average value as the center.

The crosslinking step can be effected by a heat treatment (which includes thermal oxidation in some cases), an ultraviolet ray irradiation treatment, an electron beam irradiation treatment and the like, and the heat treatment is preferred owing to the simpleness thereof.

The heating temperature is generally 60°C or more, preferably 100°C or more, more preferably 120°C or more, and most preferably 200°C or more, while it depends on the treating conditions. In the case where thermal oxidation is effected, the temperature is generally 0°C or more, preferably 100°C or more, more preferably 250°C ormore, and most preferably 300°C or more. This is because there are some cases where the crosslinking cannot be sufficiently effected when the temperature is too low. The temperature is generally 1,500°C or less, preferably 1,000°C or less, more preferably 500°C or less, and most preferably 400°C or less. In the case where the temperature is too high, there are some cases where the spherical shell structure of the fullerene compound is broken, and the fullerene compound is burnt out when thermal oxidation is effected.

The period of time for heating is generally 1 minute or more, preferably 10 minutes or more, more preferably 30 minutes or more, and most preferably 1 hour or more, while it varies depending on the treating conditions. This is because there are some cases where the crosslinking cannot be sufficiently effected when the period is too short. The period of time is generally 24 hours or less, preferably 12 hours or less, more preferably 6 hours or less, and most preferably 4 hours or less. In the case where the period is too long, there are some cases where the spherical shell structure of the fullerene compound is broken, and the fullerene compound is burnt out when thermal oxidation is effected, whereby the production efficiency is decreased.

The atmosphere thereon is preferably an inert atmosphere. Examples of the inert atmosphere include nitrogen, a rare gas and vacuum, and preferably nitrogen and vacuum. In the case where thermal oxidation is effected, air or oxygen is used. The pressure is generally $10^{-5}$ atm or more, while it varies depending on the treating conditions. The pressure is preferably as low as possible when a vacuum atmosphere is used, and under consideration of productivity, such a range that can be depressurized by an ordinary oil rotary pump or aspirator is practically used. Thepressure is generally 10 atmor less, preferably 1.1 atm or less, and more preferably 1 atm or less. This is because there are some cases where removal of water thus dehydrated is delayed or becomes insufficient when the pressure is too high.

The oxygen pressure upon effecting thermal oxidation is generally $10^{-5}$ atm or more, preferably $10^{-3}$ atm or more, more preferably 0.1 atm or more, and most preferably the atmospheric pressure, while it varies depending on the treating conditions. This is because in the case where the oxygen pressure is too low, there are some cases where oxidation cannot proceed sufficiently, whereby the fullerene compound is not crosslinked, or the crosslinking rate is lowered to deteriorate the productivity. The pressure is generally 10 atm or less, preferably 1 atm or less, more preferably 0.3 atm or less, and most preferably the oxygen partial pressure in the air (about 0.2 atm). This is because it is necessary to consider the explosion safety and the production equipments in the case where the oxygen pressure is too high.

It is preferred in the layered sturcture thus obtained that the bonding group containing at least one atom for bonding the spherical shell structures of the fullerene compound is an oxygen atom.

(2) Chemically Bonding Step

In the chemically bonding step, the spherical shell structure of the fullerene compound present on the surface of the substrate is chemically bonded to the substrate through at least one atom.

As the method for chemically bonding, the same procedures as described for the crosslinking step can be used.

Specifically, in the case where the fullerene compound present in the fullerene compound supporting step or the substrate does not originally have a chemically bonding functional group, the chemical bonding can be effected by making the fullerene compound or the substrate into contact with a compound having a chemically bonding functional group.

In the case where the fullerene compound or the substrate originally has a chemically bonding functional group, the chemical bonding can be effected by bonding reaction of these groups or by an addition reaction in combination. In the case where substrate is an oxide of a metal or a complex oxide of metals, hydroxyl groups are often present on the surface of the substrate.

The compound for making in contact therewith for effecting the addition reaction is not particularly limited as far as it is a compound having at least two chemically bonding functional groups. Examples of the chemically bonding functional group include a hydroxyl group, a mercapto group, an amino group, a carboxyl group and an isocyanate group. These functional groups may be used solely or in combination of two or more kinds of them.

The compound having the functional group preferably has a low molecular weight for improving the surface treating effect of the fullerene compound, and specifically, the molecular weight thereof is preferably 40 or more, and particularly preferably 50 or more, and is preferably 200 or less, and particularly preferably 100 or less. In the case where the molecular weight is in the range, the distance between the fullerene compounds or the distance between the fullerene compound and the substrate bonded thereto is shortened to make a fullerene layer having a dense structure.

Such a method also can be exemplified that oxygen is added to the fullerene compound or the substrate by effecting thermal oxidation, contact with ozone or treatment with an oxidative substance to make chemical bonding through an ether bond, and among these, thermal oxidation is preferably used.

Examples of the method for chemically bonding through bonding reaction include such a method that condensation reaction (dehydration reaction) of the fullerene compound and the positive electrode active substance having a hydroxyl group is effected to make chemical bonding through an ether bond. Preferred examples of the fullerene compound having a hydroxyl group is the same as those described in the crosslinking reaction.

The chemically bonding step can be effected by a heat treatment (which includes thermal oxidation in some cases), an ultraviolet ray irradiation treatment, an electron beam irradiation treatment and the like, and the heat treatment is preferred owing to the simpleness thereof. The preferred treating conditions are the same as those described for the crosslinking step.

It is preferred in the layered structure thus obtained that the spherical shell structures of the fullerene compound are bonded through an oxygen atom.

C. Layered structure thus obtained

The layered structure thus obtained by the a forementioned method can exert various functions derived from the crystalline structure, the chemical nature, the electron state and the like that are peculiar to the fullerene compound while maintaining the characteristics of the substrate. Specifically, ultraviolet ray absorption, radical trapping, photoconduction, catalytic function and the like can be exemplified, and furthermore, it can be used as a carbonaceous substance having a special structure. In the invention, the fullerene compound is suppressed from being eluted to an organic solvent, whereby the surface treatment effect with the fullerene compound can be stably maintained even in such a purpose that requires contact with an organic solvent. In the invention, furthermore, the fullerene layer has such a structure that the spherical shell structures of the fullerene compound are crosslinked, or the spherical shell structure of the fullerene compound is chemically bonded to the substrate, through at least one atom, whereby the adhesion strength to the substrate is improved owing to the degree of freedom in structure to provide excellent surface treatment effect, in comparison to the case where the spherical shell structures or the spherical shell structure and the substrate are directly bonded. Furthermore, such an advantage is also obtained that it can be easily produced industrially in comparison to the case of directly bonded.

The application range of the layered structure of the invention having these advantages is considerably wide. Specific examples thereof include UV shielding, radical deactivation, an optical switch, a solar battery, various kinds of secondary batteries other than the lithium secondary battery having been described, a composite material, and a solid lubricant.

While the invention has been described in detail, the invention is not construed as being limited to the embodiments. The embodiments are mere examples, and any embodiment having substantially the same constitution as the technical idea described in the scope of claim of the invention and exerting the same functionality is encompassed by the technical scope of the invention.

EXAMPLES

The invention will be described in more detail with reference to examples, but the invention is not construed as being limited to the following examples unless they go beyond the substance of the invention.

(Example 1)

[Production of Positive Electrode]

90 parts by weight of lithium-cobalt complex oxide ($LiCoO_2$) as a positive electrode active substance, 5 parts by weight of polyvinylidene fluoride, 5 parts by weight of acetylene black and 80 parts by weight of N-methyl-2-pyrrolidone (produced by Mitsubishi Chemical Corp.) were kneaded to produce a positive electrode coating composition.

The coating composition was coated on an aluminum foil (thickness: 20 $\mu$m) with a doctor blade (blade coater) and dried, followed by subj ecting to a roll press treatment at a linear pressure of 100 kN/m, to obtain a positive electrode. The positive electrode was then cut into a prescribed size (effective positive electrode area: 51.5 mm x 31.7 mm) to obtain a positive electrode 1 in a flat plate form. The positive electrode 1 thus obtained had a thickness of the electrode material layer of 59.7 $\mu$m.

[Treatment of Surface of Positive Electrode Active Substance]

Fullerene $C_{60}$ having a secondary particle diameter of from 100 nm to 200 $\mu$m was dissolved in o-xylene to a concentration of 5 mg/L, and 0.1 cc of the resulting solution was coated on the positive electrode 1 for impregnation. After drying the solvent, the positive electrode was dried by heating to 150°C for 30 minutes to obtain a positive electrode having the surface of the positive electrode active substance treated with fullerene. The treated amount of $C_{60}$ was 0.27% by weight based on the positive electrode active substance.

[Production of Negative Electrode]

A graphite material 1 (MPG, a trade name, produced by Mitsubishi Chemical Corp.) and a graphite material 2 (MCMB6-28, a trade name, produced by Osaka Gas Co., Ltd.) were used as a negative electrode material in a proportion of graphite material 1/graphite material 2 = 5/1 (weight ratio). 90 parts by weight of the negative electrode material, 10 parts by weight of polyvinylidene fluorideand150partsbyweightofN-methyl-2-pyrrolidone were kneaded to obtain a negative electrode coating composition.

The coating composition was coated on a copper foil (thickness: 10 $\mu$m) with a doctor blade (blade coater) and dried, followed by subjecting to a roll press treatment at a linear pressure of 100 kN/m, to obtain a negative electrode. The negative electrode was then cut into the prescribed size to obtain a negative electrode. The negative electrode thus obtained had a thickness of the electrode material layer of 62.5 $\mu$m.

[Production of Battery]

After attaching terminals for taking out electric current to the positive electrode and the negative electrode, they were laminated through a separator having a thickness of 16 $\mu$m produced with polyethylene and housed in a housing formed of a laminated film. An electrolyte solution was charged in the housing before sealing the housing. The electrolyte solution was obtained by using ethylene carbonate (EC) and dimethyl carbonate (DMC) in a proportion of 1/1 (volume %) as a nonaqueous solvent, and dissolving $LiPF_6$ in the nonaqueous solvent in a concentration of 1 mole/L.

(Example 2)

A battery was produced in the same manner as in Example 1 except that the amount of the solution of $C_{60}$ coated on the positive electrode 1 was changed to 0.2 cc to make the treated amount of $C_{60}$ of 0.64% by weight based on the positive electrode active substance.

(Example 3)

A battery was produced in the same manner as in Example 1 except that the fullerene coated on the positive electrode 1 was changed to $C_{70}$. The treated amount of $C_{70}$ was 0.29% by weight based on the positive electrode active substance. The secondary particle diameter of $C_{70}$ used was from 100 to 200 $\mu$m.

(Example 4)

A battery was produced in the same manner as in Example 2 except that the fullerene coated on the positive electrode 1 was changed to $C_{70}$. The treated amount of $C_{70}$ was 0.59% by weight based on the positive electrode active substance.

(Comparative Example 1)

A battery was produced in the same manner as in Example 1 except that the surface of the positive electrode active substance was not treated with fullerene $C_{60}$ in Example 1 and evaluated for battery characteristics.

(Example 5)

A battery was produced in the same manner as in Example 1 except that a solvent obtained by mixing ethylene carbonate (EC) and propylene carbonate (PC) in a proportion of 1/1 (volume %) was used as the nonaqueous solvent used in the electrolyte solution. The treated amount of $C_{60}$ was 0.26% by weight based on the positive electrode active substance.

(Example 6)

A battery was produced in the same manner as in Example 5 except that the amount of the solution of $C_{60}$ coated on the positive electrode 1 was changed to 0.6 cc to make the treated amount of $C_{60}$ of 1.52% by weight based on the positive electrode active substance.

(Comparative Example 2)

A battery was produced in the same manner as in Example 5 except that the surface of the positive electrode active substance was not treated with fullerene $C_{60}$ in Example 5 and evaluated for battery characteristics.

[Test Example]

The batteries obtained in Examples 1 to 6 and Comparative Examples 1 and 2 were evaluated for battery characteristics.
Among the battery characteristics, the initial characteristics were evaluated by measuring the first cycle charge capacity and the first cycle discharge capacity of the secondary batteries. The capacity herein was obtained as a current capacity per the weight of the positive electrode active substance. The charging conditions were constant current charging with a current value of 0.5 C until 4.2 V, and then constant voltage charging until the current value was lowered to 0.1 C. The discharge conditions were constant current discharging at 0.2 C until 3.0 V.
The float charging was carried out by continuously charging for 1 week by constant voltage charging at 4.2 V under an accelerated condition of 60°C with no current termination condition. Thereafter, the battery was cooled to an ordinary temperature, and subjected to constant current discharging at 0.2 C until 3.0 V to measure the remaining capacity for evaluation of deterioration level. The gas generation amount was calculated from the difference in battery volume obtained by measuring the specific gravity before and after the test. The self-discharge test was evaluated in such a manner that the battery was charged with constant current at a voltage value of 1 C until 4.2 V, followed by charging with constant voltage until the current value was lowered to 0.1 C, and the battery was allowed to stand at 25°C for 120 hours, and the impedance was measured before and after the storage.

The first cycle charge capacity, the first cycle discharge capacity, the remaining discharge capacity after float charging, the gas amount generated during float charging, the impedance before and after the self-discharge test, and the increasing rate of the impedance are shown in Table 1.

Table 1

| | Treatment of surface of active substance | | | Electrolyte solution | Initial capacity | |
|---|---|---|---|---|---|---|
| | Treated species | Treated amount (% by weight) | Treated target | Solvent species | Charge capacity (mAh/g) | Discharge capacity (mAh/g) |
| Example 1 | $C_{60}$ | 0.27 | positive electrode active substance | EC/DMC | 155 | 142 |
| Example 2 | $C_{60}$ | 0.64 | positive electrode active substance | EC/DMC | 156 | 141 |
| Example 3 | $C_{70}$ | 0.29 | positive electrode active substance | EC/DMC | 156 | 142 |
| Example 4 | $C_{70}$ | 0.59 | positive electrode active substance | EC/DMC | 156 | 141 |
| Comparative Example 1 | none | 0 | none | EC/DMC | 155 | 142 |
| Example 5 | $C_{60}$ | 0.26 | positive electrode active substance | PC/EC | 153 | 141 |
| Example 6 | $C_{60}$ | 1.52 | positive electrode active substance | PC/EC | 153 | 141 |
| Comparative Example 2 | none | 0 | none | PC/EC | 154 | 142 |

Table 1 (continued)

| | Float charging characteristics | | Change in impedance upon self-discharge | | |
|---|---|---|---|---|---|
| | Remaining discharge capacity (mAh/g) | Gas generation amount (cc) | Discharge ($\Omega$) | After discharge ($\Omega$) | Increasing rate |
| Example 1 | 133 | 0.01 | 0.79 | 1.38 | 1.76 |
| Example 2 | 135 | 0.04 | 0.81 | 1.38 | 1.70 |
| Example 3 | 135 | 0.03 | 0.94 | 1.40 | 1.49 |
| Example 4 | 133 | 0.04 | 0.97 | 1.34 | 1.38 |
| Comparative Example 1 | 118 | 0.20 | 0.79 | 1.47 | 1.87 |
| Example 5 | 131 | 0.01 | 1.79 | 1.77 | 0.95 |
| Example 6 | 133 | 0.01 | 1.90 | 2.34 | 1.23 |
| Comparative Example 2 | 127 | 0.15 | 1.75 | 2.13 | 1.22 |

It is understood from Table 1 that upon treating the surface of the positive electrode active substance with fullerene (C60 and C70), the remaining discharge capacity after float charging is increased, and the battery and furthermore the positive electrode are suppressed from being deteriorated. It is also understood that the gas generation amount is decreased, and the side reactions, such as decomposition of the electrolyte solution, on the surface of the positive electrode active substance are suppressed. The higher effect in this regard is obtained in the system containing a linear carbonate (dimethyl carbonate: DMC). By making fullerene present on the surface of the positive electrode active substance, there is substantially no influence on the initial characteristics, and the battery characteristics are not impaired by the treatment. And it is understood from the result of the self-discharge test that the presence of fullerene on the surface of the positive electrode active substance slightly increase the impedance in the initial stage, but there is such a tendency that the increasing rate of the resistance before and after self-discharge is suppressed. It is estimated that this is because the resistance increase due to decomposition of the electrolyte solution is reduced, and means that the battery is further stabilized in the charged state.

It is understood from the comparison between Examples 1 to 4 and Examples 5 and 6 that the sufficient effect is obtained for suppressing the gas generation only with a slight amount of fullerene that covers the surface of the positive electrode active substance, and there is no disadvantage on characteristics. This means that an unnecessary amount of more of fullerene is not necessary. While fullerene is still suffering high cost, the invention can reduce the amount of fullerene used, and thus a lithium secondary battery can be greatly improved in safety with the cost of the positive electrode material being effectively suppressed.

(Example 7)

[Treatment of Surface of Positive Electrode Active Substance]

A fullerene C60 derivative having biphenylyl groups introduced as substituents (number of biphenylyl groups introduced: 5, number of hydrogen group introduced: 1) was dissolved in TMB to a concentration of 10 mg/mL, and a supernatant fluid after dissolving was collected. The concentration of the solution was 1.5 mg/mL from the measurement of the insoluble matters. 0.1 cc of the solution was coated on the positive electrode 1 for impregnation. After drying the solvent, the positive electrode was dried by heating to 150°C for 30 minutes to obtain a positive electrode having the surface of the positive electrode active substance treated with fullerene. The treated amount of the $C_{60}$ derivative was 0.3% by weight based on the positive electrode active substance.

The electrolyte solution was obtained by using ethylene carbonate (EC) and dimethyl carbonate (DMC) in a proportion of 1/1 (volume %) as a nonaqueous solvent, and dissolving $LiPF_6$ in the nonaqueous solvent in a concentration of 1 mole/L. 5 parts of phenyl ether was added to 100 parts of the electrolyte solution to obtain an electrolyte solution.

A battery was produced in the same manner as in Example 1 except for the aforementioned procedures.

(Example 8)

A battery was produced in the same manner as in Example 7 except that 8 parts of phenyl ether was added to 100 parts by weight of the electrolyte solution to obtain an electrolyte solution.

(Comparative Example 3)

A battery was produced in the same manner as in Example 7 except that the surface of the positive electrode active substance was not treated with the fullerene $C_{60}$ derivative in Example 7 and evaluated for battery characteristics.

(Comparative Example 4)

A battery was produced in the same manner as in Example 8 except that the surface of the positive electrode active substance was not treated with the fullerene $C_{60}$ derivative in Example 8 and evaluated for battery characteristics.

[Test Example]

The batteries obtained in Examples 7 to 8 and Comparative Examples 3 and 4 were evaluated for battery characteristics.

Among the battery characteristics, the initial characteristics were evaluated by measuring the first cycle charge capacity and the first cycle discharge capacity of the secondary batteries. The capacity herein was obtained as a current capacity per the weight of the positive electrode active substance. The charging conditions were constant current charging with a current value of 0.5 C until 4.2 V, and then constant voltage charging until the current value was lowered to 0.1 C. (The charge capacity measured herein was designated as a normal charge capacity.) The discharge conditions were constant current discharging at 0.2 C until 3.0 V.

In the overcharge test, the battery having been discharged with constant current at 0.2 C until 3.0 Vwas subjected to constant voltage charging at 4.95 V for evaluation.

The first cycle discharge capacity, the time until reaching 4. 95 V in the overcharge test, and the overcharge degree at the time reaching 4.95 V, measured according to the aforementioned procedures are shown in Table 2.

The overcharge degree is a ratio of the capacity having been charged beyond the normal charge capacity with respect to the difference (the capacity capable of being overcharged) between the theoretical capacity of the positive electrode active substance (274 mAh/g) and the normal charge capacity. The overcharge degree shows the extent of progress of overcharge, and a larger value thereof means higher instability. Since the instability of the positive electrode active substance of the lithium secondary battery is increased with the progress of overcharge, it is considered that a battery having a lower overcharge degree has higher safety.

Table 2

| | Discharge capacity (mAh/g) | 1 C overcharge test | | |
|---|---|---|---|---|
| | | Time until 4.95 V (min) | Charge capacity until 4.95 V (mAh/g) | Overcharge degree (%) |
| Example 7 | 141.3 | 84.0 | 186.2 | 33.8 |
| Comparative Example 3 | 142.5 | 86.9 | 192.6 | 38.1 |
| Example 8 | 140.8 | 70.6 | 156.6 | 11.9 |
| Comparative Example 4 | 143.0 | 75.6 | 167.4 | 18.6 |

It is understood from Table 2 that upon treating the surface of the positive electrode active substance with the fullerene $C_{60}$ derivative, the battery voltage reaches the prescribed voltage in the earlier stage of charging in both the electrolyte solutions. This means that the lithium secondary battery can operate a protective circuit in the relatively safe stage to terminate abnormal charging.

(Example 9)

[Fullerene Compound Supporting Step (Surface Treatment with Fullerene Compound)]

30 g of a lithium-cobalt complex oxide (LiCoO$_2$, BET surface area: 0.45 m$^2$/g, average particle diameter: 5 μm) as a substrate was weighed in a 100 cc-beaker, to which 30 mL of a 1,2-dimethylbenzene solution of fullerene C$_{60}$ (concentration: 5 mg/mL) was added, followed by well stirring, to obtain a paste mixture. The mixture was dried in an oven at 90°C under a nitrogen stream for 3 hours to remove the solvent, and thus powder was obtained. The proportion of fullerene to the lithium-cobalt complex oxide was 0.50% by weight.

[Production of Positive Electrode]

90 parts by weight of the surface-treated lithium-cobalt complex oxide (LiCoO$_2$) as a positive electrode active substance, 5 parts by weight of polyvinylidene fluoride, 5 parts by weight of acetylene black and 80 parts by weight of dimethylformamide (produced by Tokyo Kasei Kogyo Co., Ltd.) were mixed to obtain a positive electrode coating composition.

The coating composition was coated on an aluminum foil (thickness: 20 μm) with a doctorblade (blade coater) and dried, followed by subjecting to a roll press treatment at a linear pressure of 100 kN/m, to obtain a positive electrode. The positive electrode was then cut into a prescribed size (effective positive electrode area: 51.5mmx31.7mm) to obtain a positive electrode 1' in a flat plate form.

[Production of Negative Electrode]

A graphite material 1 (MPG, a trade name, produced by Mitsubishi Chemical Corp.) and a graphite material 2 (MCMB6-28, a trade name, produced by Osaka Gas Co., Ltd.) were used as a negative electrode material in a proportion of graphite material 1/graphite material 2 = 5/1 (weight ratio). 90 parts by weight of the negative electrode material, 10 parts by weight of polyvinylidene fluoride and 150 parts by weight of N-methyl-2-pyrrolidone were kneaded to obtain a negative electrode coating composition.

The coating composition was coated on a copper foil (thickness: 10 μm) with a doctorblade (bladecoater) and dried, followed by subjecting to a roll press treatment at a linear pressure of 100 kN/m, to obtain a negative electrode. The negative electrode was then cut into the prescribed size to obtain a negative electrode. The negative electrode thus obtained had a thickness of the electrode material layer of 62.5 μm.

[Production of Battery]

After attaching terminals for taking out electric current to the positive electrode and the negative electrode, they were laminated through a separator having a thickness of 16 μm produced with polyethylene and housed in a housing formed of a laminated film. An electrolyte solution was charged in the housing before sealing the housing. The electrolyte solution was obtained by using ethylene carbonate (EC) and dimethyl carbonate (DMC) in a proportion of 1/1 (volume %) as a nonaqueous solvent, and dissolving LiPF$_6$ in the nonaqueous solvent in a concentration of 1 mole/L.

(Example 10)

A battery was produced in the same manner as in Example 9 except that the amount of the 1,2-dimethylbenzene solution (concentration: 5 mg/mL) was 15 mL, and the treated amount of C60 was 0.25% by weight based on the positive electrode active substance.

(Comparative Example 5)

A battery was produced in the same manner as in Example 9 except that the [Fullerene Compound Supporting Step (Surface Treatment with Fullerene Compound)] was omitted, in the [Production of Positive Electrode], 90 parts of the positive electrode active substance was changed to 89.55 parts of a lithium-cobalt complex oxide having not been treated with fullerene C$_{60}$ on the surface of the positive electrode active substance, and 0.45 part of fullerene C$_{60}$ was mixed with the lithium-cobalt complex oxide, in Example 9. The comparative example corresponds to the case where in Example 9, the proportion of fullerene with respect to the lithium-cobalt complex oxide was 0. 50% by weight, and fullerene was not present on the surface of the active substance, but was simply mixed therewith.

(Comparative Example 6)

A battery was produced in the same manner as in Example 9 except that the [Fullerene Compound Supporting Step (Surface Treatment with Fullerene Compound)] was omitted, in the [Production of Positive Electrode], 90 parts of the positive electrode active substance was changed to 85.5 parts of a lithium-cobalt complex oxide having not been treated with fullerene $C_{60}$ on the surface of the positive electrode active substance, and 4.5 parts of fullerene $C_{60}$ was mixed with the lithium-cobalt complex oxide, in Example 9. The comparative example corresponds to the case where in Example 9, the proportion of fullerene with respect to the lithium-cobalt complex oxide was 5.0% by weight, and fullerene was not present on the surface of the active substance, but was simply mixed therewith.

(Comparative Example 7)

A battery was produced in the same manner as in Example 9 except that the [Fullerene Compound Supporting Step (Surface Treatment with Fullerene Compound)] was omitted, and in the [Production of Positive Electrode], 5 parts by weight of acetylene black was replaced by 5 parts by weight of fullerene $C_{60}$, in Example 9.

[Test Example]

The batteries obtained in Examples 9 to 10 and Comparative Examples 5 to 7 were evaluated for battery characteristics.
Among the battery characteristics, the discharge capacity was evaluated by measuring the first cycle discharge capacity of the secondary battery. The capacity herein was obtained as a current capacity per the weight of the positive electrode active substance. The charging conditions were constant current charging with a current value of 0.5 C until 4.2 V, and then constant voltage charging until the current value was lowered to 0.1 C. The discharge conditions were constant current discharging at 0.2 C until 3.0 V. The 2 C capacity was evaluated in such a manner that after charging the same conditions, the battery was discharged with constant current at 2 C until 3.0 V. The float charging was carried out by continuously charging for 1 week by constant voltage charging at 4.2 V under an accelerated condition of 60°C with no current termination condition. Thereafter, the battery was cooled to an ordinary temperature, and subjected to constant current discharging at 0.2 C until 3.0 V to measure the remaining capacity for evaluation of deterioration level. The gas generation amount was calculated from the difference in battery volume obtained by measuring the specific gravity before and after the test. The self-discharge test was evaluated in such a manner that the battery was charged with constant current at a voltage value of 1 C until 4.2V, followed by charging with constant voltage until the current value was lowered to 0.1 C, and the battery was allowed to stand at 25°C for 120 hours, and the impedance was measured before and after the storage.
The first cycle charge capacity, the first cycle discharge capacity, the remaining discharge capacity after float charging, the gas amount generated during float charging, the impedance before and after the self-discharge test, and the increasing rate of the impedance are shown in Table 3.

Table 3

| | Addition of fullerene $C_{60}$ | | Battery characteristics | |
| --- | --- | --- | --- | --- |
| | Addition method | Treated (added) amount (% by weight) | Discharge capacity (mAh/g) | 2 C capacity (mAh/g) |
| Example 9 | surface treatment | 0.50 | 147 | 144 |
| Example 10 | surface treatment | 0.25 | 146 | 143 |
| Comparative Example 5 | mixing | 0.50 | 147 | 144 |
| Comparative Example 6 | mixing | 5.0 | 149 | 137 |
| Comparative Example 7 | replacement with conductor | - | 141 | 87 |

Table 3 (continued)

| | Float charging characteristics | | Change in impedance upon self-discharge | | |
|---|---|---|---|---|---|
| | Remaining discharge capacity (mAh/g) | Gas generation amount (cc) | Discharge ($\Omega$) | After discharge ($\Omega$) | Increasing rate |
| Example 9 | 138 | 0.04 | 0.89 | 1.43 | 1.62 |
| Example 10 | 138 | 0.01 | 0.83 | 1.40 | 1.69 |
| Comparative Example 5 | 135 | 0.15 | 0.84 | 1.49 | 1.77 |
| Comparative Example 6 | 116 | 0.06 | 1.04 | 1.78 | 1.71 |
| Comparative Example 7 | 99 | 0.00 | 3.76 | 17.1 | 4.56 |

In the table, the treated (added) amount shows the amount of fullerene in terms of percent by weight based on the positive electrode active substance. In Comparative Example 7, fullerene is mixed by replacing acetylene black as the electroconductive substance, and thus the addition amount as the treated amount with respect to the positive electrode active substance is not listed.

The capacity was calculated with the total weight of the positive electrode active substance and fullerene as the positive electrode active substance; except for Comparative Example 7. This is because the weight of the powder of the positive electrode active substance having surface-treated with fullerene is practically handled as the weight of the active substance, and it was considered that the weight of fullerene as the treating component was reasonably included therein.

In Comparative Example 7, fullerene was used as the electroconductive material but did not relate to the active substance, and thus the weight of the sole active substance was used as the base.

It is understood from Examples 9 and 10 in Table 3 that the gas generation amount after float charging is decreased by treating the surface of the positive electrode active substance with fullerene ($C_{60}$). That is, it is understood that the side reactions, such as decomposition of the electrolyte solution, on the surface of the positive electrode active substance is suppressed by treating the surface of the positive electrode active substance with fullerene ($C_{60}$).

It is also understood from Comparative Example 5 that a certain effect is obtained in the case where fullerene ($C_{60}$) was mixed, but in order to obtain the sufficient effect, a large amount of fullerene ($C_{60}$) is required to mix as understood from Comparative Example 6. This is because it is considered that in the case of surface treatment, a small amount of fullerene is effectively present on the surface of the positive electrode active substance, on which reaction of gas generation occurs, but in the case of mixing, the probability where the fullerene is present in the vicinity of the surface is decreased. It is considered that the reason why gas generation amount in Comparative Example 7 is small is that the characteristics of the battery are significantly low, which is understood from the low 2 C capacity, the considerably high impedance before self-discharge, and the low discharge capacity after float charging, and consequently, float charging is not normally carried out.

There are some cases where the impedance is certainly increased when the treated amount of fullerene is large, but the increasing rate of impedance is suppressed, and after the self-discharge test, the lithium secondary battery using the positive electrode active substance having been treated with fullerene has a lower impedance value. It is considered that this is because decomposition of the electrolyte solution is suppressed by fullerene being present.

It is understood from the aforementioned results that the lithium secondary battery is further stabilized in the charged state. The initial characteristics of the lithium secondary battery are substantially not influenced by the treatment with fullerene, and thus the battery characteristics are not impaired by the treatment.

It is understood from Comparative Example 6 that in the case where a large amount of fullerene is mixed, the resistance of the lithium secondary battery is increased to lower the capacity with a large current. The effect of suppressing the increase in resistance upon self-discharge is also small. It is considered from the results that the effects are not sufficiently exerted unless fullerene is present on the surface of the positive electrode active substance. In the case where fullerene is contained in a large amount, the proportion of the active substance is decreased to lower the total capacity of the battery upon considering the capacity per unit weight of the whole battery. The cost of the material is also increased due to the necessity of a large amount of fullerene.

It is understood from the comparison of Comparative Example 7 that in the case where the electroconductive material is replaced by fullerene, the electroconductivity of the electrode is lowered, whereby the battery resistance considerably increased, and the capacity with a large current is also lowered. It is understood from the results that fullerene has insufficient electroconductivity, and thus it is difficult to ensure the sufficient battery characteristics.

(Example 11)

[Fullerene Compound Supporting Step (Surface Treatment with Fullerene Compound)]

2 g of a lithium-cobalt complex oxide ($LiCoO_2$, BET surface area: 0.45 $m^2/g$, average particle diameter: 5 $\mu m$) as a positive electrode active substance was weighed in a 50 cc-beaker, to which 0.4 mL of a 1, 2-dimethylbenzene solution of fullerene $C_{60}$ (concentration: 5 mg/mL) and 0.6 mL of toluene were added, followedbywell stirring, to obtain apastemixture. Themixture was dried in an oven at 90°C under a nitrogen stream for 3 hours to remove the solvent, and thus processed powder was obtained. The proportion of fullerene to the lithium-cobalt complex oxide was 0.1% by weight.

[Production of Positive Electrode]

85 parts by weight of the surface-treated lithium-cobalt complex oxide ($LiCoO_2$) as a positive electrode active substance, 5 parts by weight of polytetrafluoroethylene and 10 parts by weight of acetylene black were kneaded in a mortar to obtain a positive electrode composition.

The composition was spread and punched out in a diameter of 13 mm, to which an aluminum mesh was superimposed, followed by pressing at a pressure of 1 kN/cm$^2$. Thereafter, the composition was heated at 110°C for 30 minutes to obtain a positive electrode.

[Production of Coin cell]

Upon producing a coin cell, a Li metallic foil (thickness: 0.5 mm, diameter: 14 mm), an electrolyte solution and a separator were used. The electrolyte solution used was as follows.

The electrolyte solution contained ethylene carbonate and dimethyl carbonate (both produced by Mitsubishi Chemical Corp.) in a proportion of 1/1 (% by volume) as a nonaqueous solvent, and LiPF$_6$ as a lithium salt. The concentration of the lithium salt was 1 mole/L.

(Example 12)

[Fullerene Compound Supporting Step (Surface Treatment with Fullerene Compound)]

2 g of a lithium-cobalt complex oxide (LiCoO$_2$, BET surface area: 0.45 m$^2$/g, average particle diameter: 5 μm) as a positive electrode active substance was weighed in a 50 cc-beaker, to which 2 mL of a 1,2-dimethylbenzene solution of fullerene C$_{60}$ (concentration: 5 mg/mL) was added, followed by well stirring, to obtain a paste mixture. The mixture was dried in an oven at 90°C under a nitrogen stream for 3 hours to remove the solvent, and thus processed powder was obtained. The proportion of fullerene to the lithium-cobalt complex oxide was 0.5% by weight.

The production of the positive electrode and the production of the coin cell were carried out in the same manner as in Example 11 to produce a coin cell.

(Example 13)

The processed powder and the coin cell were produced in the same manner as in Example 13 except that 4 mL of the 1,2-dimethylbenzene solution of fullerene C$_{60}$ (concentration: 5 mg/mL) was added in Example 12. The proportion of fullerene to the lithium-cobalt complex oxide in the processed powder was 1.0% by weight.

(Example 14)

The processed powder and the coin cell were produced in the same manner as in Example 13 except that 20 mL of the 1,2-dimethylbenzene solution of fullerene C$_{60}$ (concentration: 5 mg/mL) was added in Example 12. The proportion of fullerene to the lithium-cobalt complex oxide in the processed powder was 4.8% by weight.

(Example 15)

The processed powder and the coin cell were produced in the same manner as in Example 13 except that 40 mL of the 1,2-dimethylbenzene solution of fullerene C$_{60}$ (concentration: 5 mg/mL) was added in Example 12. The proportion of fullerene to the lithium-cobalt complex oxide in the processed powder was 9.1% by weight.

(Comparative Example 8)

A battery was produced in the same manner as in Example 11 except that the [Fullerene Compound Supporting Step (Surface Treatment with Fullerene Compound)] was omitted, in the [Production of Positive Electrode], 85 parts of the positive electrode active substance was changed to 84.915 parts of a lithium-cobalt complex oxide having not been treated with fullerene C$_{60}$ on the surface of the positive electrode active substance, and 0.085 part of fullerene C$_{60}$ was mixed with the lithium-cobalt complex oxide, in Example 11. In this comparative example, the proportion of fullerene with respect to the lithium-cobalt complex oxide was 0.10% by weight, so it corresponds to the case where in Example 11, fullerene was not present on the surface of the active substance, but was simply mixed therewith.

(Comparative Example 9)

A battery was produced in the same manner as in Example 12 except that the [Fullerene Compound Supporting Step (Surface Treatment with Fullerene Compound)] was omitted, in the [Production of Positive Electrode], 85 parts of the positive electrode active substance was changed to 84.58 parts of a lithium-cobalt complex oxide having not been treated with fullerene $C_{60}$ on the surface of the positive electrode active substance, and 0.42 part of fullerene $C_{60}$ was mixed with the lithium-cobalt complex oxide, in Example 12. The comparative example corresponds to the case where in Example 12, the proportion of fullerene with respect to the lithium-cobalt complex oxide was 0.50% by weight, and fullerene was not present on the surface of the active substance, but was simply mixed therewith.

(Comparative Example 10)

A battery was produced in the same manner as in Example 13 except that the [Fullerene Compound Supporting Step (Surface Treatment with Fullerene Compound)] was omitted, in the [Production of Positive Electrode], 85 parts of the positive electrode active substance was changed to 84.16 parts of a lithium-cobalt complex oxide having not been treated with fullerene $C_{60}$ on the surface of the positive electrode active substance, and 0.84 part of fullerene $C_{60}$ was mixed with the lithium-cobalt complex oxide, in Example 12. The comparative example corresponds to the case where in Example 13, the proportion of fullerene with respect to the lithium-cobalt complex oxide was 1.0% by weight, and fullerene was not present on the surface of the active substance, but was simply mixed therewith.

(Comparative Example 11)

A battery was produced in the same manner as in Example 14 except that the [Fullerene Compound Supporting Step (Surface Treatment with Fullerene Compound)] was omitted, in the [Production of Positive Electrode], 85 parts of the positive electrode active substance was changed to 80.95 parts of a lithium-cobalt complex oxide having not been treated with fullerene $C_{60}$ on the surface of the positive electrode active substance, and 4.05 parts of fullerene $C_{60}$ was mixed with the lithium-cobalt complex oxide, in Example 12. The comparative example corresponds to the case where in Example 14, the proportion of fullerene with respect to the lithium-cobalt complex oxide was 4.8% by weight, and fullerene was not present on the surface of the active substance, but was simply mixed therewith.

(Comparative Example 12)

A battery was produced in the same manner as in Example 15 except that the [Fullerene Compound Supporting Step (Surface Treatment with Fullerene Compound)] was omitted, in the [Production of Positive Electrode], 85 parts of the positive electrode active substance was changed to 77.3 parts of a lithium-cobalt complex oxide having not been treated with fullerene $C_{60}$ on the surface of the positive electrode active substance, and 7.7 parts of fullerene $C_{60}$ was mixed with the lithium-cobalt complex oxide, in Example 12. The comparative example corresponds to the case where in Example 15, the proportion of fullerene with respect to the lithium-cobalt complex oxide was 9. 1% by weight, and fullerene was not present on the surface of the active substance, but was simply mixed therewith.

(Comparative Example 13)

A battery was produced in the same manner as in Example 11 except that the [Fullerene Compound Supporting Step (Surface Treatment with Fullerene Compound)] was omitted in Example 11. What were obtained were a non-treated lithium-cobalt complex oxide and an ordinary coin cell.

(Comparative Example 14)

A battery was produced in the same manner as in Example 11 except that the [Fullerene Compound Supporting Step (Surface Treatment with Fullerene Compound)] was omitted, and in the [Production of Positive Electrode], 75 parts by weight of a lithium-cobalt complex oxide ($LiCoO_2$), 10 parts by weight of polytetrafluoroethylene and 5 parts by weight of acetylene black were kneaded in a mortar to obtain a positive electrode composition, in Example 11.

(Comparative Example 15)

A battery was produced in the same manner as in Example 11 except that the [Fullerene Compound Supporting Step (Surface Treatment with Fullerene Compound)] was omitted, and in the [Production of Positive Electrode], 75 parts by weight of a lithium-cobalt complex oxide ($LiCoO_2$), 10 parts by weight of polytetrafluoroethylene and 5 parts by weight of fullerene $C_{60}$ were kneaded in a mortar to obtain a positive electrode composition, in Example 11. What was obtained was a coin cell using fullerene $C_{60}$ as an electroconductive material in Comparative Example 14.

(Comparative Example 16)

A battery was produced in the same manner as in Example 11 except that the [Fullerene Compound Supporting Step (Surface Treatment with Fullerene Compound)] was omitted, and in the [Production of Positive Electrode], 75 parts by weight of a lithium-cobalt complex oxide ($LiCoO_2$) and 10 parts by weight of polytetrafluoroethylene were kneaded in a mortar to obtain a positive electrode composition, in Example 11. What was obtained was a coin cell obtained by removing acetylene black as an electroconductive material in Comparative Example 14.

(Comparative Example 17)

A battery was produced in the same manner as in Example 11 except that the [Fullerene Compound Supporting Step (Surface Treatment with Fullerene Compound)] was omitted, and in the [Production of Positive Electrode], 90 parts by weight of a lithium-cobalt complex oxide ($LiCoO_2$) and 10 parts by weight of polytetrafluoroethylene were kneaded in a mortar to obtain a positive electrode composition, in Example 11. What was obtained was such a coin cell obtained by removing acetylene black as an electroconductive material in Comparative Example 14, in which a lithium-cobalt complex oxide in an amount nearly equivalent to the amount of the removed acetylene black was added to compensate the influence of the change in electrode structure due to the increase of the relative proportion of polytetrafluoroethylene with respect to the powder.

(Comparative Example 18)

A battery was produced in the same manner as in Example 11 except that the [Fullerene Compound Supporting Step (Surface Treatment with Fullerene Compound)] was omitted in Example 11. What were obtained were a non-treated lithium-cobalt complex oxide and an ordinary coin cell.

(Comparative Example 19)

A battery was produced in the same manner as in Example 11 except that the [Fullerene Compound Supporting Step (Surface Treatment with Fullerene Compound)] was omitted, and in the [Production of Positive Electrode], 10 parts by weight of acetylene black was replaced by 10 parts by weight of fullerene $C_{60}$, in Example 11. What was obtained was a coin cell using a non-treated lithium-cobalt complex oxide and using fullerene $C_{60}$ as an electroconductive material.

(Comparative Example 20)

A battery was produced in the same manner as in Example 11 except that the [Fullerene Compound Supporting Step (Surface Treatment with Fullerene Compound)] was omitted, and in the [Production of Positive Electrode], 75 parts by weight of a lithium-cobalt complex oxide ($LiCoO_2$), 10 parts by weight of polytetrafluoroethylene and 5 parts by weight of acetylene black were kneaded in a mortar to obtain a positive electrode composition, in Example 11.

(Comparative Example 21)

A battery was produced in the same manner as in Example 11 except that the [Fullerene Compound Supporting Step (Surface Treatment with Fullerene Compound)] was omitted, and in the [Production of Positive Electrode], 75 parts by weight of a lithium-cobalt complex oxide ($LiCoO_2$), 10 parts by weight of polytetrafluoroethylene and 5 parts by weight of fullerene $C_{60}$ were kneaded in a mortar to obtain a positive electrode composition, in Example 11. What was obtained was a coin cell using fullerene $C_{60}$ as an electroconductive material in Comparative Example 20.

(Comparative Example 22)

A battery was produced in the same manner as in Example 11 except that the [Fullerene Compound Supporting Step (Surface Treatment with Fullerene Compound)] was omitted, and in the [Production of Positive Electrode], 75 parts by weight of a lithium-cobalt complex oxide ($LiCoO_2$) and 10 parts by weight of polytetrafluoroethylene were kneaded in a mortar to obtain a positive electrode composition, in Example 11. What was obtained was a coin cell obtained by removing acetylene black as an electroconductive material in Comparative Example 20.

(Comparative Example 23)

A battery was produced in the same manner as in Example 11 except that the [Fullerene Compound Supporting Step (Surface Treatment with Fullerene Compound)] was omitted, and in the [Production of Positive Electrode], 90 parts by weight of a lithium-cobalt complex oxide ($LiCoO_2$) and 10 parts by weight of polytetrafluoroethylene were kneaded in a mortar to obtain a positive electrode composition, in Example 11. What was obtained was such a coin cell obtained by removing acetylene black as an electroconductive material in Comparative Example 20, in which a lithium-cobalt complex oxide in an amount nearly equivalent to the amount of the removed acetylene black was added to compensate the influence of the change in electrode structure due to the increase of the relative proportion of polytetrafluoroethylene with respect to the powder.

(Comparative Example 24)

A battery was produced in the same manner as in Example 11 except that the [Fullerene Compound Supporting Step (Surface Treatment with Fullerene Compound)] was omitted, and in the [Production of Positive Electrode], 75 parts by weight of a lithium-cobalt complex oxide ($LiCoO_2$), 5 parts by weight of polytetrafluoroethylene and 20 parts by weight of acetylene black were kneaded in a mortar to obtain a positive electrode composition, in Example 11.

(Comparative Example 25)

A battery was produced in the same manner as in Example 11 except that the [Fullerene Compound Supporting Step (Surface Treatment with Fullerene Compound)] was omitted, and in the [Production of Positive Electrode], 75 parts by weight of a lithium-cobalt complex oxide ($LiCoO_2$), 5 parts by weight of polytetrafluoroethylene and 20 parts by weight of fullerene $C_{60}$ were kneaded in a mortar to obtain a positive electrode composition, in Example 11. What was obtained was a coin cell using fullerene $C_{60}$ as an electroconductive material in Comparative Example 24.

[Test Example]

XPS measurement of the powder obtained in Examples 11 to 15 and Comparative Examples 8 to 25 and evaluation of the coin cells obtained therein were carried out.

[Measurement Conditions for X-ray Photoelectron Spectroscopy]

A double face adhesive tape was attached to a metallic plate, on which a sample to be evaluated (a positive electrode material having the fullerene compound present on the surface thereof or a positive electrode material obtained by simply mixing the fullerene compound) was sprinkled to a thickness hiding the tape, and pressed to make a smooth surface. The resulting specimen was fixed to a holder.
A monochromatic Al K$\alpha$ ray (16 kV, 30 W) was used as a light source for measurement, and the measurement was carried out under the following conditions. Upon measurement, an electron neutralization gun was used for charge compensation.

    Pass energy: 23.5 eV
    Measurement area: 0.5 mm in square
    Withdrawing angle: 45°

The photoelectrons to be measured were the 3p orbital and the 2p orbital of the cobalt atom. The 2p orbital was split due to the spin orbital interaction, and the peak of the 3/2 level was used.
As the measuring equipment for X-ray photoelectron spectroscopy, PHI-Quantum 2000, produced by Physical Electronics, Inc. was used. The evaluation of the peak area of the 3p orbital and the peak area of the 2p orbital was made by using the baseline fitting analysis, the peak fitting analysis, and the relative sensitivity compensation coefficients for the respective elements, provided for the equipment, and values converted to the surface element proportions were used.
Specifically, the start points and the end points were determined for the peak of the 2p orbital of cobalt, the peak of the 3p orbital of cobalt and the elements to be measured of the evaluation sample (a positive electrode material having the fullerene compound present on the surface thereof or a positive electrode material obtained by simply mixing the fullerene compound), and the start points and the end points were connected by the Shirley method, respectively. The area surrounded by the line connecting the start point and the end point, and the peak was obtained for the 3p orbital of cobalt, the 2p orbital of cobalt and the elements to be measured, respectively, and are designated as the peak areas of the elements to be measured.

Thereafter, by using the relative sensitivity compensation coefficients determined for the respective measured elements, the peak areas of the measured peak of the 3p orbital of the cobalt atom, the measured peak of the 2p orbital of the cobalt atom and the measured peaks of the measured elements of the evaluation sample (a positive electrode material having the fullerene compound present on the surface thereof or a positive electrode material obtained by simply mixing the fullerene compound) were divided by the corresponding relative sensitivity compensation coefficients, respectively, to obtain compensated peak areas of the measured peak of the 3p orbital of the cobalt atom, the measured peak of the 2p orbital of the cobalt atom and the measured peaks of the measured elements of the evaluation sample (a positive electrode material having the fullerene compound present on the surface thereof or a positive electrode material obtained by simply mixing the fullerene compound). The relative sensitivity compensation coefficients of the measured elements in the XPS measuring equipment (PHI-Quantum 2000, produced by Physical Electronics, Inc.) were as follows.

| Co 2p (3/2) | 2.113 |
| Co 3p | 0.486 |
| Li 1s | 0.028 |
| C 1s | 0.314 |
| O 1s | 0.733 |

Finally, the surface element ratio of Co 2p and the surface element ratio of Co 3p represented by the following equations were obtained.

(surface element ratio of Co 2p) = (compensated peak area of 2p orbital of Co atom)/{(compensated peak area of 2p orbital of Co atom) + (compensated peak area of 1s orbital of lithium atom) + (compensated peak area of 1s orbital of carbon atom) + (compensated peak area of 1s orbital of oxygen atom)}

(surface element ratio of Co 3p) = (compensated peak area of 3p orbital of Co atom)/{(compensated peak area of 3p orbital of Co atom) + (compensated peak area of 1s orbital of lithium atom) + (compensated peak area of 1s orbital of carbon atom) + (compensated peak area of 1s orbital of oxygen atom)}

Among the battery characteristics, in Examples 11 to 15 and Comparative Examples 8 to 25, the discharge capacity was evaluated by measuring the first cycle charge and discharge capacities of the secondary battery. The capacity herein was obtained as a current capacity per the weight of the positive electrode active substance. The charging conditions were constant current charging with a current value of 0.1 C until 4.4 V, and then constant voltage charging at 4.4 V until the current value was lowered to 0.01 C. The discharge conditions were constant current discharging at 0.1 C until 2.7 V. An initial efficiency represented by (first cycle discharge capacity)/(first cycle charge capacity) was calculated. The cycle characteristics was evaluated in such a manner that such a cycle was repeated in 10 times that after the battery was charged with constant current at a current value of 1 C until 4.5 V, constant voltage charging at 4.5 V was carried out until the current value was lowered to 0.025 C, and then constant current discharging at a current value of 1 C until 2. 7 V, and thereafter, the maintenance ratio of the discharge capacities of the first cycle and the tenth cycle was evaluated. In Comparative Examples 18 to 25, in order to prevent the batteries frombeing deteriorated due to a high voltage, the battery capacity was evaluated by changing the voltage for the first cycle charging to 4.3 V and the voltage for discharging to 3.2 V.

The surface element ratios measured by the XPS measurement, the first cycle charge capacity, the first cycle discharge capacity, the initial efficiency and the cycle characteristics, thus measured are shown in Table 4.

Table 4

| | Addition of fullerene $C_{60}$ | | Measurement of powder by XPS | | |
|---|---|---|---|---|---|
| | Method of addition | Treated (added) amount (% by weight) | Surface element ratio of Co by Co 3p (% by atom) | Surface element ratio of Co by Co 2p (% by atom) | Ratio of Co 3p / Co 2p |
| Example 11 | surface treatment | 0.1 | 15.1 | 15.0 | 1.01 |
| Example 12 | surface treatment | 0.5 | 12.7 | 12.5 | 1.02 |
| Example 13 | surface treatment | 1.0 | 12.5 | 11.7 | 1.07 |
| Example 14 | surface treatment | 4.8 | 11.4 | 9.6 | 1.20 |
| Example 15 | surface treatment | 9.1 | 8.8 | 7.6 | 1.16 |
| Comparative Example 8 | mixing | 0.1 | 14.8 | 14.9 | 0.99 |
| Comparative Example 9 | mixing | 0.5 | 14.1 | 14.1 | 1.00 |
| Comparative Example 10 | mixing | 1.0 | 14.1 | 14.6 | 0.96 |
| Comparative Example 11 | mixing | 4.8 | 12.0 | 11.0 | 1.09 |
| Comparative Example 12 | mixing | 9.1 | 13.1 | 13.5 | 0.97 |
| Comparative Example 13 | none | 0.00 | 15.5 | 15.5 | 1.00 |
| Comparative Example 14 | none | 0.00 | – | – | – |
| Comparative Example 15 | Substitution of conductive material | – | – | – | – |
| Comparative Example 16 | none | 0.00 | – | – | – |

Table 4 (continued)

| | Battery characteristics | | | |
|---|---|---|---|---|
| | Initial charge capacity (mAh/g) | Initial discharge capacity (mAh/g) | Initial efficiency | Cycle (%)* |
| Example 11 | 182 | 173 | 95.1 | 96.0 |
| Example 12 | 186 | 174 | 93.7 | 95.9 |
| Example 13 | 187 | 171 | 91.3 | 95.2 |
| Example 14 | 178 | 166 | 93.2 | 96.1 |
| Example 15 | 169 | 161 | 95.0 | 88.7 |
| Comparative Example 8 | 184 | 173 | 94.0 | 96.6 |
| Comparative Example 9 | 183 | 171 | 93.6 | 93.1 |
| Comparative Example 10 | – | – | – | – |
| Comparative Example 11 | 177 | 164 | 92.9 | 88.6 |
| Comparative Example 12 | 170 | 157 | 92.5 | 90.4 |
| Comparative Example 13 | 184 | 174 | 94.6 | 96.2 |
| Comparative Example 14 | 177 | 168 | 95.1 | – |
| Comparative Example 15 | 134 | 106 | 79.3 | – |
| Comparative Example 16 | 141 | 118 | 83.5 | – |

\*       unit: mAh/g in parentheses

\*\*      not operated as battery due to battery capacity of 1 mAh/g or less in first cycle

EP 1 560 282 A1

Table 4 (continued)

| | Addition of fullerene $C_{60}$ | | Measurement of powder by XPS | | |
|---|---|---|---|---|---|
| | Method of addition | Treated (added) amount (% by weight) | Surface element ratio of Co by Co 3p (% by atom) | Surface element ratio of Co by Co 2p (% by atom) | Ratio of Co 3p / Co 2p |
| Comparative Example 17 | none | 0.00 | – | – | – |
| Comparative Example 18 | none | 0.00 | – | – | – |
| Comparative Example 19 | Substitution of conductive material | – | – | – | – |
| Comparative Example 20 | none | 0.00 | – | – | – |
| Comparative Example 21 | Substitution of conductive material | – | – | – | – |
| Comparative Example 22 | none | 0.00 | – | – | – |
| Comparative Example 23 | none | 0.00 | – | – | – |
| Comparative Example 24 | none | 0.00 | – | – | – |
| Comparative Example 25 | Substitution of conductive material | – | – | – | – |

Table 4 (continued)

| | Battery characteristics | | | |
|---|---|---|---|---|
| | Initial charge capacity (mAh/g) | Initial discharge capacity (mAh/g) | Initial efficiency | Cycle (%)* |
| Comparative Example 17 | 144 | 120 | 83.4 | – |
| Comparative Example 18 | 167 | 154 | 92.0 | 95.7 |
| Comparative Example 19 | 132 | 89 | 67.2 | (capacity of 1 or less)** |
| Comparative Example 20 | 168 | 154 | 92.2 | 96.5 |
| Comparative Example 21 | 123 | 97 | 78.7 | (capacity of 1 or less)** |
| Comparative Example 22 | 148 | 126 | 84.9 | – |
| Comparative Example 23 | 139 | 114 | 82.0 | – |
| Comparative Example 24 | 166 | 159 | 95.5 | 96.9 |
| Comparative Example 25 | 38 | 5 | 13.0 | (capacity of 1 or less)** |

\*      unit: mAh/g in parentheses

\*\*      not operated as battery due to battery capacity of 1 mAh/g or less in first cycle

EP 1 560 282 A1

In the table, the treated (added) amount shows the amount of fullerene in terms of percent by weight with respect to the positive electrode active substance. In Comparative Examples 15, 19, 21 and 25, fullerene was mixed by substituting acetylene black as the electroconductive material, and thus the added amount is not shown as the treated amount with respect to the positive electrode active substance.

In Examples 11 to 15 and Comparative Examples 8 to 13, the capacity was calculated with the total weight of the positive electrode active substance and fullerene as the weight of the positive electrode activesubstance. This is because the weight of the powder of the positive electrode active substance having surface-treated with fullerene is practically handled as the weight of the active substance, and it was considered that the weight of fullerene as the treating component was reasonably included therein. (In Comparative Example 13, however, the weight of the positive electrode active substance was used as it is since the treated amount was 0%.)

In Comparative Examples 14 to 25, fullerene was not used or was used as the electroconductive material, and did not relate to the active substance, and thus the weight of the sole active substance was used as the base.

It is understood from the results of Examples 11 to 15 and Comparative Examples 8 to 13 that in the case where fullerene ($C_{60}$) is added to the positive electrode active substance in the mode of surface treatment or mixing, the surface existence ratio of Co atoms is lowered. This is because the carbon amount in the powder is increased.

On the other hand, the decrease of the surface existence ratio of Co atoms in the examples using the positive electrode active substance having been treated with fullerene ($C_{60}$) is far larger than the comparative examples and furthermore such an amount that expected from the mixing amount of fullerene ($C_{60}$). It is considered that this is because fullerene is present as a thin film on the surface in the example to shield Co atoms effectively in the XPS measuring the surface to a depth of about 5 nm, whereby the peak area thus detected is decreased beyond the decreasing amount corresponding to the mixing ratio.

In the untreated samples and the mixed samples of Comparative Example 8 to 13, the ratio of Co 3p/Co 2p is fluctuated with no relation to the treated (added) amount of fullerene. In these samples, the value of Co 3p/Co 2p is about 1.0. In Examples 11 to 15, on the other hand, the value exceeds 1.01. It is considered that this is because photoelectrons from the Co 2p orbital suffer larger attenuation due to fullerene present as a thin film on the surface, so as to decrease the intensity.

It is found from the measurement results of the battery characteristics in Examples 11 to 15 and Comparative Examples 8 to 13 that no disadvantage is resulted by treating the surface the positive electrode active substance with fullerene (Examples 11 to 15) in comparison to the untreated positive electrode active substance (Comparative Example 13), except that a higher treated amount of fullerene slightly decreases the battery capacity.

It is understood by comparing the measurement results of the battery characteristics in Comparative Example 14 to 17 that Comparative Example 15 using fullerene as the electroconductive material has lowered battery characteristics. Specifically, the battery of Comparative Example 15 is lower in characteristics than the batteries of Comparative Examples 16 and 17 having an electrode formed only with the positive electrode active substance and polytetrafluoroethylene. It is considered that the reason why the battery of Comparative Example 15 can function as a battery regardless of the low battery characteristics (i.e., the battery has a charge capacity and a discharge capacity) is that the battery functions only with the positive electrode active substance, not that fullerene exerts the function as an electroconductive material. The fact that the battery of Comparative Example 15 has lower battery characteristics than the batteries of Comparative Examples 16 and 17 suggests such a possibility that the presence of the fullerene powder in the electrode impairs the conductive path formation by contact of the positive electrode active substance to lower the battery characteristics.

It is understood from the measurement results of the battery characteristics in Comparative Example 18 to 25 that the aforementioned tendencies are not changed even in the case where the evaluation is carried out by decreasing the voltage upon charging and discharging to reduce the load on the batteries. In particular, the lithium secondary batteries of Comparative Examples 19 and 25 having a higher fullerene mixing ratio have lowered characteristics. It is considered that this is because the electroconductivity cannot be ensured by increasing the amount of fullerene, but the fullerene particles present in a larger amount hinder electric contact of the active substance each other and between the active substance and the current collector to increase the resistance. There is no particular problem in the comparative examples using acetylene black as the electroconductive material (Comparative Examples 18, 20, 24 and 8 to 14) and the examples using acetylene black as the electroconductive material and the active substance having been surface-treated with fullerene.

(Example 16)

(1) Fullerene Compound Supporting Step (Surface Treatment with Fullerene Compound)

45 g of a lithium-cobalt complex oxide (LiCoO$_2$, BET surface area: 0.60 m$^2$/g, average particle diameter: 5 μm) as a substrate was weighed in a 1 L-beaker, to which 4.5 mL of a diphenylsulfide solution of fullerene $C_{60}$ (con-

centration: 10 mg/mL) was added, and 19. 5 mL of a diphenylsulfide solvent (hereinafter, referred to as DPS) was added, followed by well stirring, to obtain a paste mixture. The mixture was dried in an oven at 180°C under a nitrogen stream for 5 hours to remove the solvent, and thus powder 13A was obtained.

(2) Crosslinking Step or Chemically Bonding Step

(Insolubilizing Treatment)

30 g of the powder 13A was weighed in a 1 L-beaker and heated at 350°C under an air stream for 3 hours to attain an insolubilizing treatment, and thus powder 13B was obtained.

(3) Production of Positive Electrode

90 parts by weight of the powder 13B as a positive electrode active substance, 5 parts by weight of polyvinylidene fluoride, 5 parts by weight of acetylene black and 80 parts by weight of N-methyl-2-pyrrolidone (produced by Mitsubishi Chemical Corp.) were mixed to obtain a positive electrode coating composition.
The coating composition was coated, within 3 hours from the production, on an aluminum foil (thickness: 20 μm) with a doctor blade (blade coater) and dried, followed by subjecting to a roll press treatment at a linear pressure of 100 kN/m, to obtain a positive electrode. The positive electrode was then cut into the prescribed size to obtain a positive electrode 2 in a flat plate form.

(4) Production of Negative Electrode

90 parts by weight of graphite as a negative electrode material, 10 parts by weight of polyvinylidene fluoride and 150 parts by weight of N-methyl-2-pyrrolidone were kneaded to obtain a negative electrode coating composition.
The coating composition was coated on a copper foil (thickness: 10 μm) with a doctor blade (blade coater) and dried, followed by subjecting to a roll press treatment at a linear pressure of 100 kN/m, to obtain a negative electrode. The negative electrode was then cut into the prescribed size to obtain a negative electrode.

(5) Production of Battery

After attaching terminals for taking out electric current to the positive electrode and the negative electrode, they were laminated through a separator having a thickness of 16 μm produced with polyethylene and housed in a housing formed of a laminated film. Before sealing the housing, a 1 mole/L solution of $LiPF_6$ with a mixed solvent of ethylene carbonate and dimethyl carbonate in a ratio of 1/1 (volume %) as a nonaqueous solvent was charged.

(Example 17)

A battery was produced in the same manner as in Example 16 except that in the surface treatment with the fullerene compound, the amount of the DPS solution of $C_{60}$ (concentration: 10 mg/mL) was changed to 13.5 mL, and the amount of DPS added was changed to 10.5 mL.

(Example 18)

A battery was produced in the same manner as in Example 16 except that in the surface treatment with the fullerene compound, the amount of the DPS solution of $C_{60}$ (concentration: 10 mg/mL) was changed to 27 mL, and the amount of DPS added was changed to 0 mL.

(Comparative Example 26)

A battery was produced in the same manner as in Example 16 except that the surface treatment with the fullerene compound ((1) Fullerene Compound Supporting Step) and the insolubilizing treatment ((2) Crosslinking Step or Chemically Bonding Step) were omitted, and a lithium-cobalt complex oxide having not been treated was used as it is as the positive electrode active substance, in Example 13.

[Test Example]

The batteries obtained in Examples 16 to 18 and Comparative Example 26 were evaluated for battery characteristics.

The charging conditions were constant current charging with a current value of 0.5 C until 4.2 V, and then constant voltage charging until the current value was lowered to 0.1 C. The discharge conditions were constant current discharging at 0.2 C until 3.0 V.

The self-discharge test was carried out in such a manner that the battery having been charged in the aforementioned conditions was allowed to stand at 25°C for 120 hours, and then discharged with constant current at 0.2 C until 3.0 V.

The impedance values before and after the self-discharge test were obtained by measuring with an impedance analyzer through a potentiostat in a state where the battery was charged to a battery voltage of 3.8 V.

The self-discharge characteristics thus measured are shown as an increasing rate of the impedance values before and after the self-discharge test in Table 5.

Table 5

| | Surface treatment | | Insolubilizing treatment | | Formation of electrode | Self-discharge |
| | Species of treatment | Treated amount (% by weight) | Atmosphere | Temperature | Time of coating after production of coating composition | Resistance increasing rate |
|---|---|---|---|---|---|---|
| Example 16 | $C_{60}$ | 0.1 | air | 350°C | within 1 hour | 1.38 |
| Example 17 | $C_{60}$ | 0.3 | air | 350°C | within 1 hour | 1.33 |
| Example 18 | $C_{60}$ | 0.6 | air | 350°C | within 1 hour | 1.29 |
| Comparative Example 26 | none | 0 | – | – | within 1 hour | 1.7 |

EP 1 560 282 A1

It is understood from Table 5 that increase of the resistance upon storing in a full charged state is suppressed by effecting the surface treatment and the insolubilizing treatment with the fullerene compound ($C_{60}$). It is estimated that this is because the surface of the positive electrode active substance is covered with the fullerene compound to suppress the decomposition reaction of the electrolyte solution on the surface of the instable cobalt-containing oxide in the charged (oxide) state.

(Example 19)

(1) Fullerene Compound Supporting Step (Surface Treatment with Fullerene Compound)

30 g of a lithium-cobalt complex oxide ($LiCoO_2$, BET surface area: 0.60 $m^2/g$, average particle diameter: 5 $\mu$m) as a substrate was weighed in a 1 L-beaker, to which 3 mL of an NMP solution of $C_{60}$ hydroxide (concentration: 10 mg/mL) was added, and 9 mL of NMP was added, followed by well stirring, to obtain a paste mixture. The mixture was dried in an oven at 150°C under a nitrogen stream for 2 hours to remove the solvent, and thus powder 16A was obtained.

(2) Crosslinking Step or Chemically Bonding Step

(Insolubilizing Treatment)

25 g of the powder 16A was weighed in a 1 L-beaker and heated at 400°C under a nitrogen stream for 3 hours to attain crosslinking and/or bonding to the surface of the substrate, and thus powder 16B was obtained.

(3) Production of Positive Electrode

90 parts by weight of the powder 16B as a positive electrode active substance, 5 parts by weight of polyvinylidene fluoride, 5 parts by weight of acetylene black and 80 parts by weight of N-methyl-2-pyrrolidone (produced by Mitsubishi Chemical Corp.) were mixed to obtain a positive electrode coating composition.
The coating composition was coated, within 3 hours from the production, on an aluminum foil (thickness: 20 $\mu$m) with a doctor blade (blade coater) and dried, followed by subjecting to a roll press treatment at a linear pressure of 100 kN/m, to obtain a positive electrode. The positive electrode was then cut into the prescribed size to obtain a positive electrode in a flat plate form.

(4) Production of Negative Electrode

90 parts by weight of graphite as a negative electrode material, 10 parts by weight of polyvinylidene fluoride and 150 parts by weight of N-methyl-2-pyrrolidone were kneaded to obtain a negative electrode coating composition.
The coating composition was coated on a copper foil (thickness: 10 $\mu$m) with a doctor blade (blade coater) and dried, followed by subjecting to a roll press treatment at a linear pressure of 100 kN/m, to obtain a negative electrode. The negative electrode was then cut into the prescribed size to obtain a negative electrode.

(5) Production of Battery

After attaching terminals for taking out electric current to the positive electrode and the negative electrode, they were laminated through a separator having a thickness of 16 $\mu$m produced with polyethylene and housed in a housing formed of a laminated film. Before sealing the housing, a 1 mole/L solution of $LiPF_6$ with a mixed solvent of ethylene carbonate and dimethyl carbonate in a ratio of 1/1 (volume %) as a nonaqueous solvent was charged.

(Example 20)

A battery was produced in the same manner as in Example 19 except that in the surface treatment with the fullerene compound, the amount of the NMP solution of $C_{60}$ (concentration: 10 mg/mL) was changed to 9 mL, and the amount of NMP added was changed to 3 mL.

(Example 21)

A battery was produced in the same manner as in Example 19 except that in the surface treatment with the fullerene compound, the amount of the NMP solution of $C_{60}$ (concentration: 10 mg/mL) was changed to 18 mL, and the amount of NMP added was changed to 0 mL.

(Example 22)

A battery was produced in the same manner as in Example 19 except that the positive electrode coating composition was allowed to stand for 1 week after the production, and the coating composition was again stirred and then coated to produce an electrode.

(Example 23)

A battery was produced in the same manner as in Example 20 except that the positive electrode coating composition was allowed to stand for 1 week after the production, and the coating composition was again stirred and then coated to produce an electrode.

(Example 24)

A battery was produced in the same manner as in Example 21 except that the positive electrode coating composition was allowed to stand for 1 week after the production, and the coating composition was again stirred and then coated to produce an electrode.

(Comparative Example 27)

A battery was produced in the same manner as in Example 19 except that the surface treatment with the fullerene compound ((1) Fullerene Compound Supporting Step) and the insolubilizing treatment ((2) Crosslinking Step or Chemically Bonding Step) were omitted, and a lithium-cobalt complex oxide having not been treated was used as it is as the positive electrode active substance, in Example 19.

[Test Example]

The batteries obtained in Examples 19 to 24 and Comparative Example 27 were evaluated for battery characteristics.
The charging conditions were constant current charging with a current value of 0.5 C until 4.2 V, and then constant voltage charging until the current value was lowered to 0.1 C. The discharge conditions were constant current discharging at 0.2 C until 3.0 V.
The self-discharge test was carried out in such a manner that the battery, which had been charged with constant current at a current value of 0.5 C until 4.2 V and then constant voltage until the current value was lowered to 0.1 C, was allowed to stand at 25°C for 120 hours, and then discharged with constant current at 0.2 C until 3.0 V. The impedance values before and after the self-discharge test were obtained by measuring with an impedance analyzer through a potentiostat in a state where the battery was charged to a battery voltage of 3.8 V.
The self-discharge characteristics thus measured are shown as an increasing rate of the impedance values before and after the self-discharge test in Table 6.

Table 6

| | Surface treatment | | Insolubilizing treatment | | Formation of electrode | Self-discharge |
|---|---|---|---|---|---|---|
| | Species of treatment | Treated amount (% by weight) | Atmosphere | Temperature | Time of coating after production of coating composition | Resistance increasing rate |
| Example 19 | $C_{60}$ hydroxide | 0.1 | nitrogen | 400°C | within 3 hours | 1.17 |
| Example 20 | $C_{60}$ hydroxide | 0.3 | nitrogen | 400°C | within 3 hours | 1.43 |
| Example 21 | $C_{60}$ hydroxide | 0.6 | nitrogen | 400°C | within 3 hours | 1.12 |
| Example 22 | $C_{60}$ hydroxide | 0.1 | nitrogen | 400°C | after 1 week | 0.88 |
| Example 23 | $C_{60}$ hydroxide | 0.3 | nitrogen | 400°C | after 1 week | 1.29 |
| Example 24 | $C_{60}$ hydroxide | 0.6 | nitrogen | 400°C | after 1 week | 1.38 |
| Comparative Example 27 | none | 0 | - | - | within 3 hours | 1.51 |

EP 1 560 282 A1

It is understood from Table 6 that increase of the resistance upon storing in a full charged state is suppressed by effecting the surface treatment and the insolubilizing treatment with the fullerene compound ($C_{60}$ hydroxide) having been crosslinked or bonded to the surface. It is estimated that this is because the surface of the positive electrode active substance is covered with the fullerene compound to suppress the decomposition reaction of the electrolyte solution on the surface of the instable cobalt-containing oxide in the charged (oxide) state. It is also understood from the results of Examples 19 to 21 and 22 to 24 that in the case where NMP, which is used as the solvent in the fullerene compound supporting step and is capable of dissolving $C_{60}$ hydroxide, is used as the solvent for the coating composition for producing the positive electrode, the treated $C_{60}$ hydroxide is not eluted, and the effect is not lost, even after 1 week.

(Example 25)

(1) Fullerene Compound Supporting Step (Surface Treatment with Fullerene Compound)

30 g of a lithium-cobalt complex oxide ($LiCoO_2$, BET surface area: 0.60 m$^2$/g, average particle diameter: 5 μm) as a substrate was weighed in a 100 cc-beaker, to which 15 mL of a 1,2-dimethylbenzene solution of fullerene $C_{60}$ (concentration: 5 mg/mL) was added, followed by well stirring, to obtain a paste mixture. The mixture was dried in an oven at 90°C under a nitrogen stream for 3 hours to remove the solvent, and thus powder 24A was obtained.

(2) Crosslinking Step or Chemically Bonding Step

(Insolubilizing Treatment)

1 g of the powder 24A was weighed in a 100 cc-beaker and heated at 350°C under an air stream for 3 hours to attain crosslinking and/or bonding to the surface of the substrate, and thus powder 24B was obtained.

(3) Evaluation of Insolubilization-24-1

0.1 g of each of the powder 24A and the powder 24B were weighed in 5 cc-sample tubes, respectively, to which 2 mL of 1,2,4-trimethylbenzene (hereinafter, referred to as TMB) was added, followed by well stirring. After leaving at rest for 24 hours, the supernatant liquid was collected and measured for an ultraviolet absorption spectrum, and the concentration of $C_{60}$ was quantitatively determined by comparing the calibration line in a TMB solution. The quantitative determination of the concentration was appropriately effected at times of 120 hours and 624 hours. The measurement of an ultraviolet absorption spectrum was carried out by using an ultraviolet-visible absorption analyzer (Ultraviolet-visible Spectrometer UV-1650-PC, produced by Shimadzu Corp.).

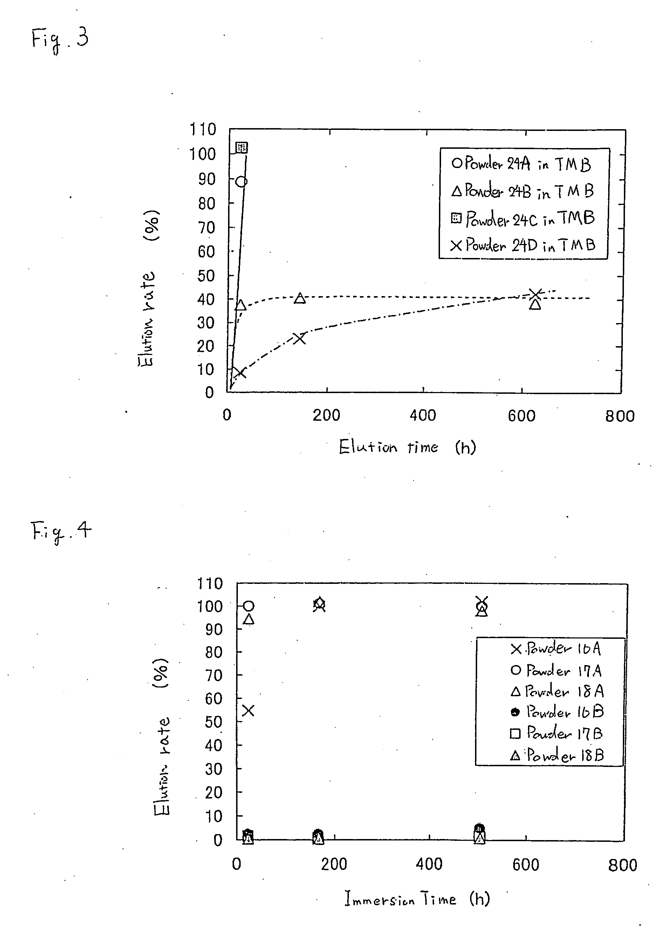

In the case where $C_{60}$ was entirely eluted, the concentration of the $C_{60}$ solution in the sample tube became 0.125 mg/mL as the treated amount of $C_{60}$ to the powder was 2.5 mg/g, from which the concentration thus measured was converted to the elution rate. The time dependency of the resulting elution rate thus obtained is shown in Fig. 3. The elution amounts after 24 hours are shown in Table 6.

(4) Evaluation of Insolubilization-24-2

The same evaluation as in the evaluation of insolubilization 24-1 was carried out except that the solvent used was changed from TMB to N-methyl-2-pyrrolidone (hereinafter, referred to as NMP, grade for lithium secondary battery) in the evaluation of insolubilization 24-1. The time dependency of the resulting elution rate thus obtained is shown in Fig. 3. The elution amounts after 24 hours are shown in Table 7.

Table 7

| Sample | Elution amount after 24 hours (mg/g) |
|---|---|
| Powder 24A in TMB | 2.5 |
| Powder 24B in TMB | 0.94 |
| Powder 24A in NMP | 2.5 |
| Powder 24B in NMP | 0.21 |

(Example 26)

The powder 16A and the powder 16B in Example 19, and the powder in Examples 20 and 21 before the insolubilizing treatment (17A and 18A) and after the insolubilizing treatment (17B and 18B) were confirmed for insolubilization. 0.1 g of each species of the powder were weighed in 10 cc-sample tubes, respectively, to which 3 mL of NMP was added, followed by well stirring. After leaving at rest for 24 hours, the supernatant liquid was collected and measured for an ultraviolet absorption spectrum, and the concentration of $C_{60}$ hydroxide was quantitatively determined by comparing the calibration line in a NMP solution. The quantitative determination of the concentration was appropriately effected at times of 120 hours, 168 hours and 504 hours. The measurement of an ultraviolet absorption spectrum was carried out by using an ultraviolet-visible absorption analyzer (Ultraviolet-visible Spectrometer UV-1650-PC, produced by Shimadzu Corp.).

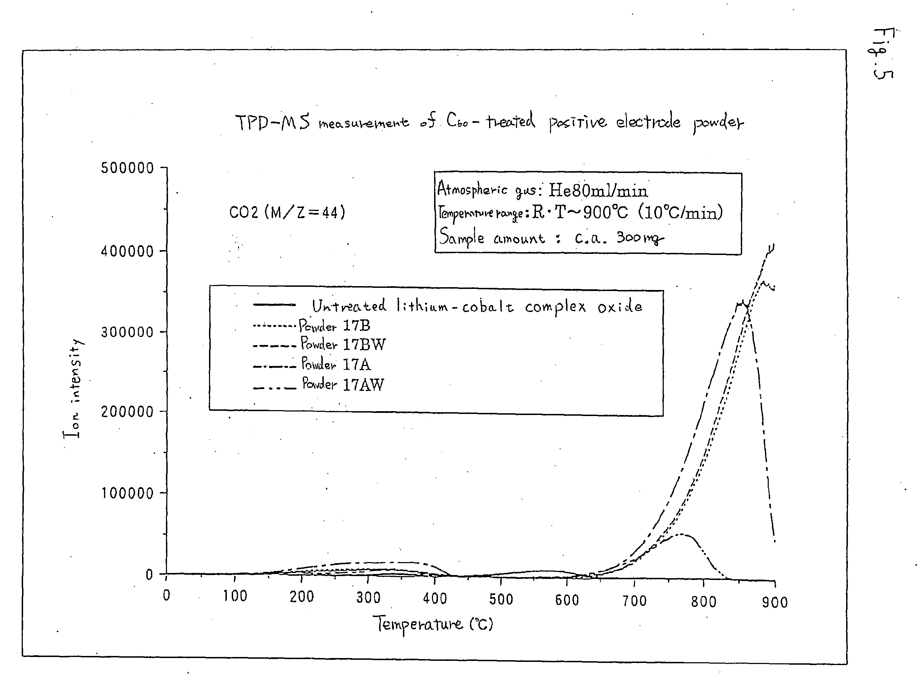

In the case where $C_{60}$ hydroxide was entirely eluted, the concentration of the $C_{60}$ hydroxide solution in the sample tube became 0.033 mg/mL in Example 19, 0.1 mg/mL in Example 20 and 0.2 mg/mL in Example 21, as the treated amount of $C_{60}$ hydroxide to the powder was 1 mg/g in Example 19, 3 mg/g in Example 20 and 6mg/g inExample 21, fromwhich the concentration thus measured was converted to the elution rate. The results of the elution rate thus measured after 24 hours, 168 hours and 504 hours are shown in Fig. 4. The elution amounts after 24 hours are shown in Table 8.

Table 8

| Sample | Elution amount after 24 hours (mg/g) |
|---|---|
| Powder 16A | 0.54 |
| Powder 17A | 3.00 |
| Powder 18A | 5.66 |
| Powder 16B | 0.02 |
| Powder 17B | 0.05 |
| Powder 18B | 0.02 |

(2) Evaluation of Insolubilization 25-2

0.1 g of each of the powder 17A and the powder 17B were weighed in 5 cc-sample tubes, respectively, to which 3 mL of NMP was added, followed by well stirring. After leaving at rest for 24 hours, the mixture was separated by filtration, and the residue of filtration was washed and dried to obtain powder 17AW and powder 17BW. These species of powder were quantitatively determined for the carbon amount on the surface of the powder by TPD-MS (temperature-programmed desorption mass spectroscopy). The TPD-MS was carried out by using the EI method in a He atmosphere with AGS-7000, produced by Anelva Corp.

The measurement was carried out for a lithium-cobalt complex oxide having not been treated, as well as the powder 17A and the powder 17B.

The temperature conditions for the TPD-MS measurement were heating until 900°C at a temperature increasing rate of 10°C per minute. The decomposed components generated upon heating were measured with a mass spectrometer to detect the carbon number by detecting the components having mass numbers of 28 (CO) and 44($CO_2$). Since the fullerene compound was relatively stable in an inert atmosphere, the components detected at a temperature of from 600 to 900°C were designated as those derived from fullerene. The measurement results for the component having a mass number of 44 are shown in Fig. 5. The measurement results for the component having a mass number 28 show the similar tendency as the measurement results for the component having a mass number of 44 but is lower in ion intensity by about one digit in comparison thereto.

It is understood from Fig. 5 that in the results for the untreated lithium-cobalt complex oxide as the comparative sample, the component having a mass number of 44 detected at the respective temperatures is extremely small, and carbon derived from impurities and lithium carbonate present on the surface can be substantially ignored. $CO_2$ is detected from the powder having been treated with fullerene on the surface thereof, which suggests the presence of fullerene.

The carbon dioxide amounts detected in a temperature range of from 600 to 900°C in Fig. 5 are shown in Table 9. The powder 17AW obtained by immersing and filtering the powder 17A having not been subjected to the insolubilizing treatment exhibits a small carbon amount detected, and it is understood therefrom that $C_{60}$ hydroxide is

eluted. In the insolubilized powder 17B and the powder 17BW obtained by immersing and the filtering the same, on the other hand, the carbon amount is substantially not changed before and after immersing in NMP, and it is understood therefrom that the surface-treated $C_{60}$ hydroxide is stable and not eluted to the solvent (NMP).

Table 9

| Sample | $CO_2$ detected amount (µmole/g) |
|---|---|
| untreated | lower than detection limit |
| Powder 17A | 269 |
| Powder 17AW | 42 |
| Powder 17B | 256 |
| Powder 17BW | 275 |

(Example 27)

(1) Fullerene Compound Supporting Step (Surface Treatment with Fullerene Compound)

5 g of silica (BET surface area: 4 $m^2$/g, average particle diameter: 1 µm) as a substrate was weighed in a 100 cc-beaker, to which 2.5 mL of a diphenylsulfide solution of fullerene $C_{60}$ (concentration: 10 mg/mL) was added, and 1.25 mL of dipheylsulfide (hereinafter, referred to as DPS) was added, followed by well stirring, to obtain a paste mixture. The mixture was dried in an oven at 180°C under a nitrogen stream for 5 hours to remove the solvent, and thus powder 26A was obtained.

(2) Crosslinking Step or Chemically Bonding Step

(Insolubilizing Treatment)

3 g of the powder 26A was weighed in a 100 cc-beaker and heated at 350°C under an air stream for 3 hours to attain crosslinking and/or bonding to the surface of the substrate, and thus powder 26B was obtained.

(3) Evaluation of Insolubilization

0.1 g of each of the powder 26A and the powder 26B were weighed in 5 cc-sample tubes, respectively, to which 3 mL of 1,2,4-trimethylbenzene (hereinafter, referred to as TMB) was added, followed by well stirring. After leaving at rest for 24 hours, the supernatant liquid was collected and measured for an ultraviolet absorption spectrum, and the concentration of $C_{60}$ was quantitatively determined by comparing the calibration line in a TMB solution. The measurement of an ultraviolet absorption spectrum was carried out by using an ultraviolet-visible absorption analyzer

(Ultraviolet-visible Spectrometer UV-1650-PC, produced by Shimadzu Corp.).

The quantitative determination results of the elution amounts are shown in Table 10.

(Example 28)

(1) Fullerene Compound Supporting Step (Surface Treatment with Fullerene Compound)

5 g of alumina (BET surface area: 2.2 $m^2$/g, average particle diameter: 1 µm) as a substrate was weighed in a 100 cc-beaker, to which 2.5 mL of a diphenylsulfide solution of fullerene $C_{60}$ (concentration: 10 mg/mL) was added, and 1.25 mL of dipheylsulfide (hereinafter, referred to as DPS) was added, followed by well stirring, to obtain a paste mixture. The mixture was dried in an oven at 180°C under a nitrogen stream for 5 hours to remove the solvent, and thus powder 27A was obtained.

(2) Crosslinking Step or Chemically Bonding Step

(Insolubilizing Treatment)

3 g of the powder 27A was weighed in a 100 cc-beaker and heated at 350°C under an air stream for 3 hours to attain crosslinking and/or bonding to the surface of the substrate, and thus powder 27B was obtained.

(3) Evaluation of Insolubilization

0.1 g of each of the powder 27A and the powder 27B were weighed in 5 cc-sample tubes, respectively, to which 3 mL of 1,2,4-trimethylbenzene (hereinafter, referred to as TMB) was added, followed by well stirring. After leaving at rest for 24 hours, the supernatant liquid was collected and measured for an ultraviolet absorption spectrum, and the concentration of $C_{60}$ was quantitatively determined by comparing the calibration line in a TMB solution. The measurement of an ultraviolet absorption spectrum was carried out by using an ultraviolet-visible absorption analyzer (Ultraviolet-visible Spectrometer UV-1650-PC, produced by Shimadzu Corp.).
The quantitative determination results of the elution amounts are shown in Table 10.

Table 10

| Sample | Elution amount after 24 hours (mg/g) |
|---|---|
| Powder 26A | 2.46 |
| Powder 26B | 1.08 |
| Powder 27A | 1.35 |
| Powder 27B | 0.89 |

It is understood from Table 10 that the elution amount is decreased by the insolubilizing treatment even in the case where an inorganic oxide, such as silica and alumina, is treated with $C_{60}$.

(Example 29)

(1) Fullerene Compound Supporting Step (Surface Treatment with Fullerene Compound)

5 g of silica (BET surface area: 4 m$^2$/g, average particle diameter: 1 μm) as a substrate was weighed in a 100 cc-beaker, to which 2.5 mL of an NMP solution of $C_{60}$ hydroxide (concentration: 10 mg/mL) was added, and 1 mL of NMP) was added, followed by well stirring, to obtain a paste mixture. The mixture was dried in an oven at 150°C under a nitrogen stream for 5 hours to remove the solvent, and thus powder 28A was obtained.

(2) Crosslinking Step or Chemically Bonding Step

(Insolubilizing Treatment)

3 g of the powder 28A was weighed in a 100 cc-beaker and heated at 400°C under a nitrogen stream for 3.5 hours to attain crosslinking and/or bonding to the surface of the substrate, and thus powder 28B was obtained.

(3) Evaluation of Insolubilization

0.1 g of each of the powder 28A and the powder 28B were weighed in 5 cc-sample tubes, respectively, to which 3 mL of NMP was added, followed by well stirring. After leaving at rest for 24 hours, the supernatant liquid was collected and measured for an ultraviolet absorption spectrum, and the concentration of $C_{60}$ hydroxide was quantitatively determined by comparing the calibration line in an NMP solution. The measurement of an ultraviolet absorption spectrum was carried out by using an ultraviolet-visible absorption analyzer (Ultraviolet-visible Spectrometer UV-1650-PC, produced by Shimadzu Corp.).
The quantitative determination results of the elution amounts are shown in Table 11.

(Example 30)

(1) Fullerene Compound Supporting Step (Surface Treatment with Fullerene Compound)

5 g of alumina (BET surface area: 2.2 $m^2$/g, average particle diameter: 1 µm) as a substrate was weighed in a 100 cc-beaker, to which 2.5 mL of an NMP solution of $C_{60}$ hydroxide (concentration: 10mg/mL) was added, followedbywell stirring, to obtain a paste mixture. The mixture was dried in an oven at 150°C under a nitrogen stream for 5 hours to remove the solvent, and thus powder 29A was obtained.

(2) Crosslinking Step or Chemically Bonding Step

(Insolubilizing Treatment)

3 g of the powder 29A was weighed in a 100 cc-beaker and heated at 350°C under a nitrogen stream for 3 hours to attain crosslinking and/or bonding to the surface of the substrate, and thus powder 29B was obtained.

(3) Evaluation of Insolubilization

0.1 g of each of the powder 29A and the powder 29B were weighed in 5 cc-sample tubes, respectively, to which 3 mL of NMP was added, followed by well stirring. After leaving at rest for 24 hours, the supernatant liquid was collected and measured for an ultraviolet absorption spectrum, and the concentration of $C_{60}$ hydroxide was quantitatively determined by comparing the calibration line in an NMP solution. The quantitative determination results of the elution amounts are shown in Table 11.

Table 11

| Sample | Elution amount after 24 hours (mg/g) |
|---|---|
| Powder 28A | 2.37 |
| Powder 28B | 1.17 |
| Powder 29A | 2.43 |
| Powder 29B | 1.46 |

It is understood from Table 11 that the elution amount is decreased by the insolubilizing treatment even in the case where an inorganic oxide, such as silica and alumina, is treated with $C_{60}$ hydroxide.

(Reference Example)

In order to investigate as to whether or not the fullerene compound was crosslinked or bonded to the substrate in the crosslinking step or the chemically bonding step (insolubilizing treatment) in the aforementioned examples, the following experiment was carried out by using $C_{60}$ hydroxide as the fullerene compound.

(1) Dehydration by Heating

Powder of $C_{60}$ hydroxide was dried at 120°C for 3 hours by using a vacuum drier for removing water adsorbed on the surface, and then 5 mg of thereof was fractionated and measured for water content released upon heating to prescribed temperatures with a Karl Fischer water content meter of a heating and released water detecting type. As the heating and released water detecting type Karl Fischer water content meter, VA-06, produced by Mitsubishi Chemical Corp., was used.
The water contents thus measured are shown in Table 12.

(2) Confirmation of Solubility of Heated $C_{60}$ Hydroxide

1 mg of $C_{60}$ hydroxide thus heated and dehydrated at the temperatures was weighed in 20 cc-sample tubes, respectively, to which 10 mL of propylene carbonate was added, followed by well stirring. After leaving at rest for 24 hours, the concentration of the supernatant liquid was quantitatively determined with an ultraviolet-visible absorption spectrometer. The concentration of the solution upon being completely dissolved became 0.1 mg/mL. The saturated solubility of $C_{60}$ hydroxide in propylene carbonate was 0.48 mg/mL, and thus the charged conditions thus employed was a sufficientcomposition for completely dissolving $C_{60}$ hydroxide thus put in. The measurement of an ultraviolet absorption spectrum was carried out by using an ultraviolet-visible absorption analyzer (Ultraviolet-visible Spectrometer UV-1650-PC, produced by Shimadzu Corp.).

The concentrations of the solutions thus measured are shown in Table 12.

Table 12

| Heated temperature | Released water content | Concentration of solution |
|---|---|---|
| 120°C | 0.14% by weight | 0.029 mg/mL |
| 200°C | 0.16% by weight | 0.010 mg/mL |
| 300°C | 2.4% by weight | 0.001 mg/mL |

The proportion of hydroxyl groups occupied in $C_{60}$ hydroxide having about 10 hydroxyl groups added thereto used in the experiment is about 19% by weight. It is assumed in the case of dehydration condensation that one water molecule is released from two hydroxyl groups to form an ether bond, and the water thus released is about 10% by weight. The water contents thus detected are lower than that value, and the following three points can be considered as the reason thereof. Firstly, not all the hydroxyl groups contribute to the formation of crosslinking, secondly, there is such a possibility that a part of the hydroxyl groups are already reacted upon vacuum drying at 120°C for 3 hours for removing water adsorbed on the surface, and thirdly, there is such a possibility that unreacted hydroxyl groups are reacted at a higher temperature.

On the other hand, the concentration of the solution becomes 0.1 mg/mL when $C_{60}$ hydroxide is completely dissolved in propylene carbonate, and it is understood from the aforementioned measurement that the dissolved amount is decreased when the temperature is increased.

It is understood that, upon heating, $C_{60}$ hydroxide is dehydrated, and $C_{60}$ hydroxide is condensed to each other to form crosslinking, from the fact that the water content released is increasedupon increasing the heating temperature, and the dissolution concentration of $C_{60}$ hydroxide in propylene carbonate is decreased upon increasing the heating temperature.

(Example 31)

(1) Fullerene Compound Supporting Step (Surface Treatment with Fullerene Compound)

30 g of lithium nickelate ($Li_{\alpha}Ni_{X}Co_{Y}Al_{Z}O_{2}$ ($\alpha$ = 1.05, X = 0. 82, Y = 0.15, Z = 0.03), specific surface area: 0.5 $m^2$/g, average secondary particle diameter: 7 µm) as a substrate was weighed in a 300 cc-beaker, to which 1.5 mL of a TMB solution of fullerene $C_{60}$ (concentration: 10 mg/mL) was added, and 9.5 mL of a TMB solvent was added, followed by well stirring, to obtain a paste mixture. The mixture was dried under compressed air blow at 90°C for 30 minutes under stirring to obtain powder. The solvent was further removed by drying in an oven at 120°C under a nitrogen stream for 3 hours to obtain surface-treated powder.

(2) Crosslinking Step or Chemically Bonding Step

(Insolubilizing Treatment)

25 g of the surface-treated powder was weighed in a 300 cc-beaker and heated at 350°C under an air stream for 3 hours to attain an insolubilizing treatment to obtain insolubilized powder.

(3) Production of Positive Electrode

90 parts by weight of the insolubilized powder as a positive electrode active substance, 5 parts by weight of polyvinylidene fluoride, 5 parts by weight of acetylene black and 80 parts by weight of N-methyl-2-pyrrolidone (produced by Mitsubishi Chemical Corp.) were mixed to obtain a positive electrode coating composition.

The coating composition was coated, within 3 hours from the production, on an aluminum foil (thickness: 20 µm) with a doctor blade (blade coater) and dried, followed by subjecting to a roll press treatment at a linear pressure of 100 kN/m, to obtain a positive electrode. The positive electrode was then cut into the prescribed size to obtain a positive electrode 2 in a flat plate form.

(4) Production of Negative Electrode

90 parts by weight of graphite as a negative electrode material, 10 parts by weight of polyvinylidene fluoride and 150 parts by weight of N-methyl-2-pyrrolidone were kneaded to obtain a negative electrode coating composition.

The coating composition was coated on a copper foil (thickness: 10 μm) with a doctor blade (blade coater) and dried, followed by subjecting to a roll press treatment at a linear pressure of 100 kN/m, to obtain a negative electrode. The negative electrode was then cut into the prescribed size to obtain a negative electrode.

(5) Production of Battery

After attaching terminals for taking out electric current to the positive electrode and the negative electrode, they were laminated through a separator having a thickness of 16 μm produced with polyethylene and housed in a housing formed of a laminated film. Before sealing the housing, a solution obtained by adding 5 parts of phenyl ether to 100 parts of a 1 mole/L solution of $LiPF_6$ with a mixed solvent of ethylene carbonate and dimethyl carbonate in a ratio of 1/1 (volume %) as a nonaqueous solvent was charged.

(Example 32)

A battery was produced in the same manner as in Example 31 except that in the surface treatment with the fullerene compound, the amount of the TMB solution of $C_{60}$ (concentration: 10 mg/mL) was changed to 3.0 mL, and the amount of TMB added was changed to 8.0 mL.

(Example 33)

A battery was produced in the same manner as in Example 31 except that in the surface treatment with the fullerene compound, the amount of the TMB solution of $C_{60}$ (concentration: 10 mg/mL) was changed to 6.0 mL, and the amount of TMB added was changed to 5.0 mL.

(Comparative Example 28)

A battery was produced in the same manner as in Example 31 except that the surface treatment with the fullerene compound ((1) Fullerene Compound Supporting Step) and the insolubilizing treatment((2)Crosslinking Step or Chemically Bonding Step) were omitted, and a lithium nickelate having not been treated was used as it is as the positive electrode active substance, in Example 31.

[Test Example]

The batteries obtained in Examples 31 to 33 and Comparative Example 28 were evaluated for battery characteristics.

The charging conditions were constant current charging with a current value of 0.5 C until 4.2 V, and then constant voltage charging until the current value was lowered to 0.1 C. The discharge conditions were constant current discharging at 0.2 C until 3.0 V.

The self-discharge test was carried out in such a manner that the battery having been charged under the aforementioned conditions was allowed to stand at 25°C for 120 hours, and then discharged with constant current at 0.2 C until 3.0 V.

The impedance values before and after the self-discharge test were obtained by measuring with an impedance analyzer through a potentiostat in a state where the battery was charged to a battery voltage of 3.8 V.

The cycle characteristics was evaluated in such a manner that such a cycle was repeated in 400 times that after the battery was charged with constant current at a current value of 0.6 C until 4.2 V, constant voltage charging was carried out until the current value was lowered to 0.1 C, and then constant current discharging at a current value of 0.2 C until 3.0 V, and thereafter, the maintenance ratio of the discharge capacities of the second cycle and the 400th cycle was evaluated.

The self-discharge characteristics thus measured are shown as an increasing rate of the impedance values before and after the self-discharge test, and the cycle characteristics are shown as a maintenance ratio of capacity, in Table 13.

Table 13

| | Surface treatment | | Insolubilizing treatment | | Formation of electrode | Self-discharge | Cycle |
|---|---|---|---|---|---|---|---|
| | Species of treatment | Treated amount (% by weight) | Atmosphere | Temperature | Time of coating after production of coating composition | Resistance increasing rate | Capacity maintenance ratio |
| Example 31 | $C_{60}$ | 0.05 | air | 350°C | within 3 hours | 1.08 | 93.3 |
| Example 32 | $C_{60}$ | 0.1 | air | 350°C | within 3 hours | 1.13 | 92.2 |
| Example 33 | $C_{60}$ | 0.2 | air | 350°C | within 3 hours | 1.16 | - |
| Comparative Example 28 | none | 0 | - | | within 3 hours | 1.17 | 90.7 |

EP 1 560 282 A1

It is understood from Table 13 that increase of the resistance upon storing in a full charged state is suppressed by effecting the surface treatment and the insolubilizing treatment with the fullerene compound ($C_{60}$). It is estimated that this is because the surface of the positive electrode active substance is covered with the fullerene compound to suppress the decomposition reaction of the electrolyte solution on the surface of the instable lithium nickelate in the charged (oxide) state. And it is understood that the cycle characteristic is also improved. The battery repeatedly suffers the charged state by the large number of cycles, but it is considered that the characteristics are improved owing to the same reasons as the improvement in self-discharge characteristics by effecting the surface treatment and the insolubilizing treatment with the fullerene compound ($C_{60}$).

(Example 34)

(1) Fullerene Compound Supporting Step (Surface Treatment with Fullerene Compound)

30 g of lithium nickelate ($Li_\alpha Ni_X Co_Y Al_Z O_2$ ($\alpha$ = 1.05, X = 0. 82, Y=0.15, Z=0.03), specific surface area: $0.5 m^2/g$, average secondary particle diameter: 7 μm) as a substrate was weighed in a 300 cc-beaker, to which 0.75 mL of an NMP solution of $C_{60}$ hydroxide (concentration: 10 mg/mL) was added, and 9.25 mL of NMPwasadded, followedbywell stirring, toobtainapastemixture. The mixture was dried under compressed air blow at 90°C for 30 minutes under stirring to obtain powder. The solvent was further removed by drying in an oven at 120°C under a nitrogen stream for 3 hours to obtain surface-treated powder.

(2) Crosslinking Step or Chemically Bonding Step

(Insolubilizing Treatment)

25 g of the surface-treated powder was weighed in a 300 cc-beaker and heated at 400°C under an air stream for 4 hours to attain an insolubilizing treatment to obtain insolubilized powder.

(3) Production of Positive Electrode

90 parts by weight of the insolubilized powder as a positive electrode active substance, 5 parts by weight of polyvinylidene fluoride, 5 parts by weight of acetylene black and 80 parts by weight of N-methyl-2-pyrrolidone (produced by Mitsubishi Chemical Corp.) were mixed to obtain a positive electrode coating composition.
The coating composition was coated, within 3 hours from the production, on an aluminum foil (thickness: 20 μm) with a doctor blade (blade coater) and dried, followed by subjecting to a roll press treatment at a linear pressure of 100 kN/m, to obtain a positive electrode. The positive electrode was then cut into the prescribed size to obtain a positive electrode in a flat plate form.

(4) Production of Negative Electrode

90 parts by weight of graphite as a negative electrode material, 10 parts by weight of polyvinylidene fluoride and 150 parts by weight of N-methyl-2-pyrrolidone were kneaded to obtain a negative electrode coating composition.
The coating composition was coated on a copper foil (thickness: 10 μm) with a doctor blade (blade coater) and dried, followed by subjecting to a roll press treatment at a linear pressure of 100 kN/m, to obtain a negative electrode. The negative electrode was then cut into the prescribed size to obtain a negative electrode.

(5) Production of Battery

After attaching terminals for taking out electric current to the positive electrode and the negative electrode, they were laminated through a separator having a thickness of 16 μm produced with polyethylene and housed in a housing formed of a laminated film. Before sealing the housing, a 1 mole/L solution of $LiPF_6$ with a mixed solvent of ethylene carbonate and dimethyl carbonate in a ratio of 1/1 (volume %) as a nonaqueous solvent was charged.

(Example 35)

A battery was produced in the same manner as in Example 34 except that in the surface treatment with the fullerene compound, the amount of the NMP solution of $C_{60}$ hydroxide (concentration: 10 mg/mL) was changed to 1.5 mL, and the amount of NMP added was changed to 8.0 mL.

(Example 36)

A battery was produced in the same manner as in Example 34 except that in the surface treatment with the fullerene compound, the amount of the NMP solution of $C_{60}$ hydroxide (concentration: 10 mg/mL) was changed to 2.25 mL, and the amount of NMP added was changed to 7.25 mL.

(Comparative Example 29)

A battery was produced in the same manner as in Example 34 except that the surface treatment with the fullerene compound ((1) Fullerene Compound Supporting Step) and the insolubilizing treatment ((2) Crosslinking Step or Chemically Bonding Step) were omitted, and a lithium-cobalt complex oxide having not been treated was used as it is as the positive electrode active substance, in Example 34.

[Test Example]

The batteries obtained in Examples 34 to 36 and Comparative Example 29 were evaluated for battery characteristics.

The charging conditions were constant current charging with a current value of 0.5 C until 4.2 V, and then constant voltage charging until the current value was lowered to 0.1 C. The discharge conditions were constant current discharging at 0.2 C until 3.0 V.

The self-discharge test was carried out in the following manner. That is, the battery, which had been charged with constant current at a current value of 0.5 C until 4.2 V and then constant voltage until the current value was lowered to 0.1C, was allowed to stand at 25°C for 120 hours. Thereafter, the battery was discharged with constant current at 0.2 C until 3.0V. The impedance values before and after the self-discharge test were obtained by measuring with an impedance analyzer through a potentiostat in a state where the battery was charged to a battery voltage of 3.8 V.

The self-discharge characteristics thus measured are shown as an increasing rate of the impedance values before and after the self-discharge test in Table 14.

Table 14

| | Surface treatment | | Insolubilizing treatment | | Formation of electrode | Self-discharge |
| --- | --- | --- | --- | --- | --- | --- |
| | Species of treatment | Treated amount (% by weight) | Atmosphere | Temperature | Time of coating after production of coating composition | Resistance increasing rate |
| Example 34 | $C_{60}$ hydroxide | 0.025 | nitrogen | 400°C | within 3 hours | 1.12 |
| Example 35 | $C_{60}$ hydroxide | 0.050 | nitrogen | 400°C | within 3 hours | 1.13 |
| Example 36 | $C_{60}$ hydroxide | 0.075 | nitrogen | 400°C | within 3 hours | 1.12 |
| Comparative Example 29 | none | 0 | - | - | within 3 hours | 1.17 |

It is understood from Table 14 that increase of the resistance upon storing in a full charged state is suppressed by effecting the surface treatment and the insolubilizing treatment with the fullerene compound ($C_{60}$ hydroxide) having been crosslinked or bonded to the surface. It is estimated that this is because the surface of the positive electrode active substance is covered with the fullerene compound to suppress the decomposition reaction of the electrolyte solution on the surface of the instable lithium nickelate in the charged (oxide) state.

While the invention has been described in detail with reference to the specific embodiments, it is apparent to a skilled person in the art that various changes and modifications can be made in the invention without departing from the spirits and the scope of the invention.

The invention is based on the Japanese Patent Application filed on October 31, 2002 (Patent Application No. 2002-317855) and the Japanese Patent Application filed on May 5, 2003 (Patent ApplicationNo. 2003-130405), and the entire disclosures thereof are incorporated herein by reference.

INDUSTRIAL APPLICABILITY

According to the invention, a fullerene compound is present on a surface of a positive electrode active substance of a lithium secondary battery, whereby the lithium secondary battery can be improved in safety, and increase of the resistance in a full charged state can be suppressed.

Specifically, on a surface of a positive electrode active substance of a lithium secondary battery, a fullerene compound is present, spherical shell structures of a fullerene compound are crosslinked through at least one atom, or a spherical shell structure of a fullerene compound is chemically bonded to the positive electrode active substance through at least one atom, whereby the lithium secondary battery can be improved in safety, and increase of the resistance in a full charged state can be suppressed.

In particular, spherical shell structures of a fullerene compound are crosslinked through at least one atom, and/or a spherical shell structure of a fullerene compound is chemically bonded to the positive electrode active substance through at least one atom, whereby the fullerene compound can be suppressed frombeing eluted to an electrolyte solution or an organic solvent used upon producing the positive electrode, so as to provide high stability of the effect of the surface treatment with the fullerene compound. Furthermore, the effect of the surface treatment is not easily lost owing to the high adhesion strength between the fullerene layer and the positive electrode active substance, whereby a fullerene layer having high strength can be obtained.

According to the invention, moreover, such an advantage is also obtained that a positive electrode material for a lithium secondary battery that is easily produced industrially can be obtained.

According to the invention, such a layered structure can be obtained that exerts various functions of the fullerene compoundwhilemaintaining the characteristics of the substrate, not applied only to the positive electrode material for a lithium secondary battery. Furthermore, the fullerene compound can be suppressed from being eluted to an organic solvent, so as to provide high stability of the effect of the surface treatment with the fullerene compound. Moreover, such advantages are obtained that the effect of the surface treatment is not easily lost owing to the high adhesion strength between the fullerene layer and the positive electrode active substance, and it can be easily produced industrially.

**Claims**

1. An additive used in a positive electrode material for a lithium secondary battery having a positive electrode active substance, wherein the additive is a fullerene compound.

2. The additive used in a positive electrode material for a lithium secondary battery according to claim 1, wherein the additive is present on a surface of the positive electrode active substance.

3. The additive used in a positive electrode material for a lithium secondary battery according to claim 1 or 2, wherein the fullerene compound is at least one selected from the group consisting of $C_{60}$, $C_{70}$, fullerene hydride, fullerene oxide, fullerene hydroxide, fullerene halide, sulfonated fullerene and biphenylfullerene.

4. A positive electrode active substance for a lithium secondary battery, the positive electrode material comprising a positive electrode active substance and a fullerene compound, wherein the fullerene compound is present on a surface of the positive electrode active substance.

5. The positive electrode material for a lithium secondary battery according to claim 4, wherein the fullerene compound is at least one selected from the group consisting of $C_{60}$, $C_{70}$, fullerene hydride, fullerene oxide, fullerene hydroxide, fullerene halide, sulfonated fullerene and biphenylfullerene.

6. A positive electrode material for a lithium secondary battery, the positive electrode material comprising a positive electrode material and a fullerene compound, wherein the fullerene compound is present on a surface of the positive electrode active substance, and spherical shell structures of the fullerene compound are crosslinked through at least one atom.

7. A positive electrode material for a lithium secondary battery, the positive electrode material comprising a positive electrode material and a fullerene compound, wherein the fullerene compound is present on a surface of the positive electrode active substance, and spherical shell structure of the fullerene compound is chemically bonded to the positive electrode active substance through at least one atom.

8. The positive electrode material for a lithium secondary battery according to claim 6 or 7, wherein the at least one atom is an oxygen atom.

9. A positive electrode material for a lithium secondary battery, the positive electrode material comprising a positive electrode material and a fullerene compound, wherein the fullerene compound is present on a surface of the positive electrode active substance, and an elution amount of the fullerene compound per unit weight of the positive electrode material for a lithium secondary battery determined by the following test method is 2 mg/g or less:
[test method]

   (1) 0.1 g of the positive electrode material for a lithium secondary battery is dissolved in a trimethylbenzene solvent or an N-methylpyrrolidone solvent to prepare a sample fluid;
   (2) the sample fluid is allowed to stand at an ordinary temperature ($25 \pm 5°C$) and an ordinary humidity ($50 \pm 15\%RH$) for 24 hours;
   (3) a supernatant fluid of the sample fluid thus allowed to stand is recovered, and a content of the fullerene compound contained in the supernatant fluid is measured; and
   (4) the measured value is converted to a total elution amount of the sample fluid, and the converted value is divided by 0.1 g.

10. The positive electrode material for a lithium secondary battery according to any one of claims 4 to 9, wherein the positive electrode active substance is at least one lithium-transition metal complex oxide selected from the group consisting of a lithium-cobalt complex oxide, a lithium-nickel complex oxide and a lithium-manganese complex oxide.

11. The positive electrode material for a lithium secondary battery according to claim 10, wherein
   upon measuring the positive electrode material for a lithium secondary battery containing the lithium-transition metal complex oxide by the X-ray photoelectron spectroscopy,
   the ratio of A2p and A3p is expressed by the following equation (d):

$$1.01 \leq A3p/A2p \leq 1.6 \qquad (d)$$

   wherein A2p represents a compensated peak area obtained by compensating a peak area of a 2p orbital of a transition metal constituting the lithium-transition metal complex oxide with a relative sensitivity compensation coefficient, and
   A3p represents a compensated peak area obtained by compensating a peak area of a 3p orbital of a transition metal constituting the lithium-transition metal complex oxide with a relative sensitivity compensation coefficient.

12. A positive electrode for a lithium secondary battery, **characterized by** using the positive electrode material for a lithium secondary battery according to any one of claims 4 to 11.

13. A lithium secondary battery, **characterized by** using the positive electrode according to claim 12.

14. A process for producing a positive electrode material for a lithium secondary battery having a fullerene compound present on a surface of a positive electrode active substance, **characterized in that** the process comprises:

   a fullerene compound supporting step of making a fullerene compound present on a surface of a positive electrode active substance; and
   at least one of a crosslinking step of crosslinking spherical shell structures of the fullerene compound through at least one atom, and a chemically bonding step of chemically bonding a spherical shell structure of the fullerene compound to a the surface of the positive electrode active substance through at least one atom.

15. The process for producing a positive electrode material for a lithium secondary battery according to claim 14, wherein the crosslinking step or the chemically bonding step is carried out by a heat treatment at 100°C or more.

16. The process for producing a positive electrode material for a lithium secondary battery according to claim 14 or 15, **characterized in that** the at least one atom is an oxygen atom.

Fig. 1

Protective circuit or control circuit

| Electric power source | Backup electric power source (Lithium secondary battery) | Electric equipment main body (Personal computer main body) |

Fig. 2

(6-6) bond
(1.38 Å)

Fig.3

Fig.4

TPD-MS measurement of $C_{60}$-treated positive electrode powder

$CO_2 (M/Z=44)$

Atmospheric gas: He80ml/min
Temperature range: R·T~900°C (10°C/min)
Sample amount: c.a. 300 mg

——— Untreated lithium-cobalt complex oxide
·········· Powder 17B
– – – Powder 17BW
–·–·– Powder 17A
–··–··– Powder 17AW

Ion intensity

Temperature (℃)

Fig.5

EP 1 560 282 A1

## INTERNATIONAL SEARCH REPORT

| International application No. |
|---|
| PCT/JP03/13722 |

### A. CLASSIFICATION OF SUBJECT MATTER
Int.Cl⁷ H01M4/62, H01M4/02

According to International Patent Classification (IPC) or to both national classification and IPC

### B. FIELDS SEARCHED

Minimum documentation searched (classification system followed by classification symbols)
Int.Cl⁷ H01M4/62, H01M4/02

Documentation searched other than minimum documentation to the extent that such documents are included in the fields searched
| Jitsuyo Shinan Koho | 1926–1996 | Toroku Jitsuyo Shinan Koho | 1994–2003 |
|---|---|---|---|
| Kokai Jitsuyo Shinan Koho | 1971–2003 | Jitsuyo Shinan Toroku Koho | 1996–2003 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 5-325974 A (Sanyo Electric Co., Ltd.), 10 December, 1993 (10.12.93), Claim 1; Par. No. [0016]; examples (Family: none) | 1-3 |
| X | JP 5-275083 A (Mitsubishi Cable Industries, Ltd.), 22 October, 1993 (22.10.93), Claims 1 to 3; examples (Family: none) | 1-3 |
| X | JP 6-342655 A (Osaka Gas Co., Ltd.), 13 December, 1994 (13.12.94), Claims 1 to 4; examples (Family: none) | 1-3 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 21 January, 2004 (21.01.04) | 03 February, 2004 (03.02.04) |

| Name and mailing address of the ISA/ | Authorized officer |
|---|---|
| Japanese Patent Office | |
| Facsimile No. | Telephone No. |

Form PCT/ISA/210 (second sheet) (July 1998)

**EP 1 560 282 A1**

<table>
<tr><td colspan="2" align="center">**INTERNATIONAL SEARCH REPORT**</td><td>International application No.<br>PCT/JP03/13722</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| A | JP 5-290887 A  (Sanyo Electric Co., Ltd.),<br>05 November, 1993 (05.11.93),<br>Claim 1; Par. No. [0010]; examples<br>(Family: none) | 1-3 |
| P,A | US 2002/0182506 A1  (Dawson W. Cagle),<br>05 December, 2002 (05.12.02),<br>Claims 1 to 36; examples<br>(& JP 2003-36841 A      & GB 2376129 A) | 1-3 |
| A | JP 5-101850 A  (Kaneka Corp.),<br>23 April, 1993 (23.04.93),<br>Claims 1, 2; Par. Nos. [0009], [0010]<br>(Family: none) | 1-3 |
| A | JP 9-132695 A  (Director General, Agency of<br>Industrial Science and Technology),<br>20 May, 1997 (20.05.97),<br>Claim 1<br>(Family: none) | 1-3 |
| A | JP 9-45374 A  (Sanyo Electric Co., Ltd.),<br>14 February, 1997 (14.02.97),<br>Claims 1 to 3; examples<br>(Family: none) | 1-3 |
| P,A | JP 2003-86174 A  (Hosokawa Micron Corp.),<br>20 March, 2003 (20.03.03),<br>Claims 1, 2<br>(Family: none) | 1-3 |
| P,A | JP 2003-77476 A  (Matsushita Electric Industrial<br>Co., Ltd.),<br>14 March, 2003 (14.03.03),<br>Claims 1 to 8<br>(Family: none) | 1-3 |
| A | JP 11-283629 A  (Japan Storage Battery Co., Ltd.),<br>15 October, 1999 (15.10.99),<br>Claims 1, 2<br>(Family: none) | 1-3 |
| A | JP 7-14582 A  (NEC Corp.),<br>17 January, 1995 (17.01.95),<br>Claims 1 to 4<br>(Family: none) | 1-3 |
| A | JP 8-310805 A  (Sumitomo Electric Industries,<br>Ltd.),<br>26 November, 1996 (26.11.96),<br>Claims 1 to 14; Par. No. [0001]<br>(Family: none) | 1-3 |

Form PCT/ISA/210 (continuation of second sheet) (July 1998)

**EP 1 560 282 A1**

**INTERNATIONAL SEARCH REPORT**

International application No.

PCT/JP03/13722

C (Continuation).  DOCUMENTS CONSIDERED TO BE RELEVANT

| Category* | Citation of document, with indication, where appropriate, of the relevant passages | Relevant to claim No. |
|---|---|---|
| A | JP 6-183712 A  (Showa Denko Kabushiki Kaisha),<br>05 July, 1994 (05.07.94),<br>Claims 1 to 5; Par. No. [0001]<br>(Family: none) | 1-3 |
| A | JP 5-97417 A  (Idemitsu Kosan Co., Ltd.),<br>20 April, 1993 (20.04.93),<br>Claims 1, 2; Par. Nos. [0001], [0002]<br>(Family: none) | 1-3 |

Form PCT/ISA/210 (continuation of second sheet) (July 1998)

## INTERNATIONAL SEARCH REPORT

| International application No. |
| --- |
| PCT/JP03/13722 |

**Box I    Observations where certain claims were found unsearchable (Continuation of item 2 of first sheet)**

This international search report has not been established in respect of certain claims under Article 17(2)(a) for the following reasons:

1. ☐  Claims Nos.:

because they relate to subject matter not required to be searched by this Authority, namely:

2. ☐  Claims Nos.:

because they relate to parts of the international application that do not comply with the prescribed requirements to such an extent that no meaningful international search can be carried out, specifically:

3. ☐  Claims Nos.:

because they are dependent claims and are not drafted in accordance with the second and third sentences of Rule 6.4(a).

**Box II    Observations where unity of invention is lacking (Continuation of item 3 of first sheet)**

This International Searching Authority found multiple inventions in this international application, as follows:

See extra sheet.

1. ☐  As all required additional search fees were timely paid by the applicant, this international search report covers all searchable claims.

2. ☐  As all searchable claims could be searched without effort justifying an additional fee, this Authority did not invite payment of any additional fee.

3. ☐  As only some of the required additional search fees were timely paid by the applicant, this international search report covers only those claims for which fees were paid, specifically claims Nos.:

4. ☒  No required additional search fees were timely paid by the applicant. Consequently, this international search report is restricted to the invention first mentioned in the claims; it is covered by claims Nos.:  1-3.

**Remark on Protest**       ☐       The additional search fees were accompanied by the applicant's protest.

☐       No protest accompanied the payment of additional search fees.

Form PCT/ISA/210 (continuation of first sheet (1)) (July 1998)

**INTERNATIONAL SEARCH REPORT**

International application No.

PCT/JP03/13722

Continuation of Box No. II of continuation of first sheet(1)

In order for a group of inventions claimed in claims to satisfy the requirement of unity of invention, there must be "special technical features" for linking the group of inventions so as to form a single general inventive concept. In this connection, it appears that the inventions claimed in six independent claims, namely, claims 1, 4, 6, 7, 9 and 14 and claims dependent therefrom are linked with each other only in the matter relating to "a positive electrode for lithium secondary battery, comprising a positive electrode active substance and a fullerene".

However, this technical matter is described in the following references 1-3 and thus publicly known. As a result, the technical matter cannot be special technical features.

Consequently, there exist no special technical features for linking the group of inventions claimed in claims 1-16 so as to form a single general inventive concept. Therefore, it is apparent that the group of inventions claimed in claims 1-16 do not satisfy the requirement of unity of invention.

Now, the number of inventions, i.e., number of inventions linked with each other so as to form a single general inventive concept, claimed in the claims of this international application will be studied.

Although the claims of this application contain six independent claims, claim 14 thereamong is considered as collectively claiming a process for producing the "positive electrode" of claim 6 and a process for producing the "positive electrode" of claim 7 (that is, claim 14 considered as claiming two inventions).

Therefore, without the need to make precise study on other dependent claims, the inventions can be divided into the seven groups:
A: claim 1 and claim(s) dependent therefrom,
B: claim 4 and claim(s) dependent therefrom,
C: claim 6 and claim(s) dependent therefrom,
D: claim 7 and claim(s) dependent therefrom,
E: claim 9 and claim(s) dependent therefrom,
F: part of claim 14 directed to the invention of a process for producing the positive electrode material of claim 6 and claim(s) dependent therefrom, and
G: part of claim 14 directed to the invention of a process for producing the positive electrode material of claim 7 and claim(s) dependent therefrom.

With respect to these groups, it appears that group C and group F as well as group D and group G have common special technical features. Therefore, the inventions can be divided into at least five groups consisting of group A, group B, group C+F, group D+G and group E.

Furthermore, there exist no "special technical features" common to any two other than mentioned above or more among the groups A-G. Therefore, it appears that the claims 1-16 claim at least five inventions.

[List of references]
1. JP 5-325974 A, (Sanyo Electric Co., Ltd.), 10 December, 1993 (10.12.93)
2. JP 5-275083 A, (Mitsubishi Cable Industries, Ltd.), 22 October, 1993 (22.10.93)
3. JP 6-342655 A, (Osaka Gas Co., Ltd.), 13 December, 1994 (13.12.94)

Form PCT/ISA/210 (extra sheet) (July 1998)